# EUROPEAN PATENT SPECIFICATION

(11) **EP 2 517 116 B1**
(45) Date of publication and mention of the grant of the patent: **08.04.2020**
(21) Application number: 10840077.1
(22) Date of filing: 21.12.2010
(51) Int. Cl.: G06F 12/08, G06F 9/46, G06F 12/0895, G06F 12/0815

(54) **SYSTEMS AND METHODS FOR MANAGING LARGE CACHE SERVICES IN A MULTI-CORE SYSTEM**
SYSTEME UND VERFAHREN ZUR VERWALTUNG GROSSER CACHE-DIENSTE IN EINEM MULTIKERNSYSTEM
SYSTÈMES ET PROCÉDÉS POUR GÉRER DES SERVICES DE CACHE IMPORTANT DANS UN SYSTÈME MULTICOEUR

(30) Priority: 23.12.2009 US 645855
(43) Date of publication of application: 31.10.2012
(73) Proprietor: Citrix Systems Inc., Fort Lauderdale, FL 33309 (US)
(72) Inventor: KHEMANI, Prakash, Santa Clara, California 95054 (US); KUMAR, Anil, Santa Clara, California 95054 (US); CHAUHAN, Abhishek, Santa Clara, California 95054 (US); PRAVEEN, Rama, Santa Clara, California 95054 (US)
(74) Representative: Murgitroyd & Company
(86) International application number: PCT/US2010/061609
(87) International publication number: WO 2011/079135

(56) References cited:
- EP-A1- 1 980 947
- EP-A1- 1 980 947
- US-A1- 2005 044 319
- US-A1- 2005 044 319
- US-A1- 2005 125 614
- US-A1- 2005 125 614
- US-A1- 2005 193 165
- US-A1- 2009 259 813
- US-A1- 2009 259 813
- US-B1- 7 290 116

## Description

### Field of the Disclosure

The present application generally relates to storing data. In particular, the present application relates to systems and methods for storing data in 64-bit cache storage.

### Background of the Disclosure

Recently processors that execute based on 64-bit memory addresses or data are widely available in commercial computing architectures. These processors can access memory addresses and registers that are 64 bits wide. The increase in address and/or register size can lead to computing architectures that process commands at a faster speed than those computing architectures that are based on a 32-bit memory architecture. Additionally, 64-bit computing architectures can execute and service applications and services that are compatible with a 64-bit architecture. Some advantages to a 64-bit computing architecture is a faster processing time, an increased ability to execute multiple tasks and service multiple threads at one time, better data encryption and the ability to memory map.

Integrating a 64-bit computing architecture into an existing computing system can be difficult. In particular, there can be difficulties when existing software is not designed to fully embrace the functionalities available in a 64-bit architecture. In particular, systems that employ a 64-bit cache for storing cached objects, may encounter difficulty when merging the 64-bit cache with software based on a 32-bit computing architecture. Thus, there exists a need for systems and methods that interface existing software architecture with a 64-bit cache storage.

US2005/0193165 A1 discloses a storage system that carries out cache management in such a manner that the management region required for cache management does not increase, and neither does the performance decline. The system may combine use of both a hierarchical directory method and a hash directory method, in order to manage cache data. By combining use of both of these methods, it is possible to respond to cases where the storage capacity of the storage system has been increased, without having to raise the management region, and without causing a decline in performance.

US7290116 B1 doscloses an apparatus and method for mapping memory addresses to reduce or avoid conflicting memory accesses in memory systems such as cache memories, in connection with a multithreaded multiprocessor chip. A CMT processor reduces the probability of hot-spots in cache operations by hashing certain bits of a physical cache address to form a hashed cache address. By using exclusive OR functionality to hash the index bits, an efficient address transformation is achieved for indexing into an L2 cache memory.

The invention is set out in the appended independent claims . Advantageous embodiments are defined by the appended dependent claims. The embodiments or examples of the following description which are not covered by the appended claims are considered as not being part of the invention according to this description.

### Brief Summary of the Disclosure

In one aspect, described herein is a method for storing an object in a 64-bit cache storage corresponding to a 32-bit cache object directory, and retrieving the stored object from the 64-bit cache storage, as defined in claim 1 appended hereto.

In some embodiments, the request received by the second cache engine can be a request issued by a client communicating with the multi-core device.

In other embodiments, the cache directory object can be stored in the core's 32-bit cache object directory. The cache object directory can include a hash table.

Storing the cache directory object in the 32-bit cache object directory can, in some embodiments, further include storing metadata corresponding to the cache directory object.

In some embodiments, the object can be stored in a content group in the 64-bit cache storage.

In other embodiments, the second cache engine can fail to identify the cache directory object in the 32-bit cache object directory. Upon failing to identify the cache directory object, the second cache engine can acquire a miss lock on the cache directory object. In some embodiments, the second cache engine can store a miss lock in cache, where the miss lock corresponds to the cache directory object. In one embodiment, the second cache engine can insert a staging cell into the 32-bit cache object directory. The second cache engine, in some embodiments, can mark a second cache directory object in the 32-bit cache object directory for deletion. This second cache directory object can correspond to the requested object.

In one embodiment, the first cache engine can determine the 64-bit storage lacks available memory. The first cache engine can then identify an object in a least recently used list of the first core, and can mark the identified object for deletion.

In other embodiments, the first cache engine can update a buffer of the first core that corresponds to the requested object to indicate that the second cache engine is accessing the requested object. A third cache engine executing on a third core of the multi-core device can receive a request for the object stored in the 64-bit cache storage. The third cache engine can calculate a hash key and use the hash key to identify a cache directory object that corresponds to the object. The third cache engine can identify the cache directory object in the 32-bit cache object directory. The first cache engine can update a requested object buffer to indicate a third cache engine is accessing the requested object.

In other aspects, described herein is a system for storing an object in a 64-bit cache storage corresponding to a 32-bit cache object directory, and retrieving the stored object from the 64-bit cache storage, as defined in claim 9 appended hereto. The details of various embodiments of the methods and systems described herein are set forth in the accompanying drawings and the description below.

### Brief Description of the Figures

The foregoing and other objects, aspects, features, and advantages of the methods and systems described herein will become more apparent and better understood by referring to the following description taken in conjunction with the accompanying drawings, in which:
FIG. 1A is a block diagram of an example of a network environment for a client to access a server via an appliance;
FIG. 1B is a block diagram of an example of an environment for delivering a computing environment from a server to a client via an appliance;
FIG. 1C is a block diagram of another example of an environment for delivering a computing environment from a server to a client via an appliance;
FIG. 1D is a block diagram of another example of an environment for delivering a computing environment from a server to a client via an appliance;
FIGs. 1E - 1H are block diagrams of examples of a computing device;
FIG. 2A is a block diagram of an example of an appliance for processing communications between a client and a server;
FIG. 2B is a block diagram of another example of an appliance for optimizing, accelerating, load-balancing and routing communications between a client and a server;
FIG. 3 is a block diagram of an example of a client for communicating with a server via the appliance;
FIG. 4A is a block diagram of an example of a virtualization environment;
FIG. 4B is a block diagram of another example of a virtualization environment;
FIG. 4C is a block diagram of an example of a virtualized appliance;
FIG. 5A are block diagrams of examples of approaches to implementing parallelism in a multi-core system;
FIG. 5B is a block diagram of an example of a system utilizing a multi-core system;
FIG. 5C is a block diagram of another example of an aspect of a multi-core system;
FIGs. 6A-6B are block diagrams of examples of a multi-core system, FIG. 6B illustrating an embodiment of the invention;
FIG. 7 is a block diagram of a staging cell chain;
FIGs. 8A-8B are flow diagrams of examples of methods for searching or a cache directory object and creating a cache directory object;
FIG. 9 is a flow diagram of an example of a method for removing un-used objects from memory;
FIG. 10 is a flow diagram of an example of a method for deleting objects from memory; and
FIG. 11 is a flow diagram of an example of a method for downloading data.

The features and advantages of the methods and systems described herein will become more apparent from the detailed description set forth below when taken in conjunction with the drawings, in which like reference characters identify corresponding elements throughout. In the drawings, like reference numbers generally indicate identical, functionally similar, and/or structurally similar elements.

### Detailed Description of the Disclosure

For purposes of reading the description of the various examples and embodiments below, the following descriptions of the sections of the specification and their respective contents may be helpful:
- Section A describes a network environment and computing environment which may be useful for practicing examples and embodiments described herein;
- Section B describes examples of systems and methods for delivering a computing environment to a remote user;
- Section C describes examples of systems and methods for accelerating communications between a client and a server;
- Section D describes examples of systems and methods for virtualizing an application delivery controller;
- Section E describes examples of systems and methods for providing a multi-core architecture and environment; and
- Section F describes examples and embodiments of systems and methods for managing large cache services in a multi-core environment.

### A. Network and Computing Environment

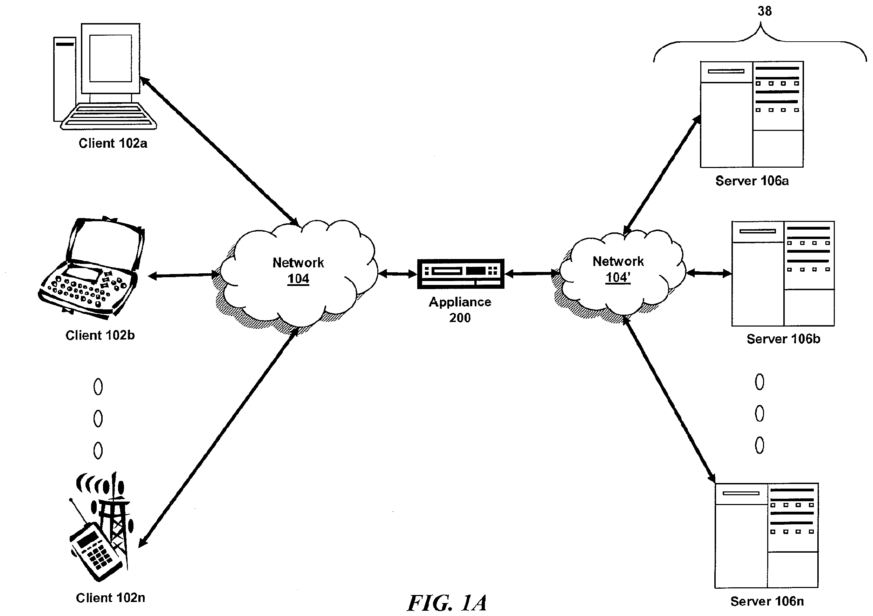

Prior to discussing the specifics of examples of the systems and methods of an appliance and/or client, it may be helpful to discuss the network and computing environments in which such examples may be deployed. Referring now to Figure 1A, an example of a network environment is depicted. In brief overview, the network environment comprises one or more clients 102a-102n (also generally referred to as local machine(s) 102, or client(s) 102) in communication with one or more servers 106a-106n (also generally referred to as server(s) 106, or remote machine(s) 106) via one or more networks 104, 104' (generally referred to as network 104). In some examples, a client 102 communicates with a server 106 via an appliance 200.

Although FIG. 1A shows a network 104 and a network 104' between the clients 102 and the servers 106, the clients 102 and the servers 106 may be on the same network 104. The networks 104 and 104' can be the same type of network or different types of networks. The network 104 and/or the network 104' can be a local-area network (LAN), such as a company Intranet, a metropolitan area network (MAN), or a wide area network (WAN), such as the Internet or the World Wide Web. In one example, network 104' may be a private network and network 104 may be a public network. In some examples, network 104 may be a private network and network 104' a public network. In another example, networks 104 and 104' may both be private networks. In some examples, clients 102 may be located at a branch office of a corporate enterprise communicating via a WAN connection over the network 104 to the servers 106 located at a corporate data center.

The network 104 and/or 104' be any type and/or form of network and may include any of the following: a point to point network, a broadcast network, a wide area network, a local area network, a telecommunications network, a data communication network, a computer network, an ATM (Asynchronous Transfer Mode) network, a SONET (Synchronous Optical Network) network, a SDH (Synchronous Digital Hierarchy) network, a wireless network and a wireline network. In some examples, the network 104 may comprise a wireless link, such as an infrared channel or satellite band. The topology of the network 104 and/or 104' may be a bus, star, or ring network topology. The network 104 and/or 104' and network topology may be of any such network or network topology as known to those ordinarily skilled in the art capable of supporting the operations described herein.

As shown in FIG. 1A, the appliance 200, which also may be referred to as an interface unit 200 or gateway 200, is shown between the networks 104 and 104'. In some examples, the appliance 200 may be located on network 104. For example, a branch office of a corporate enterprise may deploy an appliance 200 at the branch office. In other examples, the appliance 200 may be located on network 104'. For example, an appliance 200 may be located at a corporate data center. In yet another example, a plurality of appliances 200 may be deployed on network 104. In some examples, a plurality of appliances 200 may be deployed on network 104'. In one example, a first appliance 200 communicates with a second appliance 200'. In other examples, the appliance 200 could be a part of any client 102 or server 106 on the same or different network 104,104' as the client 102. One or more appliances 200 may be located at any point in the network or network communications path between a client 102 and a server 106.

In some examples, the appliance 200 comprises any of the network devices manufactured by Citrix Systems, Inc. of Ft. Lauderdale Florida, referred to as Citrix NetScaler devices. In other examples, the appliance 200 includes any of the product examples referred to as WebAccelerator and BigIP manufactured by F5 Networks, Inc. of Seattle, Washington. In another example, the appliance 205 includes any of the DX acceleration device platforms and/or the SSL VPN series of devices, such as SA 700, SA 2000, SA 4000, and SA 6000 devices manufactured by Juniper Networks, Inc. of Sunnyvale, California. In yet another example, the appliance 200 includes any application acceleration and/or security related appliances and/or software manufactured by Cisco Systems, Inc. of San Jose, California, such as the Cisco ACE Application Control Engine Module service software and network modules, and Cisco AVS Series Application Velocity System.

In one example, the system may include multiple, logically-grouped servers 106. In these examples, the logical group of servers may be referred to as a server farm 38. In some of these examples, the serves 106 may be geographically dispersed. In some cases, a farm 38 may be administered as a single entity. In other examples, the server farm 38 comprises a plurality of server farms 38. In one example, the server farm executes one or more applications on behalf of one or more clients 102.

The servers 106 within each farm 38 can be heterogeneous. One or more of the servers 106 can operate according to one type of operating system platform (e.g., WINDOWS NT, manufactured by Microsoft Corp. of Redmond, Washington), while one or more of the other servers 106 can operate on according to another type of operating system platform (e.g., Unix or Linux). The servers 106 of each farm 38 do not need to be physically proximate to another server 106 in the same farm 38. Thus, the group of servers 106 logically grouped as a farm 38 may be interconnected using a wide-area network (WAN) connection or medium-area network (MAN) connection. For example, a farm 38 may include servers 106 physically located in different continents or different regions of a continent, country, state, city, campus, or room. Data transmission speeds between servers 106 in the farm 38 can be increased if the servers 106 are connected using a local-area network (LAN) connection or some form of direct connection.

Servers 106 may be referred to as a file server, application server, web server, proxy server, or gateway server. In some examples, a server 106 may have the capacity to function as either an application server or as a master application server. In one example, a server 106 may include an Active Directory. The clients 102 may also be referred to as client nodes or endpoints. In some examples, a client 102 has the capacity to function as both a client node seeking access to applications on a server and as an application server providing access to hosted applications for other clients 102a-102n.

In some examples, a client 102 communicates with a server 106. In one example, the client 102 communicates directly with one of the servers 106 in a farm 38. In another example, the client 102 executes a program neighborhood application to communicate with a server 106 in a farm 38. In still another example, the server 106 provides the functionality of a master node. In some examples, the client 102 communicates with the server 106 in the farm 38 through a network 104. Over the network 104, the client 102 can, for example, request execution of various applications hosted by the servers 106a-106n in the farm 38 and receive output of the results of the application execution for display. In some examples, only the master node provides the functionality required to identify and provide address information associated with a server 106' hosting a requested application.

In one example, the server 106 provides functionality of a web server. In another example, the server 106a receives requests from the client 102, forwards the requests to a second server 106b and responds to the request by the client 102 with a response to the request from the server 106b. In still another example, the server 106 acquires an enumeration of applications available to the client 102 and address information associated with a server 106 hosting an application identified by the enumeration of applications. In yet another example, the server 106 presents the response to the request to the client 102 using a web interface. In one example, the client 102 communicates directly with the server 106 to access the identified application. In another example, the client 102 receives application output data, such as display data, generated by an execution of the identified application on the server 106.

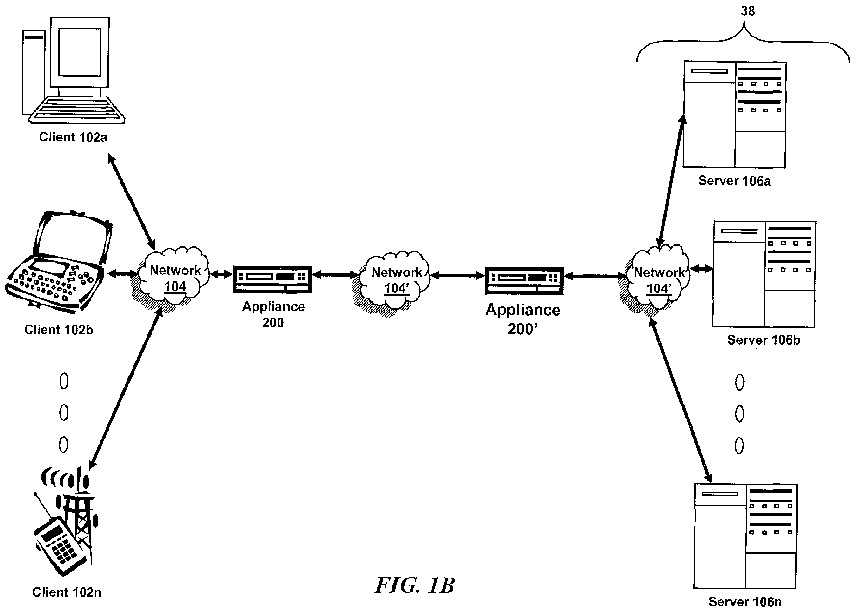

Referring now to FIG. 1B, an example of a network environment deploying multiple appliances 200 is depicted. A first appliance 200 may be deployed on a first network 104 and a second appliance 200' on a second network 104'. For example a corporate enterprise may deploy a first appliance 200 at a branch office and a second appliance 200' at a data center. In another example, the first appliance 200 and second appliance 200' are deployed on the same network 104 or network 104. For example, a first appliance 200 may be deployed for a first server farm 38, and a second appliance 200 may be deployed for a second server farm 38'. In another example, a first appliance 200 may be deployed at a first branch office while the second appliance 200' is deployed at a second branch office'. In some examples, the first appliance 200 and second appliance 200' work in cooperation or in conjunction with each other to accelerate network traffic or the delivery of application and data between a client and a server

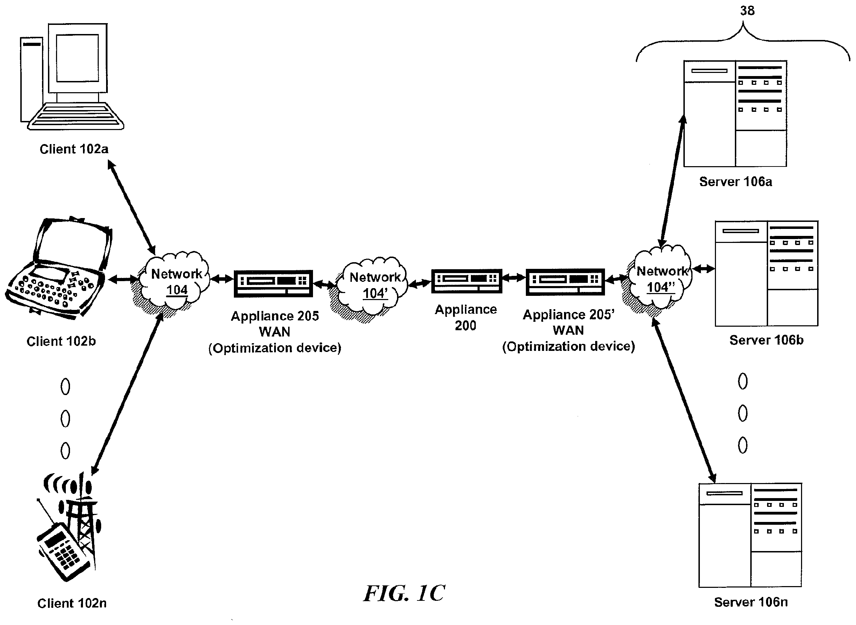

Referring now to FIG. 1C, another example of a network environment deploying the appliance 200 with one or more other types of appliances, such as between one or more WAN optimization appliance 205, 205'is depicted. For example a first WAN optimization appliance 205 is shown between networks 104 and 104' and s second WAN optimization appliance 205' may be deployed between the appliance 200 and one or more servers 106. By way of example, a corporate enterprise may deploy a first WAN optimization appliance 205 at a branch office and a second WAN optimization appliance 205' at a data center. In some examples, the appliance 205 may be located on network 104'. In other examples, the appliance 205' may be located on network 104. In some examples, the appliance 205' may be located on network 104' or network 104". In one example, the appliance 205 and 205' are on the same network. In another example, the appliance 205 and 205' are on different networks. In another example, a first WAN optimization appliance 205 may be deployed for a first server farm 38 and a second WAN optimization appliance 205' for a second server farm 38'

In one example, the appliance 205 is a device for accelerating, optimizing or otherwise improving the performance, operation, or quality of service of any type and form of network traffic, such as traffic to and/or from a WAN connection. In some examples, the appliance 205 is a performance enhancing proxy. In other examples, the appliance 205 is any type and form of WAN optimization or acceleration device, sometimes also referred to as a WAN optimization controller. In one example, the appliance 205 is any of the product examples referred to as WANScaler manufactured by Citrix Systems, Inc. of Ft. Lauderdale, Florida. In other examples, the appliance 205 includes any of the product examples referred to as BIG-IP link controller and WANjet manufactured by F5 Networks, Inc. of Seattle, Washington. In another example, the appliance 205 includes any of the WX and WXC WAN acceleration device platforms manufactured by Juniper Networks, Inc. of Sunnyvale, California. In some examples, the appliance 205 includes any of the steelhead line of WAN optimization appliances manufactured by Riverbed Technology of San Francisco, California. In other examples, the appliance 205 includes any of the WAN related devices manufactured by Expand Networks Inc. of Roseland, New Jersey. In one example, the appliance 205 includes any of the WAN related appliances manufactured by Packeteer Inc. of Cupertino, California, such as the PacketShaper, iShared, and SkyX product examples provided by Packeteer. In yet another example, the appliance 205 includes any WAN related appliances and/or software manufactured by Cisco Systems, Inc. of San Jose, California, such as the Cisco Wide Area Network Application Services software and network modules, and Wide Area Network engine appliances.

In one example, the appliance 205 provides application and data acceleration services for branch-office or remote offices. In one example, the appliance 205 includes optimization of Wide Area File Services (WAFS). In another example, the appliance 205 accelerates the delivery of files, such as via the Common Internet File System (CIFS) protocol. In other examples, the appliance 205 provides caching in memory and/or storage to accelerate delivery of applications and data. In one example, the appliance 205 provides compression of network traffic at any level of the network stack or at any protocol or network layer. In another example, the appliance 205 provides transport layer protocol optimizations, flow control, performance enhancements or modifications and/or management to accelerate delivery of applications and data over a WAN connection. For example, in one example, the appliance 205 provides Transport Control Protocol (TCP) optimizations. In other examples, the appliance 205 provides optimizations, flow control, performance enhancements or modifications and/or management for any session or application layer protocol.

In another example, the appliance 205 encoded any type and form of data or information into custom or standard TCP and/or IP header fields or option fields of network packet to announce presence, functionality or capability to another appliance 205'. In another example, an appliance 205' may communicate with another appliance 205' using data encoded in both TCP and/or IP header fields or options. For example, the appliance may use TCP option(s) or IP header fields or options to communicate one or more parameters to be used by the appliances 205, 205' in performing functionality, such as WAN acceleration, or for working in conjunction with each other.

In some examples, the appliance 200 preserves any of the information encoded in TCP and/or IP header and/or option fields communicated between appliances 205 and 205'. For example, the appliance 200 may terminate a transport layer connection traversing the appliance 200, such as a transport layer connection from between a client and a server traversing appliances 205 and 205'. In one example, the appliance 200 identifies and preserves any encoded information in a transport layer packet transmitted by a first appliance 205 via a first transport layer connection and communicates a transport layer packet with the encoded information to a second appliance 205' via a second transport layer connection.

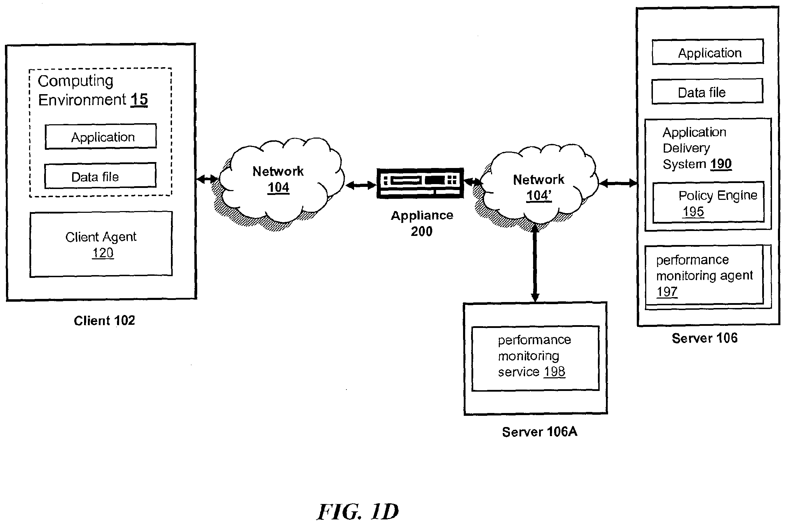

Referring now to FIG. 1D, a network environment for delivering and/or operating a computing environment on a client 102 is depicted. In some examples, a server 106 includes an application delivery system 190 for delivering a computing environment or an application and/or data file to one or more clients 102. In brief overview, a client 10 is in communication with a server 106 via network 104, 104' and appliance 200. For example, the client 102 may reside in a remote office of a company, e.g., a branch office, and the server 106 may reside at a corporate data center. The client 102 comprises a client agent 120, and a computing environment 15. The computing environment 15 may execute or operate an application that accesses, processes or uses a data file. The computing environment 15, application and/or data file may be delivered via the appliance 200 and/or the server 106.

In some examples, the appliance 200 accelerates delivery of a computing environment 15, or any portion thereof, to a client 102. In one example, the appliance 200 accelerates the delivery of the computing environment 15 by the application delivery system 190. For example, the examples described herein may be used to accelerate delivery of a streaming application and data file processable by the application from a central corporate data center to a remote user location, such as a branch office of the company. In another example, the appliance 200 accelerates transport layer traffic between a client 102 and a server 106. The appliance 200 may provide acceleration techniques for accelerating any transport layer payload from a server 106 to a client 102, such as: 1) transport layer connection pooling, 2) transport layer connection multiplexing, 3) transport control protocol buffering, 4) compression and 5) caching. In some examples, the appliance 200 provides load balancing of servers 106 in responding to requests from clients 102. In other examples, the appliance 200 acts as a proxy or access server to provide access to the one or more servers 106. In another example, the appliance 200 provides a secure virtual private network connection from a first network 104 of the client 102 to the second network 104' of the server 106, such as an SSL VPN connection. It yet other examples, the appliance 200 provides application firewall security, control and management of the connection and communications between a client 102 and a server 106.

In some examples, the application delivery management system 190 provides application delivery techniques to deliver a computing environment to a desktop of a user, remote or otherwise, based on a plurality of execution methods and based on any authentication and authorization policies applied via a policy engine 195. With these techniques, a remote user may obtain a computing environment and access to server stored applications and data files from any network connected device 100. In one example, the application delivery system 190 may reside or execute on a server 106. In another example, the application delivery system 190 may reside or execute on a plurality of servers 106a-106n. In some examples, the application delivery system 190 may execute in a server farm 38. In one example, the server 106 executing the application delivery system 190 may also store or provide the application and data file. In another example, a first set of one or more servers 106 may execute the application delivery system 190, and a different server 106n may store or provide the application and data file. In some examples, each of the application delivery system 190, the application, and data file may reside or be located on different servers. In yet another example, any portion of the application delivery system 190 may reside, execute or be stored on or distributed to the appliance 200, or a plurality of appliances.

The client 102 may include a computing environment 15 for executing an application that uses or processes a data file. The client 102 via networks 104, 104' and appliance 200 may request an application and data file from the server 106. In one example, the appliance 200 may forward a request from the client 102 to the server 106. For example, the client 102 may not have the application and data file stored or accessible locally. In response to the request, the application delivery system 190 and/or server 106 may deliver the application and data file to the client 102. For example, in one example, the server 106 may transmit the application as an application stream to operate in computing environment 15 on client 102.

In some examples, the application delivery system 190 comprises any portion of the Citrix Access Suite™ by Citrix Systems, Inc., such as the MetaFrame or Citrix Presentation Server™ and/or any of the Microsoft® Windows Terminal Services manufactured by the Microsoft Corporation. In one example, the application delivery system 190 may deliver one or more applications to clients 102 or users via a remote-display protocol or otherwise via remote-based or server-based computing. In another example, the application delivery system 190 may deliver one or more applications to clients or users via steaming of the application.

In one example, the application delivery system 190 includes a policy engine 195 for controlling and managing the access to, selection of application execution methods and the delivery of applications. In some examples, the policy engine 195 determines the one or more applications a user or client 102 may access. In another example, the policy engine 195 determines how the application should be delivered to the user or client 102, e.g., the method of execution. In some examples, the application delivery system 190 provides a plurality of delivery techniques from which to select a method of application execution, such as a server-based computing, streaming or delivering the application locally to the client 120 for local execution.

In one example, a client 102 requests execution of an application program and the application delivery system 190 comprising a server 106 selects a method of executing the application program. In some examples, the server 106 receives credentials from the client 102. In another example, the server 106 receives a request for an enumeration of available applications from the client 102. In one example, in response to the request or receipt of credentials, the application delivery system 190 enumerates a plurality of application programs available to the client 102. The application delivery system 190 receives a request to execute an enumerated application. The application delivery system 190 selects one of a predetermined number of methods for executing the enumerated application, for example, responsive to a policy of a policy engine. The application delivery system 190 may select a method of execution of the application enabling the client 102 to receive application-output data generated by execution of the application program on a server 106. The application delivery system 190 may select a method of execution of the application enabling the local machine 10 to execute the application program locally after retrieving a plurality of application files comprising the application. In yet another example, the application delivery system 190 may select a method of execution of the application to stream the application via the network 104 to the client 102.

A client 102 may execute, operate or otherwise provide an application, which can be any type and/or form of software, program, or executable instructions such as any type and/or form of web browser, web-based client, client-server application, a thin-client computing client, an ActiveX control, or a Java applet, or any other type and/or form of executable instructions capable of executing on client 102. In some examples, the application may be a server-based or a remote-based application executed on behalf of the client 102 on a server 106. In one example the server 106 may display output to the client 102 using any thin-client or remote-display protocol, such as the Independent Computing Architecture (ICA) protocol manufactured by Citrix Systems, Inc. of Ft. Lauderdale, Florida or the Remote Desktop Protocol (RDP) manufactured by the Microsoft Corporation of Redmond, Washington. The application can use any type of protocol and it can be, for example, an HTTP client, an FTP client, an Oscar client, or a Telnet client. In other examples, the application comprises any type of software related to VoIP communications, such as a soft IP telephone. In further examples, the application comprises any application related to real-time data communications, such as applications for streaming video and/or audio.

In some examples, the server 106 or a server farm 38 may be running one or more applications, such as an application providing a thin-client computing or remote display presentation application. In one example, the server 106 or server farm 38 executes as an application, any portion of the Citrix Access Suite™ by Citrix Systems, Inc., such as the MetaFrame or Citrix Presentation Server™, and/or any of the Microsoft® Windows Terminal Services manufactured by the Microsoft Corporation. In one example, the application is an ICA client, developed by Citrix Systems, Inc. of Fort Lauderdale, Florida. In other examples, the application includes a Remote Desktop (RDP) client, developed by Microsoft Corporation of Redmond, Washington. Also, the server 106 may run an application, which for example, may be an application server providing email services such as Microsoft Exchange manufactured by the Microsoft Corporation of Redmond, Washington, a web or Internet server, or a desktop sharing server, or a collaboration server. In some examples, any of the applications may comprise any type of hosted service or products, such as GoToMeeting™ provided by Citrix Online Division, Inc. of Santa Barbara, California, WebEx™ provided by WebEx, Inc. of Santa Clara, California, or Microsoft Office Live Meeting provided by Microsoft Corporation of Redmond, Washington.

Still referring to FIG. 1D, an example of the network environment may include a monitoring server 106A. The monitoring server 106A may include any type and form performance monitoring service 198. The performance monitoring service 198 may include monitoring, measurement and/or management software and/or hardware, including data collection, aggregation, analysis, management and reporting. In one example, the performance monitoring service 198 includes one or more monitoring agents 197. The monitoring agent 197 includes any software, hardware or combination thereof for performing monitoring, measurement and data collection activities on a device, such as a client 102, server 106 or an appliance 200, 205. In some examples, the monitoring agent 197 includes any type and form of script, such as Visual Basic script, or Javascript. In one example, the monitoring agent 197 executes transparently to any application and/or user of the device. In some examples, the monitoring agent 197 is installed and operated unobtrusively to the application or client. In yet another example, the monitoring agent 197 is installed and operated without any instrumentation for the application or device.

In some examples, the monitoring agent 197 monitors, measures and collects data on a predetermined frequency. In other examples, the monitoring agent 197 monitors, measures and collects data based upon detection of any type and form of event. For example, the monitoring agent 197 may collect data upon detection of a request for a web page or receipt of an HTTP response. In another example, the monitoring agent 197 may collect data upon detection of any user input events, such as a mouse click. The monitoring agent 197 may report or provide any monitored, measured or collected data to the monitoring service 198. In one example, the monitoring agent 197 transmits information to the monitoring service 198 according to a schedule or a predetermined frequency. In another example, the monitoring agent 197 transmits information to the monitoring service 198 upon detection of an event.

In some examples, the monitoring service 198 and/or monitoring agent 197 performs monitoring and performance measurement of any network resource or network infrastructure element, such as a client, server, server farm, appliance 200, appliance 205, or network connection. In one example, the monitoring service 198 and/or monitoring agent 197 performs monitoring and performance measurement of any transport layer connection, such as a TCP or UDP connection. In another example, the monitoring service 198 and/or monitoring agent 197 monitors and measures network latency. In yet one example, the monitoring service 198 and/or monitoring agent 197 monitors and measures bandwidth utilization.

In other examples, the monitoring service 198 and/or monitoring agent 197 monitors and measures end-user response times. In some examples, the monitoring service 198 performs monitoring and performance measurement of an application. In another example, the monitoring service 198 and/or monitoring agent 197 performs monitoring and performance measurement of any session or connection to the application. In one example, the monitoring service 198 and/or monitoring agent 197 monitors and measures performance of a browser. In another example, the monitoring service 198 and/or monitoring agent 197 monitors and measures performance of HTTP based transactions. In some examples, the monitoring service 198 and/or monitoring agent 197 monitors and measures performance of a Voice over IP (VoIP) application or session. In other examples, the monitoring service 198 and/or monitoring agent 197 monitors and measures performance of a remote display protocol application, such as an ICA client or RDP client. In yet another example, the monitoring service 198 and/or monitoring agent 197 monitors and measures performance of any type and form of streaming media. In still a further example, the monitoring service 198 and/or monitoring agent 197 monitors and measures performance of a hosted application or a Software-As-A-Service (SaaS) delivery model.

In some examples, the monitoring service 198 and/or monitoring agent 197 performs monitoring and performance measurement of one or more transactions, requests or responses related to application. In other examples, the monitoring service 198 and/or monitoring agent 197 monitors and measures any portion of an application layer stack, such as any .NET or J2EE calls. In one example, the monitoring service 198 and/or monitoring agent 197 monitors and measures database or SQL transactions. In yet another example, the monitoring service 198 and/or monitoring agent 197 monitors and measures any method, function or application programming interface (API) call.

In one example, the monitoring service 198 and/or monitoring agent 197 performs monitoring and performance measurement of a delivery of application and/or data from a server to a client via one or more appliances, such as appliance 200 and/or appliance 205. In some examples, the monitoring service 198 and/or monitoring agent 197 monitors and measures performance of delivery of a virtualized application. In other examples, the monitoring service 198 and/or monitoring agent 197 monitors and measures performance of delivery of a streaming application. In another example, the monitoring service 198 and/or monitoring agent 197 monitors and measures performance of delivery of a desktop application to a client and/or the execution of the desktop application on the client. In another example, the monitoring service 198 and/or monitoring agent 197 monitors and measures performance of a client/server application.

In one example, the monitoring service 198 and/or monitoring agent 197 is designed and constructed to provide application performance management for the application delivery system 190. For example, the monitoring service 198 and/or monitoring agent 197 may monitor, measure and manage the performance of the delivery of applications via the Citrix Presentation Server. In this example, the monitoring service 198 and/or monitoring agent 197 monitors individual ICA sessions. The monitoring service 198 and/or monitoring agent 197 may measure the total and per session system resource usage, as well as application and networking performance. The monitoring service 198 and/or monitoring agent 197 may identify the active servers for a given user and/or user session. In some examples, the monitoring service 198 and/or monitoring agent 197 monitors back-end connections between the application delivery system 190 and an application and/or database server. The monitoring service 198 and/or monitoring agent 197 may measure network latency, delay and volume per user-session or ICA session.

In some examples, the monitoring service 198 and/or monitoring agent 197 measures and monitors memory usage for the application delivery system 190, such as total memory usage, per user session and/or per process. In other examples, the monitoring service 198 and/or monitoring agent 197 measures and monitors CPU usage the application delivery system 190, such as total CPU usage, per user session and/or per process. In another examples, the monitoring service 198 and/or monitoring agent 197 measures and monitors the time required to log-in to an application, a server, or the application delivery system, such as Citrix Presentation Server. In one example, the monitoring service 198 and/or monitoring agent 197 measures and monitors the duration a user is logged into an application, a server, or the application delivery system 190. In some examples, the monitoring service 198 and/or monitoring agent 197 measures and monitors active and inactive session counts for an application, server or application delivery system session. In yet another example, the monitoring service 198 and/or monitoring agent 197 measures and monitors user session latency.

In yet further examples, the monitoring service 198 and/or monitoring agent 197 measures and monitors measures and monitors any type and form of server metrics. In one example, the monitoring service 198 and/or monitoring agent 197 measures and monitors metrics related to system memory, CPU usage, and disk storage. In another example, the monitoring service 198 and/or monitoring agent 197 measures and monitors metrics related to page faults, such as page faults per second. In other examples, the monitoring service 198 and/or monitoring agent 197 measures and monitors round-trip time metrics. In yet another example, the monitoring service 198 and/or monitoring agent 197 measures and monitors metrics related to application crashes, errors and/or hangs.

In some examples, the monitoring service 198 and monitoring agent 198 includes any of the product examples referred to as EdgeSight manufactured by Citrix Systems, Inc. of Ft. Lauderdale, Florida. In another example, the performance monitoring service 198 and/or monitoring agent 198 includes any portion of the product examples referred to as the TrueView product suite manufactured by the Symphoniq Corporation of Palo Alto, California. In one example, the performance monitoring service 198 and/or monitoring agent 198 includes any portion of the product examples referred to as the TeaLeaf CX product suite manufactured by the TeaLeaf Technology Inc. of San Francisco, California. In other examples, the performance monitoring service 198 and/or monitoring agent 198 includes any portion of the business service management products, such as the BMC Performance Manager and Patrol products, manufactured by BMC Software, Inc. of Houston, Texas.

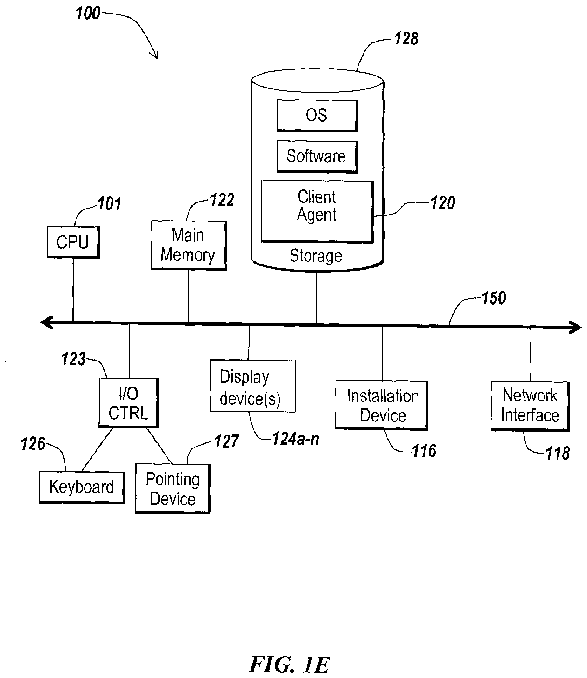

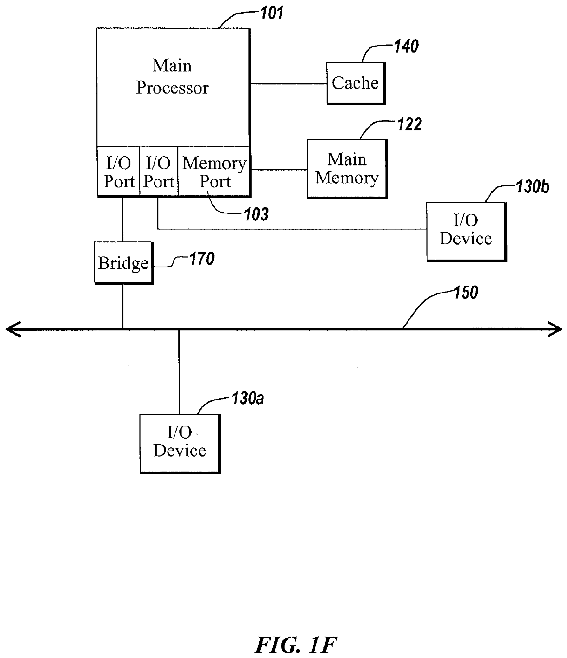

The client 102, server 106, and appliance 200 may be deployed as and/or executed on any type and form of computing device, such as a computer, network device or appliance capable of communicating on any type and form of network and performing the operations described herein. FIGs. 1E and 1F depict block diagrams of a computing device 100 useful for practicing an example of the client 102, server 106 or appliance 200. As shown in FIGs. 1E and 1F, each computing device 100 includes a central processing unit 101, and a main memory unit 122. As shown in FIG. IE, a computing device 100 may include a visual display device 124, a keyboard 126 and/or a pointing device 127, such as a mouse. Each computing device 100 may also include additional optional elements, such as one or more input/output devices 130a-130b (generally referred to using reference numeral 130), and a cache memory 140 in communication with the central processing unit 101.

The central processing unit 101 is any logic circuitry that responds to and processes instructions fetched from the main memory unit 122. In many examples, the central processing unit is provided by a microprocessor unit, such as: those manufactured by Intel Corporation of Mountain View, California; those manufactured by Motorola Corporation of Schaumburg, Illinois; those manufactured by Transmeta Corporation of Santa Clara, California; the RS/6000 processor, those manufactured by International Business Machines of White Plains, New York; or those manufactured by Advanced Micro Devices of Sunnyvale, California. The computing device 100 may be based on any of these processors, or any other processor capable of operating as described herein.

Main memory unit 122 may be one or more memory chips capable of storing data and allowing any storage location to be directly accessed by the microprocessor 101, such as Static random access memory (SRAM), Burst SRAM or SynchBurst SRAM (BSRAM), Dynamic random access memory (DRAM), Fast Page Mode DRAM (FPM DRAM), Enhanced DRAM (EDRAM), Extended Data Output RAM (EDO RAM), Extended Data Output DRAM (EDO DRAM), Burst Extended Data Output DRAM (BEDO DRAM), Enhanced DRAM (EDRAM), synchronous DRAM (SDRAM), JEDEC SRAM, PC100 SDRAM, Double Data Rate SDRAM (DDR SDRAM), Enhanced SDRAM (ESDRAM), SyncLink DRAM (SLDRAM), Direct Rambus DRAM (DRDRAM), or Ferroelectric RAM (FRAM). The main memory 122 may be based on any of the above described memory chips, or any other available memory chips capable of operating as described herein. In the example shown in FIG. IE, the processor 101 communicates with main memory 122 via a system bus 150 (described in more detail below). FIG. 1E depicts an example of a computing device 100 in which the processor communicates directly with main memory 122 via a memory port 103. For example, in FIG. IF the main memory 122 may be DRDRAM.

FIG. IF depicts an example in which the main processor 101 communicates directly with cache memory 140 via a secondary bus, sometimes referred to as a backside bus. In other examples, the main processor 101 communicates with cache memory 140 using the system bus 150. Cache memory 140 typically has a faster response time than main memory 122 and is typically provided by SRAM, BSRAM, or EDRAM. In the example shown in FIG. IE, the processor 101 communicates with various I/O devices 130 via a local system bus 150. Various busses may be used to connect the central processing unit 101 to any of the I/O devices 130, including a VESA VL bus, an ISA bus, an EISA bus, a MicroChannel Architecture (MCA) bus, a PCI bus, a PCI-X bus, a PCI-Express bus, or a NuBus. For examples in which the I/O device is a video display 124, the processor 101 may use an Advanced Graphics Port (AGP) to communicate with the display 124. FIG. IF depicts an example of a computer 100 in which the main processor 101 communicates directly with I/O device 130 via HyperTransport, Rapid I/O, or InfiniBand. FIG. IF also depicts an example in which local busses and direct communication are mixed: the processor 101 communicates with I/O device 130 using a local interconnect bus while communicating with I/O device 130 directly.

The computing device 100 may support any suitable installation device 116, such as a floppy disk drive for receiving floppy disks such as 3.5-inch, 5.25-inch disks or ZIP disks, a CD-ROM drive, a CD-R/RW drive, a DVD-ROM drive, tape drives of various formats, USB device, hard-drive or any other device suitable for installing software and programs such as any client agent 120, or portion thereof. The computing device 100 may further comprise a storage device 128, such as one or more hard disk drives or redundant arrays of independent disks, for storing an operating system and other related software, and for storing application software programs such as any program related to the client agent 120. Optionally, any of the installation devices 116 could also be used as the storage device 128. Additionally, the operating system and the software can be run from a bootable medium, for example, a bootable CD, such as KNOPPIX®, a bootable CD for GNU/Linux that is available as a GNU/Linux distribution from knoppix.net.

Furthermore, the computing device 100 may include a network interface 118 to interface to a Local Area Network (LAN), Wide Area Network (WAN) or the Internet through a variety of connections including, but not limited to, standard telephone lines, LAN or WAN links (*e.g.,* 802.11, T1, T3, 56kb, X.25), broadband connections (*e.g.,* ISDN, Frame Relay, ATM), wireless connections, or some combination of any or all of the above. The network interface 118 may comprise a built-in network adapter, network interface card, PCMCIA network card, card bus network adapter, wireless network adapter, USB network adapter, modem or any other device suitable for interfacing the computing device 100 to any type of network capable of communication and performing the operations described herein. A wide variety of I/O devices 130a-130n may be present in the computing device 100. Input devices include keyboards, mice, trackpads, trackballs, microphones, and drawing tablets. Output devices include video displays, speakers, inkjet printers, laser printers, and dye-sublimation printers. The I/O devices 130 may be controlled by an I/O controller 123 as shown in FIG. 1E. The I/O controller may control one or more I/O devices such as a keyboard 126 and a pointing device 127, e.g., a mouse or optical pen. Furthermore, an I/O device may also provide storage 128 and/or an installation medium 116 for the computing device 100. In still other examples, the computing device 100 may provide USB connections to receive handheld USB storage devices such as the USB Flash Drive line of devices manufactured by Twintech Industry, Inc. of Los Alamitos, California.

In some examples, the computing device 100 may comprise or be connected to multiple display devices 124a-124n, which each may be of the same or different type and/or form. As such, any of the I/O devices 130a-130n and/or the I/O controller 123 may comprise any type and/or form of suitable hardware, software, or combination of hardware and software to support, enable or provide for the connection and use of multiple display devices 124a-124n by the computing device 100. For example, the computing device 100 may include any type and/or form of video adapter, video card, driver, and/or library to interface, communicate, connect or otherwise use the display devices 124a-124n. In one example, a video adapter may comprise multiple connectors to interface to multiple display devices 124a-124n. In other examples, the computing device 100 may include multiple video adapters, with each video adapter connected to one or more of the display devices 124a-124n. In some examples, any portion of the operating system of the computing device 100 may be configured for using multiple displays 124a-124n. In other examples, one or more of the display devices 124a-124n may be provided by one or more other computing devices, such as computing devices 100a and 100b connected to the computing device 100, for example, via a network. These examples may include any type of software designed and constructed to use another computer's display device as a second display device 124a for the computing device 100. One ordinarily skilled in the art will recognize and appreciate the various ways and examples that a computing device 100 may be configured to have multiple display devices 124a-124n.

In further examples, an I/O device 130 may be a bridge 170 between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a HIPPI bus, a Super HIPPI bus, a SerialPlus bus, a SCI/LAMP bus, a FibreChannel bus, or a Serial Attached small computer system interface bus.

A computing device 100 of the sort depicted in FIGs. 1E and 1F typically operate under the control of operating systems, which control scheduling of tasks and access to system resources. The computing device 100 can be running any operating system such as any of the versions of the Microsoft® Windows operating systems, the different releases of the Unix and Linux operating systems, any version of the Mac OS® for Macintosh computers, any embedded operating system, any real-time operating system, any open source operating system, any proprietary operating system, any operating systems for mobile computing devices, or any other operating system capable of running on the computing device and performing the operations described herein. Typical operating systems include: WINDOWS 3.x, WINDOWS 95, WINDOWS 98, WINDOWS 2000, WINDOWS NT 3.51, WINDOWS NT 4.0, WINDOWS CE, and WINDOWS XP, all of which are manufactured by Microsoft Corporation of Redmond, Washington; MacOS, manufactured by Apple Computer of Cupertino, California; OS/2, manufactured by International Business Machines of Armonk, New York; and Linux, a freely-available operating system distributed by Caldera Corp. of Salt Lake City, Utah, or any type and/or form of a Unix operating system, among others.

In other examples, the computing device 100 may have different processors, operating systems, and input devices consistent with the device. For example, in one example the computer 100 is a Treo 180, 270, 1060, 600 or 650 smart phone manufactured by Palm, Inc. In this example, the Treo smart phone is operated under the control of the PalmOS operating system and includes a stylus input device as well as a five-way navigator device. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

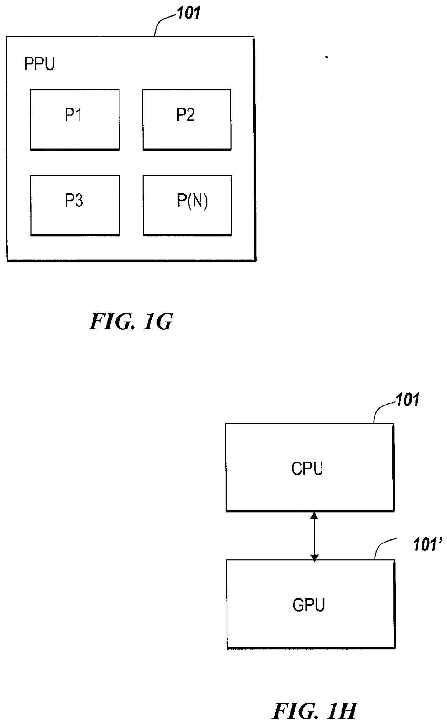

As shown in FIG. 1G, the computing device 100 may comprise multiple processors and may provide functionality for simultaneous execution of instructions or for simultaneous execution of one instruction on more than one piece of data. In some examples, the computing device 100 may comprise a parallel processor with one or more cores. In one of these examples, the computing device 100 is a shared memory parallel device, with multiple processors and/or multiple processor cores, accessing all available memory as a single global address space. In another of these examples, the computing device 100 is a distributed memory parallel device with multiple processors each accessing local memory only. In still another of these examples, the computing device 100 has both some memory which is shared and some memory which can only be accessed by particular processors or subsets of processors. In still even another of these examples, the computing device 100, such as a multi-core microprocessor, combines two or more independent processors into a single package, often a single integrated circuit (IC). In yet another of these examples, the computing device 100 includes a chip having a CELL BROADBAND ENGINE architecture and including a Power processor element and a plurality of synergistic processing elements, the Power processor element and the plurality of synergistic processing elements linked together by an internal high speed bus, which may be referred to as an element interconnect bus.

In some examples, the processors provide functionality for execution of a single instruction simultaneously on multiple pieces of data (SIMD). In other examples, the processors provide functionality for execution of multiple instructions simultaneously on multiple pieces of data (MIMD). In still other examples, the processor may use any combination of SIMD and MIMD cores in a single device.

In some examples, the computing device 100 may comprise a graphics processing unit. In one of these examples, depicted in FIG. 1H, the computing device 100 includes at least one central processing unit 101 and at least one graphics processing unit. In another of these examples, the computing device 100 includes at least one parallel processing unit and at least one graphics processing unit. In still another of these examples, the computing device 100 includes a plurality of processing units of any type, one of the plurality of processing units comprising a graphics processing unit.

In some examples, a first computing device 100a executes an application on behalf of a user of a client computing device 100b. In other examples, a computing device 100a executes a virtual machine, which provides an execution session within which applications execute on behalf of a user or a client computing devices 100b. In one of these examples, the execution session is a hosted desktop session. In another of these examples, the computing device 100 executes a terminal services session. The terminal services session may provide a hosted desktop environment. In still another of these examples, the execution session provides access to a computing environment, which may comprise one or more of: an application, a plurality of applications, a desktop application, and a desktop session in which one or more applications may execute.

### B. Appliance Architecture

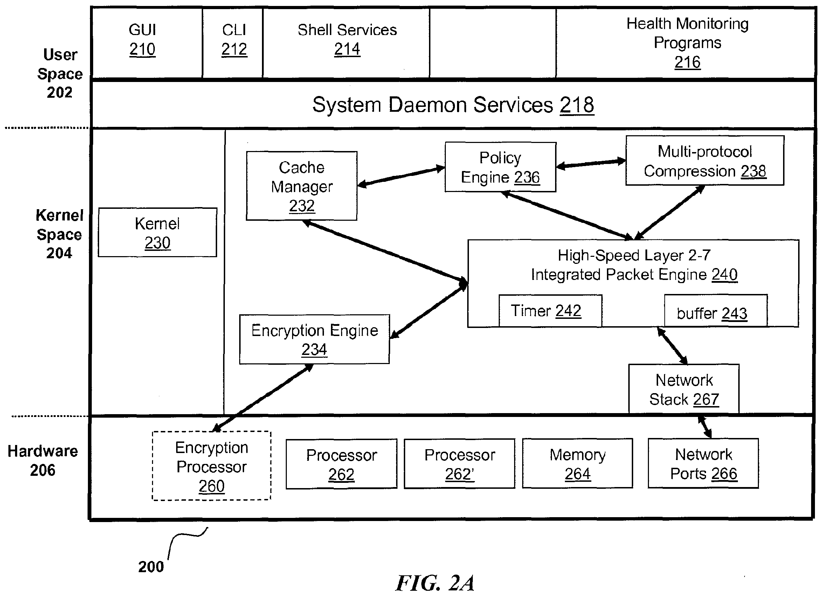

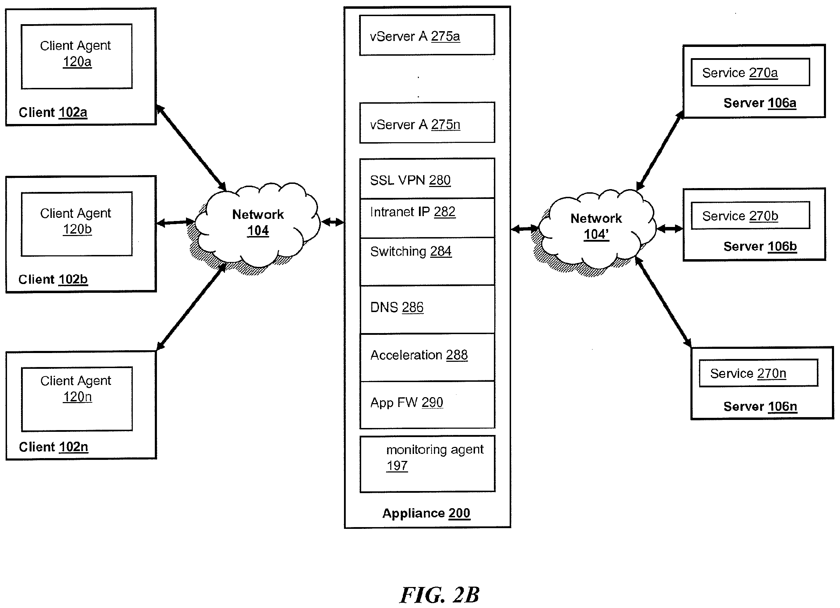

FIG. 2A illustrates an example example of the appliance 200. The architecture of the appliance 200 in FIG. 2A is provided by way of illustration only and is not intended to be limiting. As shown in FIG. 2, appliance 200 comprises a hardware layer 206 and a software layer divided into a user space 202 and a kernel space 204.

Hardware layer 206 provides the hardware elements upon which programs and services within kernel space 204 and user space 202 are executed. Hardware layer 206 also provides the structures and elements which allow programs and services within kernel space 204 and user space 202 to communicate data both internally and externally with respect to appliance 200. As shown in FIG. 2, the hardware layer 206 includes a processing unit 262 for executing software programs and services, a memory 264 for storing software and data, network ports 266 for transmitting and receiving data over a network, and an encryption processor 260 for performing functions related to Secure Sockets Layer processing of data transmitted and received over the network. In some examples, the central processing unit 262 may perform the functions of the encryption processor 260 in a single processor. Additionally, the hardware layer 206 may comprise multiple processors for each of the processing unit 262 and the encryption processor 260. The processor 262 may include any of the processors 101 described above in connection with FIGs. 1E and IF. For example, in one example, the appliance 200 comprises a first processor 262 and a second processor 262'. In other examples, the processor 262 or 262' comprises a multi-core processor.

Although the hardware layer 206 of appliance 200 is generally illustrated with an encryption processor 260, processor 260 may be a processor for performing functions related to any encryption protocol, such as the Secure Socket Layer (SSL) or Transport Layer Security (TLS) protocol. In some examples, the processor 260 may be a general purpose processor (GPP), and in further examples, may have executable instructions for performing processing of any security related protocol.

Although the hardware layer 206 of appliance 200 is illustrated with certain elements in FIG. 2, the hardware portions or components of appliance 200 may comprise any type and form of elements, hardware or software, of a computing device, such as the computing device 100 illustrated and discussed herein in conjunction with FIGs. 1E and IF. In some examples, the appliance 200 may comprise a server, gateway, router, switch, bridge or other type of computing or network device, and have any hardware and/or software elements associated therewith.

The operating system of appliance 200 allocates, manages, or otherwise segregates the available system memory into kernel space 204 and user space 204. In example software architecture 200, the operating system may be any type and/or form of Unix operating system although the methods and systems described herein are not so limited. As such, the appliance 200 can be running any operating system such as any of the versions of the Microsoft® Windows operating systems, the different releases of the Unix and Linux operating systems, any version of the Mac OS® for Macintosh computers, any embedded operating system, any network operating system, any real-time operating system, any open source operating system, any proprietary operating system, any operating systems for mobile computing devices or network devices, or any other operating system capable of running on the appliance 200 and performing the operations described herein.

The kernel space 204 is reserved for running the kernel 230, including any device drivers, kernel extensions or other kernel related software. As known to those skilled in the art, the kernel 230 is the core of the operating system, and provides access, control, and management of resources and hardware-related elements of the application 104. In accordance with an example of the appliance 200, the kernel space 204 also includes a number of network services or processes working in conjunction with a cache manager 232, sometimes also referred to as the integrated cache, the benefits of which are described in detail further herein. Additionally, the example of the kernel 230 will depend on the example of the operating system installed, configured, or otherwise used by the device 200.

In one example, the device 200 comprises one network stack 267, such as a TCP/IP based stack, for communicating with the client 102 and/or the server 106. In one example, the network stack 267 is used to communicate with a first network, such as network 108, and a second network 110. In some examples, the device 200 terminates a first transport layer connection, such as a TCP connection of a client 102, and establishes a second transport layer connection to a server 106 for use by the client 102, e.g., the second transport layer connection is terminated at the appliance 200 and the server 106. The first and second transport layer connections may be established via a single network stack 267. In other examples, the device 200 may comprise multiple network stacks, for example 267 and 267', and the first transport layer connection may be established or terminated at one network stack 267, and the second transport layer connection on the second network stack 267'. For example, one network stack may be for receiving and transmitting network packet on a first network, and another network stack for receiving and transmitting network packets on a second network. In one example, the network stack 267 comprises a buffer 243 for queuing one or more network packets for transmission by the appliance 200.

As shown in FIG. 2, the kernel space 204 includes the cache manager 232, a highspeed layer 2-7 integrated packet engine 240, an encryption engine 234, a policy engine 236 and multi-protocol compression logic 238. Running these components or processes 232, 240, 234, 236 and 238 in kernel space 204 or kernel mode instead of the user space 202 improves the performance of each of these components, alone and in combination. Kernel operation means that these components or processes 232, 240, 234, 236 and 238 run in the core address space of the operating system of the device 200. For example, running the encryption engine 234 in kernel mode improves encryption performance by moving encryption and decryption operations to the kernel, thereby reducing the number of transitions between the memory space or a kernel thread in kernel mode and the memory space or a thread in user mode. For example, data obtained in kernel mode may not need to be passed or copied to a process or thread running in user mode, such as from a kernel level data structure to a user level data structure. In another aspect, the number of context switches between kernel mode and user mode are also reduced. Additionally, synchronization of and communications between any of the components or processes 232, 240, 235, 236 and 238 can be performed more efficiently in the kernel space 204.

In some examples, any portion of the components 232, 240, 234, 236 and 238 may run or operate in the kernel space 204, while other portions of these components 232, 240, 234, 236 and 238 may run or operate in user space 202. In one example, the appliance 200 uses a kernel-level data structure providing access to any portion of one or more network packets, for example, a network packet comprising a request from a client 102 or a response from a server 106. In some examples, the kernel-level data structure may be obtained by the packet engine 240 via a transport layer driver interface or filter to the network stack 267. The kernel-level data structure may comprise any interface and/or data accessible via the kernel space 204 related to the network stack 267, network traffic or packets received or transmitted by the network stack 267. In other examples, the kernel-level data structure may be used by any of the components or processes 232, 240, 234, 236 and 238 to perform the desired operation of the component or process. In one example, a component 232, 240, 234, 236 and 238 is running in kernel mode 204 when using the kernel-level data structure, while in another example, the component 232, 240, 234, 236 and 238 is running in user mode when using the kernel-level data structure. In some examples, the kernel-level data structure may be copied or passed to a second kernel-level data structure, or any desired user-level data structure.

The cache manager 232 may comprise software, hardware or any combination of software and hardware to provide cache access, control and management of any type and form of content, such as objects or dynamically generated objects served by the originating servers 106. The data, objects or content processed and stored by the cache manager 232 may comprise data in any format, such as a markup language, or communicated via any protocol. In some examples, the cache manager 232 duplicates original data stored elsewhere or data previously computed, generated or transmitted, in which the original data may require longer access time to fetch, compute or otherwise obtain relative to reading a cache memory element. Once the data is stored in the cache memory element, future use can be made by accessing the cached copy rather than refetching or recomputing the original data, thereby reducing the access time. In some examples, the cache memory element may comprise a data object in memory 264 of device 200. In other examples, the cache memory element may comprise memory having a faster access time than memory 264. In another example, the cache memory element may comprise any type and form of storage element of the device 200, such as a portion of a hard disk. In some examples, the processing unit 262 may provide cache memory for use by the cache manager 232. In yet further examples, the cache manager 232 may use any portion and combination of memory, storage, or the processing unit for caching data, objects, and other content.

Furthermore, the cache manager 232 includes any logic, functions, rules, or operations to perform any examples of the techniques of the appliance 200 described herein. For example, the cache manager 232 includes logic or functionality to invalidate objects based on the expiration of an invalidation time period or upon receipt of an invalidation command from a client 102 or server 106. In some examples, the cache manager 232 may operate as a program, service, process or task executing in the kernel space 204, and in other examples, in the user space 202. In one example, a first portion of the cache manager 232 executes in the user space 202 while a second portion executes in the kernel space 204. In some examples, the cache manager 232 can comprise any type of general purpose processor (GPP), or any other type of integrated circuit, such as a Field Programmable Gate Array (FPGA), Programmable Logic Device (PLD), or Application Specific Integrated Circuit (ASIC).

The policy engine 236 may include, for example, an intelligent statistical engine or other programmable application(s). In one example, the policy engine 236 provides a configuration mechanism to allow a user to identify, specify, define or configure a caching policy. Policy engine 236, in some examples, also has access to memory to support data structures such as lookup tables or hash tables to enable user-selected caching policy decisions. In other examples, the policy engine 236 may comprise any logic, rules, functions or operations to determine and provide access, control and management of objects, data or content being cached by the appliance 200 in addition to access, control and management of security, network traffic, network access, compression or any other function or operation performed by the appliance 200. Further examples of specific caching policies are further described herein.

The encryption engine 234 comprises any logic, business rules, functions or operations for handling the processing of any security related protocol, such as SSL or TLS, or any function related thereto. For example, the encryption engine 234 encrypts and decrypts network packets, or any portion thereof, communicated via the appliance 200. The encryption engine 234 may also setup or establish SSL or TLS connections on behalf of the client 102a-102n, server 106a-106n, or appliance 200. As such, the encryption engine 234 provides offloading and acceleration of SSL processing. In one example, the encryption engine 234 uses a tunneling protocol to provide a virtual private network between a client 102a-102n and a server 106a-106n. In some examples, the encryption engine 234 is in communication with the Encryption processor 260. In other examples, the encryption engine 234 comprises executable instructions running on the Encryption processor 260.

The multi-protocol compression engine 238 comprises any logic, business rules, function or operations for compressing one or more protocols of a network packet, such as any of the protocols used by the network stack 267 of the device 200. In one example, multi-protocol compression engine 238 compresses bi-directionally between clients 102a-102n and servers 106a-106n any TCP/IP based protocol, including Messaging Application Programming Interface (MAPI) (email), File Transfer Protocol (FTP), HyperText Transfer Protocol (HTTP), Common Internet File System (CIFS) protocol (file transfer), Independent Computing Architecture (ICA) protocol, Remote Desktop Protocol (RDP), Wireless Application Protocol (WAP), Mobile IP protocol, and Voice Over IP (VoIP) protocol. In other examples, multi-protocol compression engine 238 provides compression of Hypertext Markup Language (HTML) based protocols and in some examples, provides compression of any markup languages, such as the Extensible Markup Language (XML). In one example, the multi-protocol compression engine 238 provides compression of any high-performance protocol, such as any protocol designed for appliance 200 to appliance 200 communications. In another example, the multi-protocol compression engine 238 compresses any payload of or any communication using a modified transport control protocol, such as Transaction TCP (T/TCP), TCP with selection acknowledgements (TCP-SACK), TCP with large windows (TCP-LW), a congestion prediction protocol such as the TCP-Vegas protocol, and a TCP spoofing protocol.

As such, the multi-protocol compression engine 238 accelerates performance for users accessing applications via desktop clients, e.g., Microsoft Outlook and non-Web thin clients, such as any client launched by popular enterprise applications like Oracle, SAP and Siebel, and even mobile clients, such as the Pocket PC. In some examples, the multi-protocol compression engine 238 by executing in the kernel mode 204 and integrating with packet processing engine 240 accessing the network stack 267 is able to compress any of the protocols carried by the TCP/IP protocol, such as any application layer protocol.

High speed layer 2-7 integrated packet engine 240, also generally referred to as a packet processing engine or packet engine, is responsible for managing the kernel-level processing of packets received and transmitted by appliance 200 via network ports 266. The high speed layer 2-7 integrated packet engine 240 may comprise a buffer for queuing one or more network packets during processing, such as for receipt of a network packet or transmission of a network packet. Additionally, the high speed layer 2-7 integrated packet engine 240 is in communication with one or more network stacks 267 to send and receive network packets via network ports 266. The high speed layer 2-7 integrated packet engine 240 works in conjunction with encryption engine 234, cache manager 232, policy engine 236 and multi-protocol compression logic 238. In particular, encryption engine 234 is configured to perform SSL processing of packets, policy engine 236 is configured to perform functions related to traffic management such as request-level content switching and request-level cache redirection, and multi-protocol compression logic 238 is configured to perform functions related to compression and decompression of data.

The high speed layer 2-7 integrated packet engine 240 includes a packet processing timer 242. In one example, the packet processing timer 242 provides one or more time intervals to trigger the processing of incoming, i.e., received, or outgoing, i.e., transmitted, network packets. In some examples, the high speed layer 2-7 integrated packet engine 240 processes network packets responsive to the timer 242. The packet processing timer 242 provides any type and form of signal to the packet engine 240 to notify, trigger, or communicate a time related event, interval or occurrence. In many examples, the packet processing timer 242 operates in the order of milliseconds, such as for example 100ms, 50ms or 25ms. For example, in some examples, the packet processing timer 242 provides time intervals or otherwise causes a network packet to be processed by the high speed layer 2-7 integrated packet engine 240 at a 10 ms time interval, while in other examples, at a 5 ms time interval, and still yet in further examples, as short as a 3, 2, or 1 ms time interval. The high speed layer 2-7 integrated packet engine 240 may be interfaced, integrated or in communication with the encryption engine 234, cache manager 232, policy engine 236 and multi-protocol compression engine 238 during operation. As such, any of the logic, functions, or operations of the encryption engine 234, cache manager 232, policy engine 236 and multi-protocol compression logic 238 may be performed responsive to the packet processing timer 242 and/or the packet engine 240. Therefore, any of the logic, functions, or operations of the encryption engine 234, cache manager 232, policy engine 236 and multi-protocol compression logic 238 may be performed at the granularity of time intervals provided via the packet processing timer 242, for example, at a time interval of less than or equal to 10ms. For example, in one example, the cache manager 232 may perform invalidation of any cached objects responsive to the high speed layer 2-7 integrated packet engine 240 and/or the packet processing timer 242. In another example, the expiry or invalidation time of a cached object can be set to the same order of granularity as the time interval of the packet processing timer 242, such as at every 10 ms.

In contrast to kernel space 204, user space 202 is the memory area or portion of the operating system used by user mode applications or programs otherwise running in user mode. A user mode application may not access kernel space 204 directly and uses service calls in order to access kernel services. As shown in FIG. 2, user space 202 of appliance 200 includes a graphical user interface (GUI) 210, a command line interface (CLI) 212, shell services 214, health monitoring program 216, and daemon services 218. GUI 210 and CLI 212 provide a means by which a system administrator or other user can interact with and control the operation of appliance 200, such as via the operating system of the appliance 200. The GUI 210 or CLI 212 can comprise code running in user space 202 or kernel space 204. The GUI 210 may be any type and form of graphical user interface and may be presented via text, graphical or otherwise, by any type of program or application, such as a browser. The CLI 212 may be any type and form of command line or text-based interface, such as a command line provided by the operating system. For example, the CLI 212 may comprise a shell, which is a tool to enable users to interact with the operating system. In some examples, the CLI 212 may be provided via a bash, csh, tcsh, or ksh type shell. The shell services 214 comprises the programs, services, tasks, processes or executable instructions to support interaction with the appliance 200 or operating system by a user via the GUI 210 and/or CLI 212.

Health monitoring program 216 is used to monitor, check, report and ensure that network systems are functioning properly and that users are receiving requested content over a network. Health monitoring program 216 comprises one or more programs, services, tasks, processes or executable instructions to provide logic, rules, functions or operations for monitoring any activity of the appliance 200. In some examples, the health monitoring program 216 intercepts and inspects any network traffic passed via the appliance 200. In other examples, the health monitoring program 216 interfaces by any suitable means and/or mechanisms with one or more of the following: the encryption engine 234, cache manager 232, policy engine 236, multi-protocol compression logic 238, packet engine 240, daemon services 218, and shell services 214. As such, the health monitoring program 216 may call any application programming interface (API) to determine a state, status, or health of any portion of the appliance 200. For example, the health monitoring program 216 may ping or send a status inquiry on a periodic basis to check if a program, process, service or task is active and currently running. In another example, the health monitoring program 216 may check any status, error or history logs provided by any program, process, service or task to determine any condition, status or error with any portion of the appliance 200.

Daemon services 218 are programs that run continuously or in the background and handle periodic service requests received by appliance 200. In some examples, a daemon service may forward the requests to other programs or processes, such as another daemon service 218 as appropriate. As known to those skilled in the art, a daemon service 218 may run unattended to perform continuous or periodic system wide functions, such as network control, or to perform any desired task. In some examples, one or more daemon services 218 run in the user space 202, while in other examples, one or more daemon services 218 run in the kernel space.

Referring now to FIG. 2B, another example of the appliance 200 is depicted. In brief overview, the appliance 200 provides one or more of the following services, functionality or operations: SSL VPN connectivity 280, switching/load balancing 284, Domain Name Service resolution 286, acceleration 288 and an application firewall 290 for communications between one or more clients 102 and one or more servers 106. Each of the servers 106 may provide one or more network related services 270a-270n (referred to as services 270). For example, a server 106 may provide an http service 270. The appliance 200 comprises one or more virtual servers or virtual internet protocol servers, referred to as a vServer, VIP server, or just VIP 275a-275n (also referred herein as vServer 275). The vServer 275 receives, intercepts or otherwise processes communications between a client 102 and a server 106 in accordance with the configuration and operations of the appliance 200.

The vServer 275 may comprise software, hardware or any combination of software and hardware. The vServer 275 may comprise any type and form of program, service, task, process or executable instructions operating in user mode 202, kernel mode 204 or any combination thereof in the appliance 200. The vServer 275 includes any logic, functions, rules, or operations to perform any examples of the techniques described herein, such as SSL VPN 280, switching/load balancing 284, Domain Name Service resolution 286, acceleration 288 and an application firewall 290. In some examples, the vServer 275 establishes a connection to a service 270 of a server 106. The service 275 may comprise any program, application, process, task or set of executable instructions capable of connecting to and communicating to the appliance 200, client 102 or vServer 275. For example, the service 275 may comprise a web server, http server, ftp, email or database server. In some examples, the service 270 is a daemon process or network driver for listening, receiving and/or sending communications for an application, such as email, database or an enterprise application. In some examples, the service 270 may communicate on a specific IP address, or IP address and port.

In some examples, the vServer 275 applies one or more policies of the policy engine 236 to network communications between the client 102 and server 106. In one example, the policies are associated with a VServer 275. In another example, the policies are based on a user, or a group of users. In yet another example, a policy is global and applies to one or more vServers 275a-275n, and any user or group of users communicating via the appliance 200. In some examples, the policies of the policy engine have conditions upon which the policy is applied based on any content of the communication, such as internet protocol address, port, protocol type, header or fields in a packet, or the context of the communication, such as user, group of the user, vServer 275, transport layer connection, and/or identification or attributes of the client 102 or server 106.

In other examples, the appliance 200 communicates or interfaces with the policy engine 236 to determine authentication and/or authorization of a remote user or a remote client 102 to access the computing environment 15, application, and/or data file from a server 106. In another example, the appliance 200 communicates or interfaces with the policy engine 236 to determine authentication and/or authorization of a remote user or a remote client 102 to have the application delivery system 190 deliver one or more of the computing environment 15, application, and/or data file. In yet another example, the appliance 200 establishes a VPN or SSL VPN connection based on the policy engine's 236 authentication and/or authorization of a remote user or a remote client 102 In one example, the appliance 200 controls the flow of network traffic and communication sessions based on policies of the policy engine 236. For example, the appliance 200 may control the access to a computing environment 15, application or data file based on the policy engine 236.

In some examples, the vServer 275 establishes a transport layer connection, such as a TCP or UDP connection with a client 102 via the client agent 120. In one example, the vServer 275 listens for and receives communications from the client 102. In other examples, the vServer 275 establishes a transport layer connection, such as a TCP or UDP connection with a client server 106. In one example, the vServer 275 establishes the transport layer connection to an internet protocol address and port of a server 270 running on the server 106. In another example, the vServer 275 associates a first transport layer connection to a client 102 with a second transport layer connection to the server 106. In some examples, a vServer 275 establishes a pool of transport layer connections to a server 106 and multiplexes client requests via the pooled transport layer connections.

In some examples, the appliance 200 provides a SSL VPN connection 280 between a client 102 and a server 106. For example, a client 102 on a first network 102 requests to establish a connection to a server 106 on a second network 104'. In some examples, the second network 104' is not routable from the first network 104. In other examples, the client 102 is on a public network 104 and the server 106 is on a private network 104', such as a corporate network. In one example, the client agent 120 intercepts communications of the client 102 on the first network 104, encrypts the communications, and transmits the communications via a first transport layer connection to the appliance 200. The appliance 200 associates the first transport layer connection on the first network 104 to a second transport layer connection to the server 106 on the second network 104. The appliance 200 receives the intercepted communication from the client agent 102, decrypts the communications, and transmits the communication to the server 106 on the second network 104 via the second transport layer connection. The second transport layer connection may be a pooled transport layer connection. As such, the appliance 200 provides an end-to-end secure transport layer connection for the client 102 between the two networks 104, 104'.

In one example, the appliance 200 hosts an intranet internet protocol or intranetIP 282 address of the client 102 on the virtual private network 104. The client 102 has a local network identifier, such as an internet protocol (IP) address and/or host name on the first network 104. When connected to the second network 104' via the appliance 200, the appliance 200 establishes, assigns or otherwise provides an IntranetIP, which is network identifier, such as IP address and/or host name, for the client 102 on the second network 104'. The appliance 200 listens for and receives on the second or private network 104' for any communications directed towards the client 102 using the client's established IntranetIP 282. In one example, the appliance 200 acts as or on behalf of the client 102 on the second private network 104. For example, in another example, a vServer 275 listens for and responds to communications to the IntranetIP 282 of the client 102. In some examples, if a computing device 100 on the second network 104' transmits a request, the appliance 200 processes the request as if it were the client 102. For example, the appliance 200 may respond to a ping to the client's IntranetIP 282. In another example, the appliance may establish a connection, such as a TCP or UDP connection, with computing device 100 on the second network 104 requesting a connection with the client's IntranetIP 282.

In some examples, the appliance 200 provides one or more of the following acceleration techniques 288 to communications between the client 102 and server 106: 1) compression; 2) decompression; 3) Transmission Control Protocol pooling; 4) Transmission Control Protocol multiplexing; 5) Transmission Control Protocol buffering; and 6) caching. In one example, the appliance 200 relieves servers 106 of much of the processing load caused by repeatedly opening and closing transport layers connections to clients 102 by opening one or more transport layer connections with each server 106 and maintaining these connections to allow repeated data accesses by clients via the Internet. This technique is referred to herein as "connection pooling".

In some examples, in order to seamlessly splice communications from a client 102 to a server 106 via a pooled transport layer connection, the appliance 200 translates or multiplexes communications by modifying sequence number and acknowledgment numbers at the transport layer protocol level. This is referred to as "connection multiplexing". In some examples, no application layer protocol interaction is required. For example, in the case of an in-bound packet (that is, a packet received from a client 102), the source network address of the packet is changed to that of an output port of appliance 200, and the destination network address is changed to that of the intended server. In the case of an outbound packet (that is, one received from a server 106), the source network address is changed from that of the server 106 to that of an output port of appliance 200 and the destination address is changed from that of appliance 200 to that of the requesting client 102. The sequence numbers and acknowledgment numbers of the packet are also translated to sequence numbers and acknowledgement expected by the client 102 on the appliance's 200 transport layer connection to the client 102. In some examples, the packet checksum of the transport layer protocol is recalculated to account for these translations.

In another example, the appliance 200 provides switching or load-balancing functionality 284 for communications between the client 102 and server 106. In some examples, the appliance 200 distributes traffic and directs client requests to a server 106 based on layer 4 or application-layer request data. In one example, although the network layer or layer 2 of the network packet identifies a destination server 106, the appliance 200 determines the server 106 to distribute the network packet by application information and data carried as payload of the transport layer packet. In one example, the health monitoring programs 216 of the appliance 200 monitor the health of servers to determine the server 106 for which to distribute a client's request. In some examples, if the appliance 200 detects a server 106 is not available or has a load over a predetermined threshold, the appliance 200 can direct or distribute client requests to another server 106.

In some examples, the appliance 200 acts as a Domain Name Service (DNS) resolver or otherwise provides resolution of a DNS request from clients 102. In some examples, the appliance intercepts' a DNS request transmitted by the client 102. In one example, the appliance 200 responds to a client's DNS request with an IP address of or hosted by the appliance 200. In this example, the client 102 transmits network communication for the domain name to the appliance 200. In another example, the appliance 200 responds to a client's DNS request with an IP address of or hosted by a second appliance 200'. In some examples, the appliance 200 responds to a client's DNS request with an IP address of a server 106 determined by the appliance 200.

In yet another example, the appliance 200 provides application firewall functionality 290 for communications between the client 102 and server 106. In one example, the policy engine 236 provides rules for detecting and blocking illegitimate requests. In some examples, the application firewall 290 protects against denial of service (DoS) attacks. In other examples, the appliance inspects the content of intercepted requests to identify and block application-based attacks. In some examples, the rules/policy engine 236 comprises one or more application firewall or security control policies for providing protections against various classes and types of web or Internet based vulnerabilities, such as one or more of the following: 1) buffer overflow, 2) CGI-BIN parameter manipulation, 3) form/hidden field manipulation, 4) forceful browsing, 5) cookie or session poisoning, 6) broken access control list (ACLs) or weak passwords, 7) cross-site scripting (XSS), 8) command injection, 9) SQL injection, 10) error triggering sensitive information leak, 11) insecure use of cryptography, 12) server misconfiguration, 13) back doors and debug options, 14) website defacement, 15) platform or operating systems vulnerabilities, and 16) zero-day exploits. In an example, the application firewall 290 provides HTML form field protection in the form of inspecting or analyzing the network communication for one or more of the following: 1) required fields are returned, 2) no added field allowed, 3) read-only and hidden field enforcement, 4) drop-down list and radio button field conformance, and 5) form-field max-length enforcement. In some examples, the application firewall 290 ensures cookies are not modified. In other examples, the application firewall 290 protects against forceful browsing by enforcing legal URLs.

In still yet other examples, the application firewall 290 protects any confidential information contained in the network communication. The application firewall 290 may inspect or analyze any network communication in accordance with the rules or polices of the engine 236 to identify any confidential information in any field of the network packet. In some examples, the application firewall 290 identifies in the network communication one or more occurrences of a credit card number, password, social security number, name, patient code, contact information, and age. The encoded portion of the network communication may comprise these occurrences or the confidential information. Based on these occurrences, in one example, the application firewall 290 may take a policy action on the network communication, such as prevent transmission of the network communication. In another example, the application firewall 290 may rewrite, remove or otherwise mask such identified occurrence or confidential information.

Still referring to FIG. 2B, the appliance 200 may include a performance monitoring agent 197 as discussed above in conjunction with FIG. 1D. In one example, the appliance 200 receives the monitoring agent 197 from the monitoring service 198 or monitoring server 106 as depicted in FIG. 1D. In some examples, the appliance 200 stores the monitoring agent 197 in storage, such as disk, for delivery to any client or server in communication with the appliance 200. For example, in one example, the appliance 200 transmits the monitoring agent 197 to a client upon receiving a request to establish a transport layer connection. In other examples, the appliance 200 transmits the monitoring agent 197 upon establishing the transport layer connection with the client 102. In another example, the appliance 200 transmits the monitoring agent 197 to the client upon intercepting or detecting a request for a web page. In yet another example, the appliance 200 transmits the monitoring agent 197 to a client or a server in response to a request from the monitoring server 198. In one example, the appliance 200 transmits the monitoring agent 197 to a second appliance 200' or appliance 205.

In other examples, the appliance 200 executes the monitoring agent 197. In one example, the monitoring agent 197 measures and monitors the performance of any application, program, process, service, task or thread executing on the appliance 200. For example, the monitoring agent 197 may monitor and measure performance and operation of vServers 275A-275N. In another example, the monitoring agent 197 measures and monitors the performance of any transport layer connections of the appliance 200. In some examples, the monitoring agent 197 measures and monitors the performance of any user sessions traversing the appliance 200. In one example, the monitoring agent 197 measures and monitors the performance of any virtual private network connections and/or sessions traversing the appliance 200, such an SSL VPN session. In still further examples, the monitoring agent 197 measures and monitors the memory, CPU and disk usage and performance of the appliance 200. In yet another example, the monitoring agent 197 measures and monitors the performance of any acceleration technique 288 performed by the appliance 200, such as SSL offloading, connection pooling and multiplexing, caching, and compression. In some examples, the monitoring agent 197 measures and monitors the performance of any load balancing and/or content switching 284 performed by the appliance 200. In other examples, the monitoring agent 197 measures and monitors the performance of application firewall 290 protection and processing performed by the appliance 200.

### C. Client Agent

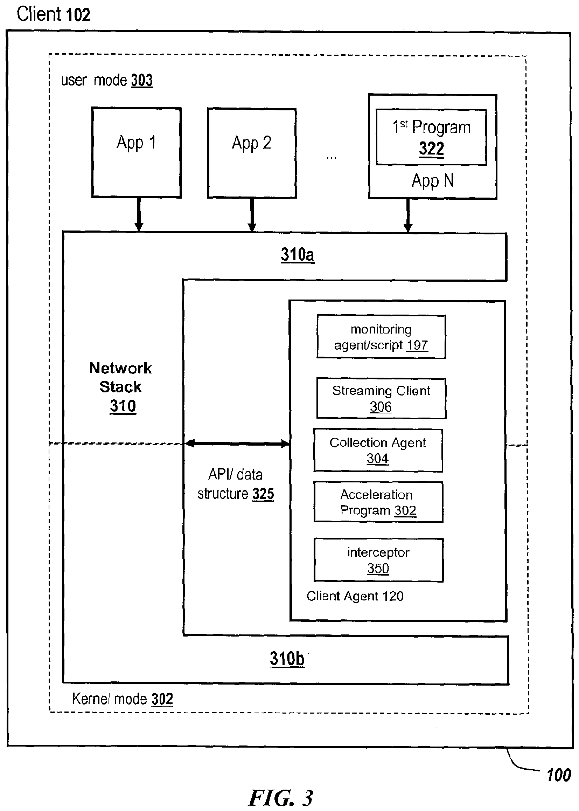

Referring now to FIG. 3, an example of the client agent 120 is depicted. The client 102 includes a client agent 120 for establishing and exchanging communications with the appliance 200 and/or server 106 via a network 104. In brief overview, the client 102 operates on computing device 100 having an operating system with a kernel mode 302 and a user mode 303, and a network stack 310 with one or more layers 310a-310b. The client 102 may have installed and/or execute one or more applications. In some examples, one or more applications may communicate via the network stack 310 to a network 104. One of the applications, such as a web browser, may also include a first program 322. For example, the first program 322 may be used in some examples to install and/or execute the client agent 120, or any portion thereof. The client agent 120 includes an interception mechanism, or interceptor 350, for intercepting network communications from the network stack 310 from the one or more applications.

The network stack 310 of the client 102 may comprise any type and form of software, or hardware, or any combinations thereof, for providing connectivity to and communications with a network. In one example, the network stack 310 comprises a software implementation for a network protocol suite. The network stack 310 may comprise one or more network layers, such as any networks layers of the Open Systems Interconnection (OSI) communications model as those skilled in the art recognize and appreciate. As such, the network stack 310 may comprise any type and form of protocols for any of the following layers of the OSI model: 1) physical link layer, 2) data link layer, 3) network layer, 4) transport layer, 5) session layer, 6) presentation layer, and 7) application layer. In one example, the network stack 310 may comprise a transport control protocol (TCP) over the network layer protocol of the internet protocol (IP), generally referred to as TCP/IP. In some examples, the TCP/IP protocol may be carried over the Ethernet protocol, which may comprise any of the family of IEEE wide-area-network (WAN) or local-area-network (LAN) protocols, such as those protocols covered by the IEEE 802.3. In some examples, the network stack 310 comprises any type and form of a wireless protocol, such as IEEE 802.11 and/or mobile internet protocol.

In view of a TCP/IP based network, any TCP/IP based protocol may be used, including Messaging Application Programming Interface (MAPI) (email), File Transfer Protocol (FTP), HyperText Transfer Protocol (HTTP), Common Internet File System (CIFS) protocol (file transfer), Independent Computing Architecture (ICA) protocol, Remote Desktop Protocol (RDP), Wireless Application Protocol (WAP), Mobile IP protocol, and Voice Over IP (VoIP) protocol. In another example, the network stack 310 comprises any type and form of transport control protocol, such as a modified transport control protocol, for example a Transaction TCP (T/TCP), TCP with selection acknowledgements (TCP-SACK), TCP with large windows (TCP-LW), a congestion prediction protocol such as the TCP-Vegas protocol, and a TCP spoofing protocol. In other examples, any type and form of user datagram protocol (UDP), such as UDP over IP, may be used by the network stack 310, such as for voice communications or real-time data communications.

Furthermore, the network stack 310 may include one or more network drivers supporting the one or more layers, such as a TCP driver or a network layer driver. The network drivers may be included as part of the operating system of the computing device 100 or as part of any network interface cards or other network access components of the computing device 100. In some examples, any of the network drivers of the network stack 310 may be customized, modified or adapted to provide a custom or modified portion of the network stack 310 in support of any of the techniques described herein. In other examples, the acceleration program 120 is designed and constructed to operate with or work in conjunction with the network stack 310 installed or otherwise provided by the operating system of the client 102.

The network stack 310 comprises any type and form of interfaces for receiving, obtaining, providing or otherwise accessing any information and data related to network communications of the client 102. In one example, an interface to the network stack 310 comprises an application programming interface (API). The interface may also comprise any function call, hooking or filtering mechanism, event or call back mechanism, or any type of interfacing technique. The network stack 310 via the interface may receive or provide any type and form of data structure, such as an object, related to functionality or operation of the network stack 310. For example, the data structure may comprise information and data related to a network packet or one or more network packets. In some examples, the data structure comprises a portion of the network packet processed at a protocol layer of the network stack 310, such as a network packet of the transport layer. In some examples, the data structure 325 comprises a kernel-level data structure, while in other examples, the data structure 325 comprises a user-mode data structure. A kernel-level data structure may comprise a data structure obtained or related to a portion of the network stack 310 operating in kernel-mode 302, or a network driver or other software running in kernel-mode 302, or any data structure obtained or received by a service, process, task, thread or other executable instructions running or operating in kernel-mode of the operating system.

Additionally, some portions of the network stack 310 may execute or operate in kernel-mode 302, for example, the data link or network layer, while other portions execute or operate in user-mode 303, such as an application layer of the network stack 310. For example, a first portion 310a of the network stack may provide user-mode access to the network stack 310 to an application while a second portion 310a of the network stack 310 provides access to a network. In some examples, a first portion 310a of the network stack may comprise one or more upper layers of the network stack 310, such as any of layers 5-7. In other examples, a second portion 310b of the network stack 310 comprises one or more lower layers, such as any of layers 1-4. Each of the first portion 310a and second portion 310b of the network stack 310 may comprise any portion of the network stack 310, at any one or more network layers, in user-mode 203, kernel-mode, 202, or combinations thereof, or at any portion of a network layer or interface point to a network layer or any portion of or interface point to the user-mode 203 and kernel-mode 203..

The interceptor 350 may comprise software, hardware, or any combination of software and hardware. In one example, the interceptor 350 intercept a network communication at any point in the network stack 310, and redirects or transmits the network communication to a destination desired, managed or controlled by the interceptor 350 or client agent 120. For example, the interceptor 350 may intercept a network communication of a network stack 310 of a first network and transmit the network communication to the appliance 200 for transmission on a second network 104. In some examples, the interceptor 350 comprises any type interceptor 350 comprises a driver, such as a network driver constructed and designed to interface and work with the network stack 310. In some examples, the client agent 120 and/or interceptor 350 operates at one or more layers of the network stack 310, such as at the transport layer. In one example, the interceptor 350 comprises a filter driver, hooking mechanism, or any form and type of suitable network driver interface that interfaces to the transport layer of the network stack, such as via the transport driver interface (TDI). In some examples, the interceptor 350 interfaces to a first protocol layer, such as the transport layer and another protocol layer, such as any layer above the transport protocol layer, for example, an application protocol layer. In one example, the interceptor 350 may comprise a driver complying with the Network Driver Interface Specification (NDIS), or a NDIS driver. In another example, the interceptor 350 may comprise a min-filter or a mini-port driver. In one example, the interceptor 350, or portion thereof, operates in kernel-mode 202. In another example, the interceptor 350, or portion thereof, operates in user-mode 203. In some examples, a portion of the interceptor 350 operates in kernel-mode 202 while another portion of the interceptor 350 operates in user-mode 203. In other examples, the client agent 120 operates in user-mode 203 but interfaces via the interceptor 350 to a kernel-mode driver, process, service, task or portion of the operating system, such as to obtain a kernel-level data structure 225. In further examples, the interceptor 350 is a user-mode application or program, such as application.

In one example, the interceptor 350 intercepts any transport layer connection requests. In these examples, the interceptor 350 execute transport layer application programming interface (API) calls to set the destination information, such as destination IP address and/or port to a desired location for the location. In this manner, the interceptor 350 intercepts and redirects the transport layer connection to a IP address and port controlled or managed by the interceptor 350 or client agent 120. In one example, the interceptor 350 sets the destination information for the connection to a local IP address and port of the client 102 on which the client agent 120 is listening. For example, the client agent 120 may comprise a proxy service listening on a local IP address and port for redirected transport layer communications. In some examples, the client agent 120 then communicates the redirected transport layer communication to the appliance 200.

In some examples, the interceptor 350 intercepts a Domain Name Service (DNS) request. In one example, the client agent 120 and/or interceptor 350 resolves the DNS request. In another example, the interceptor transmits the intercepted DNS request to the appliance 200 for DNS resolution. In one example, the appliance 200 resolves the DNS request and communicates the DNS response to the client agent 120. In some examples, the appliance 200 resolves the DNS request via another appliance 200' or a DNS server 106.

In yet another example, the client agent 120 may comprise two agents 120 and 120'. In one example, a first agent 120 may comprise an interceptor 350 operating at the network layer of the network stack 310. In some examples, the first agent 120 intercepts network layer requests such as Internet Control Message Protocol (ICMP) requests (e.g., ping and traceroute). In other examples, the second agent 120' may operate at the transport layer and intercept transport layer communications. In some examples, the first agent 120 intercepts communications at one layer of the network stack 210 and interfaces with or communicates the intercepted communication to the second agent 120'.

The client agent 120 and/or interceptor 350 may operate at or interface with a protocol layer in a manner transparent to any other protocol layer of the network stack 310. For example, in one example, the interceptor 350 operates or interfaces with the transport layer of the network stack 310 transparently to any protocol layer below the transport layer, such as the network layer, and any protocol layer above the transport layer, such as the session, presentation or application layer protocols. This allows the other protocol layers of the network stack 310 to operate as desired and without modification for using the interceptor 350. As such, the client agent 120 and/or interceptor 350 can interface with the transport layer to secure, optimize, accelerate, route or load-balance any communications provided via any protocol carried by the transport layer, such as any application layer protocol over TCP/IP.

Furthermore, the client agent 120 and/or interceptor may operate at or interface with the network stack 310 in a manner transparent to any application, a user of the client 102, and any other computing device, such as a server, in communications with the client 102. The client agent 120 and/or interceptor 350 may be installed and/or executed on the client 102 in a manner without modification of an application. In some examples, the user of the client 102 or a computing device in communications with the client 102 are not aware of the existence, execution or operation of the client agent 120 and/or interceptor 350. As such, in some examples, the client agent 120 and/or interceptor 350 is installed, executed, and/or operated transparently to an application, user of the client 102, another computing device, such as a server, or any of the protocol layers above and/or below the protocol layer interfaced to by the interceptor 350.

The client agent 120 includes an acceleration program 302, a streaming client 306, a collection agent 304, and/or monitoring agent 197. In one example, the client agent 120 comprises an Independent Computing Architecture (ICA) client, or any portion thereof, developed by Citrix Systems, Inc. of Fort Lauderdale, Florida, and is also referred to as an ICA client. In some examples, the client 120 comprises an application streaming client 306 for streaming an application from a server 106 to a client 102. In some examples, the client agent 120 comprises an acceleration program 302 for accelerating communications between client 102 and server 106. In another example, the client agent 120 includes a collection agent 304 for performing end-point detection/scanning and collecting end-point information for the appliance 200 and/or server 106.

In some examples, the acceleration program 302 comprises a client-side acceleration program for performing one or more acceleration techniques to accelerate, enhance or otherwise improve a client's communications with and/or access to a server 106, such as accessing an application provided by a server 106. The logic, functions, and/or operations of the executable instructions of the acceleration program 302 may perform one or more of the following acceleration techniques: 1) multi-protocol compression, 2) transport control protocol pooling, 3) transport control protocol multiplexing, 4) transport control protocol buffering, and 5) caching via a cache manager. Additionally, the acceleration program 302 may perform encryption and/or decryption of any communications received and/or transmitted by the client 102. In some examples, the acceleration program 302 performs one or more of the acceleration techniques in an integrated manner or fashion. Additionally, the acceleration program 302 can perform compression on any of the protocols, or multiple-protocols, carried as a payload of a network packet of the transport layer protocol. The streaming client 306 comprises an application, program, process, service, task or executable instructions for receiving and executing a streamed application from a server 106. A server 106 may stream one or more application data files to the streaming client 306 for playing, executing or otherwise causing to be executed the application on the client 102. In some examples, the server 106 transmits a set of compressed or packaged application data files to the streaming client 306. In some examples, the plurality of application files are compressed and stored on a file server within an archive file such as a CAB, ZIP, SIT, TAR, JAR or other archive. In one example, the server 106 decompresses, unpackages or unarchives the application files and transmits the files to the client 102. In another example, the client 102 decompresses, unpackages or unarchives the application files. The streaming client 306 dynamically installs the application, or portion thereof, and executes the application. In one example, the streaming client 306 may be an executable program. In some examples, the streaming client 306 may be able to launch another executable program.

The collection agent 304 comprises an application, program, process, service, task or executable instructions for identifying, obtaining and/or collecting information about the client 102. In some examples, the appliance 200 transmits the collection agent 304 to the client 102 or client agent 120. The collection agent 304 may be configured according to one or more policies of the policy engine 236 of the appliance. In other examples, the collection agent 304 transmits collected information on the client 102 to the appliance 200. In one example, the policy engine 236 of the appliance 200 uses the collected information to determine and provide access, authentication and authorization control of the client's connection to a network 104.

In one example, the collection agent 304 comprises an end-point detection and scanning mechanism, which identifies and determines one or more attributes or characteristics of the client. For example, the collection agent 304 may identify and determine any one or more of the following client-side attributes: 1) the operating system an/or a version of an operating system, 2) a service pack of the operating system, 3) a running service, 4) a running process, and 5) a file. The collection agent 304 may also identify and determine the presence or versions of any one or more of the following on the client: 1) antivirus software, 2) personal firewall software, 3) anti-spam software, and 4) internet security software. The policy engine 236 may have one or more policies based on any one or more of the attributes or characteristics of the client or client-side attributes.

In some examples, the client agent 120 includes a monitoring agent 197 as discussed in conjunction with FIGs. 1D and 2B. The monitoring agent 197 may be any type and form of script, such as Visual Basic or Java script. In one example, the monitoring agent 129 monitors and measures performance of any portion of the client agent 120. For example, in some examples, the monitoring agent 129 monitors and measures performance of the acceleration program 302. In another example, the monitoring agent 129 monitors and measures performance of the streaming client 306. In other examples, the monitoring agent 129 monitors and measures performance of the collection agent 304. In still another example, the monitoring agent 129 monitors and measures performance of the interceptor 350. In some examples, the monitoring agent 129 monitors and measures any resource of the client 102, such as memory, CPU and disk.

The monitoring agent 197 may monitor and measure performance of any application of the client. In one example, the monitoring agent 129 monitors and measures performance of a browser on the client 102. In some examples, the monitoring agent 197 monitors and measures performance of any application delivered via the client agent 120. In other examples, the monitoring agent 197 measures and monitors end user response times for an application, such as web-based or HTTP response times. The monitoring agent 197 may monitor and measure performance of an ICA or RDP client. In another example, the monitoring agent 197 measures and monitors metrics for a user session or application session. In some examples, monitoring agent 197 measures and monitors an ICA or RDP session. In one example, the monitoring agent 197 measures and monitors the performance of the appliance 200 in accelerating delivery of an application and/or data to the client 102.

In some examples and still referring to FIG. 3, a first program 322 may be used to install and/or execute the client agent 120, or portion thereof, such as the interceptor 350, automatically, silently, transparently, or otherwise. In one example, the first program 322 comprises a plugin component, such an ActiveX control or Java control or script that is loaded into and executed by an application. For example, the first program comprises an ActiveX control loaded and run by a web browser application, such as in the memory space or context of the application. In another example, the first program 322 comprises a set of executable instructions loaded into and run by the application, such as a browser. In one example, the first program 322 comprises a designed and constructed program to install the client agent 120. In some examples, the first program 322 obtains, downloads, or receives the client agent 120 via the network from another computing device. In another example, the first program 322 is an installer program or a plug and play manager for installing programs, such as network drivers, on the operating system of the client 102.

### D. Systems and Methods for Providing Virtualized Application Delivery Controller

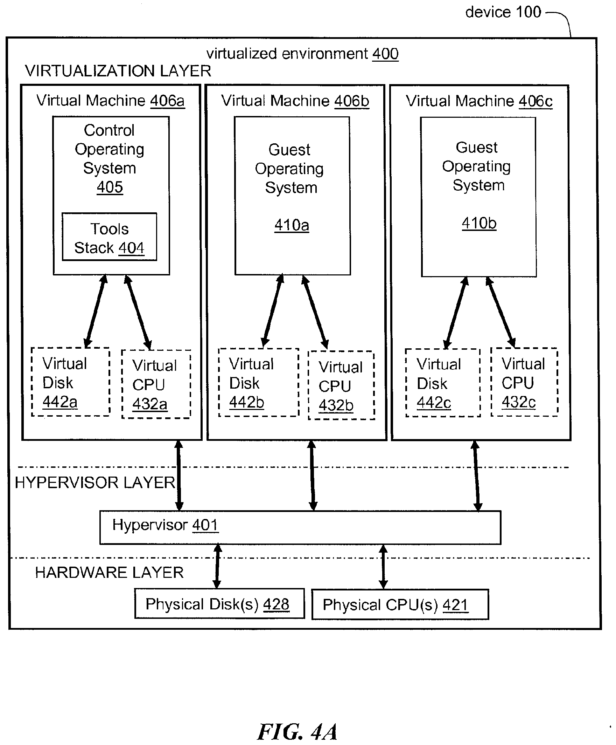

Referring now to FIG. 4A, a block diagram depicts one example of a virtualization environment 400. In brief overview, a computing device 100 includes a hypervisor layer, a virtualization layer, and a hardware layer. The hypervisor layer includes a hypervisor 401 (also referred to as a virtualization manager) that allocates and manages access to a number of physical resources in the hardware layer (e.g., the processor(s) 421, and disk(s) 428) by at least one virtual machine executing in the virtualization layer. The virtualization layer includes at least one operating system 410 and a plurality of virtual resources allocated to the at least one operating system 410. Virtual resources may include, without limitation, a plurality of virtual processors 432a, 432b, 432c (generally 432), and virtual disks 442a, 442b, 442c (generally 442), as well as virtual resources such as virtual memory and virtual network interfaces. The plurality of virtual resources and the operating system 410 may be referred to as a virtual machine 406. A virtual machine 406 may include a control operating system 405 in communication with the hypervisor 401 and used to execute applications for managing and configuring other virtual machines on the computing device 100.

In greater detail, a hypervisor 401 may provide virtual resources to an operating system in any manner which simulates the operating system having access to a physical device. A hypervisor 401 may provide virtual resources to any number of guest operating systems 410a, 410b (generally 410). In some examples, a computing device 100 executes one or more types of hypervisors. In these examples, hypervisors may be used to emulate virtual hardware, partition physical hardware, virtualize physical hardware, and execute virtual machines that provide access to computing environments. Hypervisors may include those manufactured by VMWare, Inc., of Palo Alto, California; the XEN hypervisor, an open source product whose development is overseen by the open source Xen.org community; HyperV, VirtualServer or virtual PC hypervisors provided by Microsoft, or others. In some examples, a computing device 100 executing a hypervisor that creates a virtual machine platform on which guest operating systems may execute is referred to as a host server. In one of these examples, for example, the computing device 100 is a XEN SERVER provided by Citrix Systems, Inc., of Fort Lauderdale, FL.

In some examples, a hypervisor 401 executes within an operating system executing on a computing device. In one of these examples, a computing device executing an operating system and a hypervisor 401 may be said to have a host operating system (the operating system executing on the computing device), and a guest operating system (an operating system executing within a computing resource partition provided by the hypervisor 401). In other examples, a hypervisor 401 interacts directly with hardware on a computing device, instead of executing on a host operating system. In one of these examples, the hypervisor 401 may be said to be executing on "bare metal," referring to the hardware comprising the computing device.

In some examples, a hypervisor 401 may create a virtual machine 406a-c (generally 406) in which an operating system 410 executes. In one of these examples, for example, the hypervisor 401 loads a virtual machine image to create a virtual machine 406. In another of these examples, the hypervisor 401 executes an operating system 410 within the virtual machine 406. In still another of these examples, the virtual machine 406 executes an operating system 410.

In some examples, the hypervisor 401 controls processor scheduling and memory partitioning for a virtual machine 406 executing on the computing device 100. In one of these examples, the hypervisor 401 controls the execution of at least one virtual machine 406. In another of these examples, the hypervisor 401 presents at least one virtual machine 406 with an abstraction of at least one hardware resource provided by the computing device 100. In other examples, the hypervisor 401 controls whether and how physical processor capabilities are presented to the virtual machine 406.

A control operating system 405 may execute at least one application for managing and configuring the guest operating systems. In one example, the control operating system 405 may execute an administrative application, such as an application including a user interface providing administrators with access to functionality for managing the execution of a virtual machine, including functionality for executing a virtual machine, terminating an execution of a virtual machine, or identifying a type of physical resource for allocation to the virtual machine. In another example, the hypervisor 401 executes the control operating system 405 within a virtual machine 406 created by the hypervisor 401. In still another example, the control operating system 405 executes in a virtual machine 406 that is authorized to directly access physical resources on the computing device 100. In some examples, a control operating system 405a on a computing device 100a may exchange data with a control operating system 405b on a computing device 100b, via communications between a hypervisor 401a and a hypervisor 401b. In this way, one or more computing devices 100 may exchange data with one or more of the other computing devices 100 regarding processors and other physical resources available in a pool of resources. In one of these examples, this functionality allows a hypervisor to manage a pool of resources distributed across a plurality of physical computing devices. In another of these examples, multiple hypervisors manage one or more of the guest operating systems executed on one of the computing devices 100.

In one example, the control operating system 405 executes in a virtual machine 406 that is authorized to interact with at least one guest operating system 410. In another example, a guest operating system 410 communicates with the control operating system 405 via the hypervisor 401 in order to request access to a disk or a network. In still another example, the guest operating system 410 and the control operating system 405 may communicate via a communication channel established by the hypervisor 401, such as, for example, via a plurality of shared memory pages made available by the hypervisor 401.

In some examples, the control operating system 405 includes a network back-end driver for communicating directly with networking hardware provided by the computing device 100. In one of these examples, the network back-end driver processes at least one virtual machine request from at least one guest operating system 110. In other examples, the control operating system 405 includes a block back-end driver for communicating with a storage element on the computing device 100. In one of these examples, the block back-end driver reads and writes data from the storage element based upon at least one request received from a guest operating system 410.

In one example, the control operating system 405 includes a tools stack 404. In another example, a tools stack 404 provides functionality for interacting with the hypervisor 401, communicating with other control operating systems 405 (for example, on a second computing device 100b), or managing virtual machines 406b, 406c on the computing device 100. In another example, the tools stack 404 includes customized applications for providing improved management functionality to an administrator of a virtual machine farm. In some examples, at least one of the tools stack 404 and the control operating system 405 include a management API that provides an interface for remotely configuring and controlling virtual machines 406 running on a computing device 100. In other examples, the control operating system 405 communicates with the hypervisor 401 through the tools stack 104.

In one example, the hypervisor 401 executes a guest operating system 410 within a virtual machine 406 created by the hypervisor 401. In another example, the guest operating system 410 provides a user of the computing device 100 with access to resources within a computing environment. In still another example, a resource includes a program, an application, a document, a file, a plurality of applications, a plurality of files, an executable program file, a desktop environment, a computing environment, or other resource made available to a user of the computing device 100. In yet another example, the resource may be delivered to the computing device 100 via a plurality of access methods including, but not limited to, conventional installation directly on the computing device 100, delivery to the computing device 100 via a method for application streaming, delivery to the computing device 100 of output data generated by an execution of the resource on a second computing device 100' and communicated to the computing device 100 via a presentation layer protocol, delivery to the computing device 100 of output data generated by an execution of the resource via a virtual machine executing on a second computing device 100', or execution from a removable storage device connected to the computing device 100, such as a USB device, or via a virtual machine executing on the computing device 100 and generating output data. In some examples, the computing device 100 transmits output data generated by the execution of the resource to another computing device 100'.

In one example, the guest operating system 410, in conjunction with the virtual machine on which it executes, forms a fully-virtualized virtual machine which is not aware that it is a virtual machine; such a machine may be referred to as a "Domain U HVM (Hardware Virtual Machine) virtual machine". In another example, a fully-virtualized machine includes software emulating a Basic Input/Output System (BIOS) in order to execute an operating system within the fully-virtualized machine. In still another example, a fully-virtualized machine may include a driver that provides functionality by communicating with the hypervisor 401. In such an example, the driver may be aware that it executes within a virtualized environment. In another example, the guest operating system 410, in conjunction with the virtual machine on which it executes, forms a paravirtualized virtual machine, which is aware that it is a virtual machine; such a machine may be referred to as a "Domain U PV virtual machine". In another example, a paravirtualized machine includes additional drivers that a fully-virtualized machine does not include. In still another example, the paravirtualized machine includes the network back-end driver and the block back-end driver included in a control operating system 405, as described above.

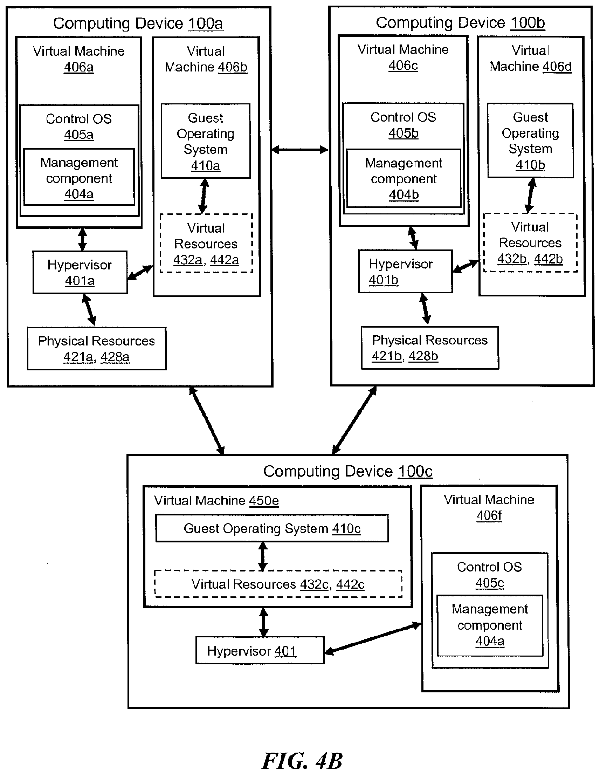

Referring now to FIG. 4B, a block diagram depicts one example of a plurality of networked computing devices in a system in which at least one physical host executes a virtual machine. In brief overview, the system includes a management component 404 and a hypervisor 401. The system includes a plurality of computing devices 100, a plurality of virtual machines 406, a plurality of hypervisors 401, a plurality of management components referred to as tools stacks 404, and a physical resource 421, 428. The plurality of physical machines 100 may each be provided as computing devices 100, described above in connection with FIGs. 1E-1H and 4A.

In greater detail, a physical disk 428 is provided by a computing device 100 and stores at least a portion of a virtual disk 442. In some examples, a virtual disk 442 is associated with a plurality of physical disks 428. In one of these examples, one or more computing devices 100 may exchange data with one or more of the other computing devices 100 regarding processors and other physical resources available in a pool of resources, allowing a hypervisor to manage a pool of resources distributed across a plurality of physical computing devices. In some examples, a computing device 100 on which a virtual machine 406 executes is referred to as a physical host 100 or as a host machine 100.

The hypervisor executes on a processor on the computing device 100. The hypervisor allocates, to a virtual disk, an amount of access to the physical disk. In one example, the hypervisor 401 allocates an amount of space on the physical disk. In another example, the hypervisor 401 allocates a plurality of pages on the physical disk. In some examples, the hypervisor provisions the virtual disk 442 as part of a process of initializing and executing a virtual machine 450.

In one example, the management component 404a is referred to as a pool management component 404a. In another example, a management operating system 405a, which may be referred to as a control operating system 405a, includes the management component. In some examples, the management component is referred to as a tools stack. In one of these examples, the management component is the tools stack 404 described above in connection with FIG. 4A. In other examples, the management component 404 provides a user interface for receiving, from a user such as an administrator, an identification of a virtual machine 406 to provision and/or execute. In still other examples, the management component 404 provides a user interface for receiving, from a user such as an administrator, the request for migration of a virtual machine 406b from one physical machine 100 to another. In further examples, the management component 404a identifies a computing device 100b on which to execute a requested virtual machine 406d and instructs the hypervisor 401b on the identified computing device 100b to execute the identified virtual machine; such a management component may be referred to as a pool management component.

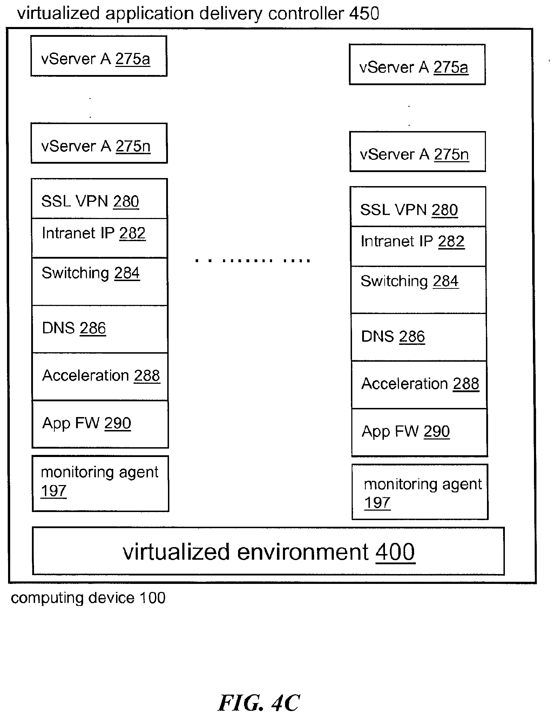

Referring now to Figure 4C, examples of a virtual application delivery controller or virtual appliance 450 are depicted. In brief overview, any of the functionality and/or examples of the appliance 200 (e.g., an application delivery controller) described above in connection with FIGs. 2A and 2B may be deployed in any example of the virtualized environment described above in connection with FIGs 4A and 4B. Instead of the functionality of the application delivery controller being deployed in the form of an appliance 200, such functionality may be deployed in a virtualized environment 400 on any computing device 100, such as a client 102, server 106 or appliance 200.

Referring now to FIG. 4C, a diagram of an example of a virtual appliance 450 operating on a hypervisor 401 of a server 106 is depicted. As with the appliance 200 of FIGs. 2A and 2B, the virtual appliance 450 may provide functionality for availability, performance, offload and security. For availability, the virtual appliance may perform load balancing between layers 4 and 7 of the network and may also perform intelligent service health monitoring. For performance increases via network traffic acceleration, the virtual appliance may perform caching and compression. To offload processing of any servers, the virtual appliance may perform connection multiplexing and pooling and/or SSL processing. For security, the virtual appliance may perform any of the application firewall functionality and SSL VPN function of appliance 200.

Any of the modules of the appliance 200 as described in connection with FIGs. 2A may be packaged, combined, designed or constructed in a form of the virtualized appliance delivery controller 450 deployable as one or more software modules or components executable in a virtualized environment 300 or non-virtualized environment on any server, such as an off the shelf server. For example, the virtual appliance may be provided in the form of an installation package to install on a computing device. With reference to FIG. 2A, any of the cache manager 232, policy engine 236, compression 238, encryption engine 234, packet engine 240, GUI 210, CLI 212, shell services 214 and health monitoring programs 216 may be designed and constructed as a software component or module to run on any operating system of a computing device and/or of a virtualized environment 300. Instead of using the encryption processor 260, processor 262, memory 264 and network stack 267 of the appliance 200, the virtualized appliance 400 may use any of these resources as provided by the virtualized environment 400 or as otherwise available on the server 106.

Still referring to FIG. 4C, and in brief overview, any one or more vServers 275A-275N may be in operation or executed in a virtualized environment 400 of any type of computing device 100, such as any server 106. Any of the modules or functionality of the appliance 200 described in connection with FIG. 2B may be designed and constructed to operate in either a virtualized or non-virtualized environment of a server. Any of the vServer 275, SSL VPN 280, Intranet UP 282, Switching 284, DNS 286, acceleration 288, App FW 280 and monitoring agent may be packaged, combined, designed or constructed in a form of application delivery controller 450 deployable as one or more software modules or components executable on a device and/or virtualized environment 400.

In some examples, a server may execute multiple virtual machines 406a-406n in the virtualization environment with each virtual machine running the same or different examples of the virtual application delivery controller 450. In some examples, the server may execute one or more virtual appliances 450 on one or more virtual machines on a core of a multi-core processing system. In some examples, the server may execute one or more virtual appliances 450 on one or more virtual machines on each processor of a multiple processor device.

### E. Systems and Methods for Providing A Multi-Core Architecture

In accordance with Moore's Law, the number of transistors that may be placed on an integrated circuit may double approximately every two years. However, CPU speed increases may reach plateaus, for example CPU speed has been around 3.5 - 4 GHz range since 2005. In some cases, CPU manufacturers may not rely on CPU speed increases to gain additional performance. Some CPU manufacturers may add additional cores to their processors to provide additional performance. Products, such as those of software and networking vendors, that rely on CPUs for performance gains may improve their performance by leveraging these multi-core CPUs. The software designed and constructed for a single CPU may be redesigned and/or rewritten to take advantage of a multi-threaded, parallel architecture or otherwise a multi-core architecture.

A multi-core architecture of the appliance 200, referred to as nCore or multi-core technology, allows the appliance in some examples to break the single core performance barrier and to leverage the power of multi-core CPUs. In the previous architecture described in connection with FIG. 2A, a single network or packet engine is run. The multiple cores of the nCore technology and architecture allow multiple packet engines to run concurrently and/or in parallel. With a packet engine running on each core, the appliance architecture leverages the processing capacity of additional cores. In some examples, this provides up to a 7X increase in performance and scalability.

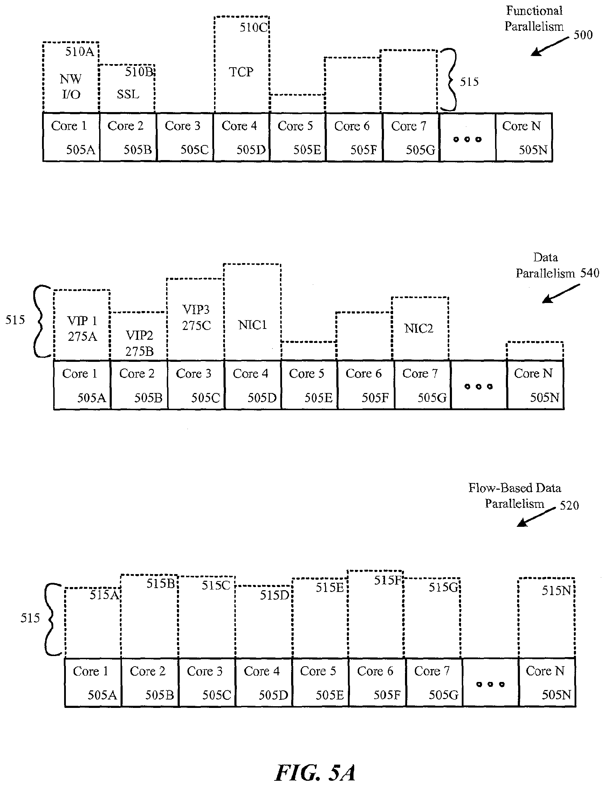

Illustrated in FIG. 5A are some examples of work, task, load or network traffic distribution across one or more processor cores according to a type of parallelism or parallel computing scheme, such as functional parallelism, data parallelism or flow-based data parallelism. In brief overview, FIG. 5A illustrates examples of a multi-core system such as an appliance 200' with n-cores, a total of cores numbers 1 through N. In one example, work, load or network traffic can be distributed among a first core 505A, a second core 505B, a third core 505C, a fourth core 505D, a fifth core 505E, a sixth core 505F, a seventh core 505G, and so on such that distribution is across all or two or more of the n cores 505N (hereinafter referred to collectively as cores 505.) There may be multiple VIPs 275 each running on a respective core of the plurality of cores. There may be multiple packet engines 240 each running on a respective core of the plurality of cores. Any of the approaches used may lead to different, varying or similar work load or performance level 515 across any of the cores. For a functional parallelism approach, each core may run a different function of the functionalities provided by the packet engine, a VIP 275 or appliance 200. In a data parallelism approach, data may be paralleled or distributed across the cores based on the Network Interface Card (NIC) or VIP 275 receiving the data. In another data parallelism approach, processing may be distributed across the cores by distributing data flows to each core.

In further detail to FIG. 5A, in some examples, load, work or network traffic can be distributed among cores 505 according to functional parallelism 500. Functional parallelism may be based on each core performing one or more respective functions. In some examples, a first core may perform a first function while a second core performs a second function. In functional parallelism approach, the functions to be performed by the multi-core system are divided and distributed to each core according to functionality. In some examples, functional parallelism may be referred to as task parallelism and may be achieved when each processor or core executes a different process or function on the same or different data. The core or processor may execute the same or different code. In some cases, different execution threads or code may communicate with one another as they work. Communication may take place to pass data from one thread to the next as part of a workflow.

In some examples, distributing work across the cores 505 according to functional parallelism 500, can comprise distributing network traffic according to a particular function such as network input/output management (NW I/O) 510A, secure sockets layer (SSL) encryption and decryption 510B and transmission control protocol (TCP) functions 510C. This may lead to a work, performance or computing load 515 based on a volume or level of functionality being used. In some examples, distributing work across the cores 505 according to data parallelism 540, can comprise distributing an amount of work 515 based on distributing data associated with a particular hardware or software component. In some examples, distributing work across the cores 505 according to flow-based data parallelism 520, can comprise distributing data based on a context or flow such that the amount of work 515A-N on each core may be similar, substantially equal or relatively evenly distributed.

In the case of the functional parallelism approach, each core may be configured to run one or more functionalities of the plurality of functionalities provided by the packet engine or VIP of the appliance. For example, core 1 may perform network I/O processing for the appliance 200' while core 2 performs TCP connection management for the appliance. Likewise, core 3 may perform SSL offloading while core 4 may perform layer 7 or application layer processing and traffic management. Each of the cores may perform the same function or different functions. Each of the cores may perform more than one function. Any of the cores may run any of the functionality or portions thereof identified and/or described in conjunction with FIGs. 2A and 2B. In this the approach, the work across the cores may be divided by function in either a coarse-grained or fine-grained manner. In some cases, as illustrated in FIG. 5A, division by function may lead to different cores running at different levels of performance or load 515.

In the case of the functional parallelism approach, each core may be configured to run one or more functionalities of the plurality of functionalities provided by the packet engine of the appliance. For example, core 1 may perform network I/O processing for the appliance 200' while core 2 performs TCP connection management for the appliance. Likewise, core 3 may perform SSL offloading while core 4 may perform layer 7 or application layer processing and traffic management. Each of the cores may perform the same function or different functions. Each of the cores may perform more than one function. Any of the cores may run any of the functionality or portions thereof identified and/or described in conjunction with FIGs. 2A and 2B. In this the approach, the work across the cores may be divided by function in either a coarse-grained or fine-grained manner. In some cases, as illustrated in FIG. 5A division by function may lead to different cores running at different levels of load or performance.

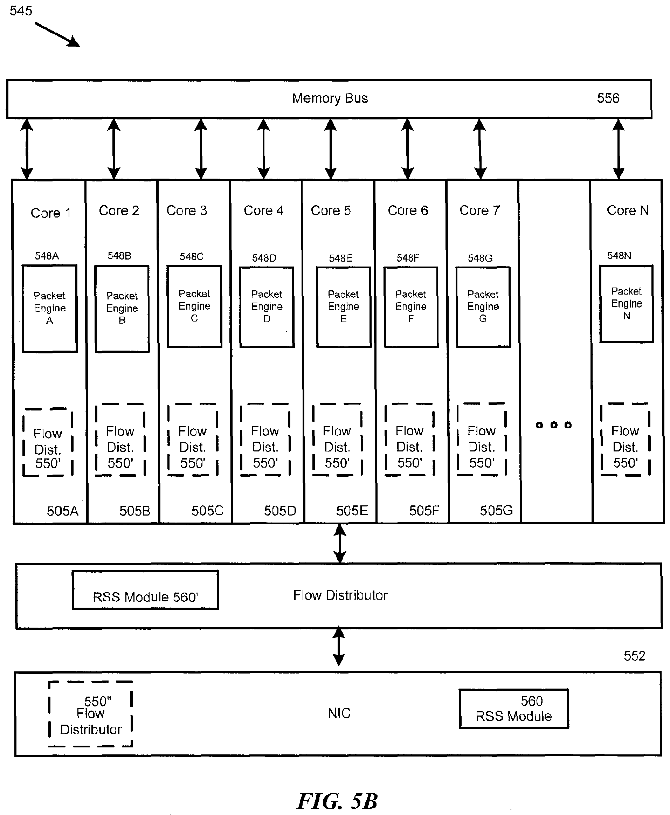

The functionality or tasks may be distributed in any arrangement and scheme. For example, FIG. 5B illustrates a first core, Core 1 505A, processing applications and processes associated with network I/O functionality 510A. Network traffic associated with network I/O, in some examples, can be associated with a particular port number. Thus, outgoing and incoming packets having a port destination associated with NW I/O 510A will be directed towards Core 1 505A which is dedicated to handling all network traffic associated with the NW I/O port. Similarly, Core 2 505B is dedicated to handling functionality associated with SSL processing and Core 4 505D may be dedicated handling all TCP level processing and functionality.

While FIG. 5A illustrates functions such as network I/O, SSL and TCP, other functions can be assigned to cores. These other functions can include any one or more of the functions or operations described herein. For example, any of the functions described in conjunction with FIGs. 2A and 2B may be distributed across the cores on a functionality basis. In some cases, a first VIP 275A may run on a first core while a second VIP 275B with a different configuration may run on a second core. In some examples, each core 505 can handle a particular functionality such that each core 505 can handle the processing associated with that particular function. For example, Core 2 505B may handle SSL offloading while Core 4 505D may handle application layer processing and traffic management.

In other examples, work, load or network traffic may be distributed among cores 505 according to any type and form of data parallelism 540. In some examples, data parallelism may be achieved in a multi-core system by each core performing the same task or functionally on different pieces of distributed data. In some examples, a single execution thread or code controls operations on all pieces of data. In other examples, different threads or instructions control the operation, but may execute the same code. In some examples, data parallelism is achieved from the perspective of a packet engine, vServers (VIPs) 275A-C, network interface cards (NIC) 542D-E and/or any other networking hardware or software included on or associated with an appliance 200. For example, each core may run the same packet engine or VIP code or configuration but operate on different sets of distributed data. Each networking hardware or software construct can receive different, varying or substantially the same amount of data, and as a result may have varying, different or relatively the same amount of load 515

In the case of a data parallelism approach, the work may be divided up and distributed based on VIPs, NICs and/or data flows of the VIPs or NICs. In one of these approaches, the work of the multi-core system may be divided or distributed among the VIPs by having each VIP work on a distributed set of data. For example, each core may be configured to run one or more VIPs. Network traffic may be distributed to the core for each VIP handling that traffic. In another of these approaches, the work of the appliance may be divided or distributed among the cores based on which NIC receives the network traffic. For example, network traffic of a first NIC may be distributed to a first core while network traffic of a second NIC may be distributed to a second core. In some cases, a core may process data from multiple NICs.

While FIG 5A illustrates a single vServer associated with a single core 505, as is the case for VIP1 275A, VIP2 275B and VIP3 275C. In some examples, a single vServer can be associated with one or more cores 505. In contrast, one or more vServers can be associated with a single core 505. Associating a vServer with a core 505 may include that core 505 to process all functions associated with that particular vServer. In some examples, each core executes a VIP having the same code and configuration. In other examples, each core executes a VIP having the same code but different configuration. In some examples, each core executes a VIP having different code and the same or different configuration.

Like vServers, NICs can also be associated with particular cores 505. In many examples, NICs can be connected to one or more cores 505 such that when a NIC receives or transmits data packets, a particular core 505 handles the processing involved with receiving and transmitting the data packets. In one example, a single NIC can be associated with a single core 505, as is the case with NIC1 542D and NIC2 542E. In other examples, one or more NICs can be associated with a single core 505. In other examples, a single NIC can be associated with one or more cores 505. In these examples, load could be distributed amongst the one or more cores 505 such that each core 505 processes a substantially similar amount of load. A core 505 associated with a NIC may process all functions and/or data associated with that particular NIC.

While distributing work across cores based on data of VIPs or NICs may have a level of independency, in some examples, this may lead to unbalanced use of cores as illustrated by the varying loads 515 of FIG. 5A.

In some examples, load, work or network traffic can be distributed among cores 505 based on any type and form of data flow. In another of these approaches, the work may be divided or distributed among cores based on data flows. For example, network traffic between a client and a server traversing the appliance may be distributed to and processed by one core of the plurality of cores. In some cases, the core initially establishing the session or connection may be the core for which network traffic for that session or connection is distributed. In some examples, the data flow is based on any unit or portion of network traffic, such as a transaction, a request/response communication or traffic originating from an application on a client. In this manner and in some examples, data flows between clients and servers traversing the appliance 200' may be distributed in a more balanced manner than the other approaches.

In flow-based data parallelism 520, distribution of data is related to any type of flow of data, such as request/response pairings, transactions, sessions, connections or application communications. For example, network traffic between a client and a server traversing the appliance may be distributed to and processed by one core of the plurality of cores. In some cases, the core initially establishing the session or connection may be the core for which network traffic for that session or connection is distributed. The distribution of data flow may be such that each core 505 carries a substantially equal or relatively evenly distributed amount of load, data or network traffic..

In some examples, the data flow is based on any unit or portion of network traffic, such as a transaction, a request/response communication or traffic originating from an application on a client. In this manner and in some examples, data flows between clients and servers traversing the appliance 200' may be distributed in a more balanced manner than the other approached. In one example, data flow can be distributed based on a transaction or a series of transactions. This transaction, in some examples, can be between a client and a server and can be characterized by an IP address or other packet identifier. For example, Core 1 505A can be dedicated to transactions between a particular client and a particular server, therefore the load 536A on Core 1 505A may be comprised of the network traffic associated with the transactions between the particular client and server. Allocating the network traffic to Core 1 505A can be accomplished by routing all data packets originating from either the particular client or server to Core 1 505A.

While work or load can be distributed to the cores based in part on transactions, in other examples load or work can be allocated on a per packet basis. In these examples, the appliance 200 can intercept data packets and allocate them to a core 505 having the least amount of load. For example, the appliance 200 could allocate a first incoming data packet to Core 1 505A because the load 536A on Core 1 is less than the load 536B-N on the rest of the cores 505B-N. Once the first data packet is allocated to Core 1 505A, the amount of load 536A on Core 1 505A is increased proportional to the amount of processing resources needed to process the first data packet. When the appliance 200 intercepts a second data packet, the appliance 200 will allocate the load to Core 4 505D because Core 4 505D has the second least amount of load. Allocating data packets to the core with the least amount of load can, in some examples, ensure that the load 536A-N distributed to each core 505 remains substantially equal.

In other examples, load can be allocated on a per unit basis where a section of network traffic is allocated to a particular core 505. The above-mentioned example illustrates load balancing on a per/packet basis. In other examples, load can be allocated based on a number of packets such that every 10, 100 or 1000 packets are allocated to the core 505 having the least amount of load. The number of packets allocated to a core 505 can be a number determined by an application, user or administrator and can be any number greater than zero. In still other examples, load can be allocated based on a time metric such that packets are distributed to a particular core 505 for a predetermined amount of time. In these examples, packets can be distributed to a particular core 505 for five milliseconds or for any period of time determined by a user, program, system, administrator or otherwise. After the predetermined time period elapses, data packets are transmitted to a different core 505 for the predetermined period of time.

Flow-based data parallelism methods for distributing work, load or network traffic among the one or more cores 505 can comprise any combination of the above-mentioned examples. These methods can be carried out by any part of the appliance 200, by an application or set of executable instructions executing on one of the cores 505, such as the packet engine, or by any application, program or agent executing on a computing device in communication with the appliance 200.

The functional and data parallelism computing schemes illustrated in FIG. 5A can be combined in any manner to generate a hybrid parallelism or distributed processing scheme that encompasses function parallelism 500, data parallelism 540, flow-based data parallelism 520 or any portions thereof. In some cases, the multi-core system may use any type and form of load balancing schemes to distribute load among the one or more cores 505. The load balancing scheme may be used in any combination with any of the functional and data parallelism schemes or combinations thereof.

Illustrated in FIG. 5B is an example of a multi-core system 545, which may be any type and form of one or more systems, appliances, devices or components. This system 545, in some examples, can be included within an appliance 200 having one or more processing cores 505A-N. The system 545 can further include one or more packet engines (PE) or packet processing engines (PPE) 548A-N communicating with a memory bus 556. The memory bus may be used to communicate with the one or more processing cores 505A-N. Also included within the system 545 can be one or more network interface cards (NIC) 552 and a flow distributor 550 which can further communicate with the one or more processing cores 505A-N. The flow distributor 550 can comprise a Receive Side Scaler (RSS) or Receive Side Scaling (RSS) module 560.

Further referring to FIG. 5B, and in more detail, in one example the packet engine(s) 548A-N can comprise any portion of the appliance 200 described herein, such as any portion of the appliance described in FIGs. 2A and 2B. The packet engine(s) 548A-N can, in some examples, comprise any of the following elements: the packet engine 240, a network stack 267; a cache manager 232; a policy engine 236; a compression engine 238; an encryption engine 234; a GUI 210; a CLI 212; shell services 214; monitoring programs 216; and any other software or hardware element able to receive data packets from one of either the memory bus 556 or the one of more cores 505A-N. In some examples, the packet engine(s) 548A-N can comprise one or more vServers 275A-N, or any portion thereof. In other examples, the packet engine(s) 548A-N can provide any combination of the following functionalities: SSL VPN 280; Intranet UP 282; switching 284; DNS 286; packet acceleration 288; App FW 280; monitoring such as the monitoring provided by a monitoring agent 197; functionalities associated with functioning as a TCP stack; load balancing; SSL offloading and processing; content switching; policy evaluation; caching; compression; encoding; decompression; decoding; application firewall functionalities; XML processing and acceleration; and SSL VPN connectivity.

The packet engine(s) 548A-N can, in some examples, be associated with a particular server, user, client or network. When a packet engine 548 becomes associated with a particular entity, that packet engine 548 can process data packets associated with that entity. For example, should a packet engine 548 be associated with a first user, that packet engine 548 will process and operate on packets generated by the first user, or packets having a destination address associated with the first user. Similarly, the packet engine 548 may choose not to be associated with a particular entity such that the packet engine 548 can process and otherwise operate on any data packets not generated by that entity or destined for that entity.

In some instances, the packet engine(s) 548A-N can be configured to carry out the any of the functional and/or data parallelism schemes illustrated in FIG. 5A. In these instances, the packet engine(s) 548A-N can distribute functions or data among the processing cores 505A-N so that the distribution is according to the parallelism or distribution scheme. In some examples, a single packet engine(s) 548A-N carries out a load balancing scheme, while in other examples one or more packet engine(s) 548A-N carry out a load balancing scheme. Each core 505A-N, in one example, can be associated with a particular packet engine 505 such that load balancing can be carried out by the packet engine 505. Load balancing may in this example, require that each packet engine 505 associated with a core 505 communicate with the other packet engines 505 associated with cores 505 so that the packet engines 505 can collectively determine where to distribute load. One example of this process can include an arbiter that receives votes from each packet engine 505 for load. The arbiter can distribute load to each packet engine 505 based in part on the age of the engine's vote and in some cases a priority value associated with the current amount of load on an engine's associated core 505.

Any of the packet engines running on the cores may run in user mode, kernel or any combination thereof. In some examples, the packet engine operates as an application or program running is user or application space. In these examples, the packet engine may use any type and form of interface to access any functionality provided by the kernel. In some examples, the packet engine operates in kernel mode or as part of the kernel. In some examples, a first portion of the packet engine operates in user mode while a second portion of the packet engine operates in kernel mode. In some examples, a first packet engine on a first core executes in kernel mode while a second packet engine on a second core executes in user mode. In some examples, the packet engine or any portions thereof operates on or in conjunction with the NIC or any drivers thereof.

In some examples the memory bus 556 can be any type and form of memory or computer bus. While a single memory bus 556 is depicted in FIG. 5B, the system 545 can comprise any number of memory buses 556. In one example, each packet engine 548 can be associated with one or more individual memory buses 556.

The NIC 552 can in some examples be any of the network interface cards or mechanisms described herein. The NIC 552 can have any number of ports. The NIC can be designed and constructed to connect to any type and form of network 104. While a single NIC 552 is illustrated, the system 545 can comprise any number of NICs 552. In some examples, each core 505A-N can be associated with one or more single NICs 552. Thus, each core 505 can be associated with a single NIC 552 dedicated to a particular core 505. The cores 505A-N can comprise any of the processors described herein. Further, the cores 505A-N can be configured according to any of the core 505 configurations described herein. Still further, the cores 505A-N can have any of the core 505 functionalities described herein. While FIG. 5B illustrates seven cores 505A-G, any number of cores 505 can be included within the system 545. In particular, the system 545 can comprise "N" cores, where "N" is a whole number greater than zero.

A core may have or use memory that is allocated or assigned for use to that core. The memory may be considered private or local memory of that core and only accessible by that core. A core may have or use memory that is shared or assigned to multiple cores. The memory may be considered public or shared memory that is accessible by more than one core. A core may use any combination of private and public memory. With separate address spaces for each core, some level of coordination is eliminated from the case of using the same address space. With a separate address space, a core can perform work on information and data in the core's own address space without worrying about conflicts with other cores. Each packet engine may have a separate memory pool for TCP and/or SSL connections.

Further referring to FIG. 5B, any of the functionality and/or examples of the cores 505 described above in connection with FIG. 5A can be deployed in any example of the virtualized environment described above in connection with FIGs. 4A and 4B. Instead of the functionality of the cores 505 being deployed in the form of a physical processor 505, such functionality may be deployed in a virtualized environment 400 on any computing device 100, such as a client 102, server 106 or appliance 200. In other examples, instead of the functionality of the cores 505 being deployed in the form of an appliance or a single device, the functionality may be deployed across multiple devices in any arrangement. For example, one device may comprise two or more cores and another device may comprise two or more cores. For example, a multi-core system may include a cluster of computing devices, a server farm or network of computing devices. In some examples, instead of the functionality of the cores 505 being deployed in the form of cores, the functionality may be deployed on a plurality of processors, such as a plurality of single core processors.

In one example, the cores 505 may be any type and form of processor. In some examples, a core can function substantially similar to any processor or central processing unit described herein. In some example, the cores 505 may comprise any portion of any processor described herein. While FIG. 5A illustrates seven cores, there can exist any "N" number of cores within an appliance 200, where "N" is any whole number greater than one. In some examples, the cores 505 can be installed within a common appliance 200, while in other examples the cores 505 can be installed within one or more appliance(s) 200 communicatively connected to one another. The cores 505 can in some examples comprise graphics processing software, while in other examples the cores 505 provide general processing capabilities. The cores 505 can be installed physically near each other and/or can be communicatively connected to each other. The cores may be connected by any type and form of bus or subsystem physically and/or communicatively coupled to the cores for transferring data between to, from and/or between the cores.

While each core 505 can comprise software for communicating with other cores, in some examples a core manager (Not Shown) can facilitate communication between each core 505. In some examples, the kernel may provide core management. The cores may interface or communicate with each other using a variety of interface mechanisms. In some examples, core to core messaging may be used to communicate between cores, such as a first core sending a message or data to a second core via a bus or subsystem connecting the cores. In some examples, cores may communicate via any type and form of shared memory interface. In one example, there may be one or more memory locations shared among all the cores. In some examples, each core may have separate memory locations shared with each other core. For example, a first core may have a first shared memory with a second core and a second share memory with a third core. In some examples, cores may communicate via any type of programming or API, such as function calls via the kernel. In some examples, the operating system may recognize and support multiple core devices and provide interfaces and API for inter-core communications.

The flow distributor 550 can be any application, program, library, script, task, service, process or any type and form of executable instructions executing on any type and form of hardware. In some examples, the flow distributor 550 may any design and construction of circuitry to perform any of the operations and functions described herein. In some examples, the flow distributor distribute, forwards, routes, controls and/ors manage the distribution of data packets among the cores 505 and/or packet engine or VIPs running on the cores.. The flow distributor 550, in some examples, can be referred to as an interface master. In one example, the flow distributor 550 comprises a set of executable instructions executing on a core or processor of the appliance 200. In another example, the flow distributor 550 comprises a set of executable instructions executing on a computing machine in communication with the appliance 200. In some examples, the flow distributor 550 comprises a set of executable instructions executing on a NIC, such as firmware. In still other examples, the flow distributor 550 comprises any combination of software and hardware to distribute data packets among cores or processors. In one example, the flow distributor 550 executes on at least one of the cores 505A-N, while in other examples a separate flow distributor 550 assigned to each core 505A-N executes on an associated core 505A-N. The flow distributor may use any type and form of statistical or probabilistic algorithms or decision making to balance the flows across the cores. The hardware of the appliance, such as a NIC, or the kernel may be designed and constructed to support sequential operations across the NICs and/or cores.

In examples where the system 545 comprises one or more flow distributors 550, each flow distributor 550 can be associated with a processor 505 or a packet engine 548. The flow distributors 550 can comprise an interface mechanism that allows each flow distributor 550 to communicate with the other flow distributors 550 executing within the system 545. In one instance, the one or more flow distributors 550 can determine how to balance load by communicating with each other. This process can operate substantially similarly to the process described above for submitting votes to an arbiter which then determines which flow distributor 550 should receive the load. In other examples, a first flow distributor 550' can identify the load on an associated core and determine whether to forward a first data packet to the associated core based on any of the following criteria: the load on the associated core is above a predetermined threshold; the load on the associated core is below a predetermined threshold; the load on the associated core is less than the load on the other cores; or any other metric that can be used to determine where to forward data packets based in part on the amount of load on a processor.

The flow distributor 550 can distribute network traffic among the cores 505 according to a distribution, computing or load balancing scheme such as those described herein. In one example, the flow distributor can distribute network traffic or ;pad according to any one of a functional parallelism distribution scheme 550, a data parallelism load distribution scheme 540, a flow-based data parallelism distribution scheme 520, or any combination of these distribution scheme or any load balancing scheme for distributing load among multiple processors. The flow distributor 550 can therefore act as a load distributor by taking in data packets and distributing them across the processors according to an operative load balancing or distribution scheme. In one example, the flow distributor 550 can comprise one or more operations, functions or logic to determine how to distribute packers, work or load accordingly. In still other examples, the flow distributor 550 can comprise one or more sub operations, functions or logic that can identify a source address and a destination address associated with a data packet, and distribute packets accordingly.

In some examples, the flow distributor 550 can comprise a receive-side scaling (RSS) network driver, module 560 or any type and form of executable instructions which distribute data packets among the one or more cores 505. The RSS module 560 can comprise any combination of hardware and software, In some examples, the RSS module 560 works in conjunction with the flow distributor 550 to distribute data packets across the cores 505A-N or among multiple processors in a multi-processor network. The RSS module 560 can execute within the NIC 552 in some examples, and in other examples can execute on any one of the cores 505.

In some examples, the RSS module 560 uses the MICROSOFT receive-side-scaling (RSS) scheme. In one example, RSS is a Microsoft Scalable Networking initiative technology that enables receive processing to be balanced across multiple processors in the system while maintaining in-order delivery of the data. The RSS may use any type and form of hashing scheme to determine a core or processor for processing a network packet.

The RSS module 560 can apply any type and form of hash function such as the Toeplitz hash function. The hash function may be applied to the hash type or any the sequence of values. The hash function may be a secure hash of any security level or is otherwise cryptographically secure. The has function may use a hash key. The size of the key is dependent upon the hash function. For the Toeplitz hash, the size may be 40 bytes for IPv6 and 16 bytes for IPv4.

The hash function may be designed and constructed based on any one or more criteria or design goals. In some examples, a hash function may be used that provides an even distribution of hash result for different hash inputs and different hash types, including TCP/IPv4, TCP/IPv6, IPv4, and IPv6 headers. In some examples, a hash function may be used that provides a hash result that is evenly distributed when a small number of buckets are present (for example, two or four). In some examples, hash function may be used that provides a hash result that is randomly distributed when a large number of buckets were present (for example, 64 buckets). In some examples, the hash function is determined based on a level of computational or resource usage. In some examples, the hash function is determined based on ease or difficulty of implementing the hash in hardware. In some examples, the hash function is determined bases on the ease or difficulty of a malicious remote host to send packets that would all hash to the same bucket.

The RSS may generate hashes from any type and form of input, such as a sequence of values. This sequence of values can include any portion of the network packet, such as any header, field or payload of network packet, or portions thereof. In some examples, the input to the hash may be referred to as a hash type and include any tuples of information associated with a network packet or data flow, such as any of the following: a four tuple comprising at least two IP addresses and two ports; a four tuple comprising any four sets of values; a six tuple; a two tuple; and/or any other sequence of numbers or values. The following are example of hash types that may be used by RSS:
- 4-tuple of source TCP Port, source IP version 4 (IPv4) address, destination TCP Port, and destination IPv4 address. This is the only required hash type to support.
- 4-tuple of source TCP Port, source IP version 6 (IPv6) address, destination TCP Port, and destination IPv6 address.
- 2-tuple of source IPv4 address, and destination IPv4 address.
- 2-tuple of source IPv6 address, and destination IPv6 address.
- 2-tuple of source IPv6 address, and destination IPv6 address, including support for parsing IPv6 extension headers.

The hash result or any portion thereof may used to identify a core or entity, such as a packet engine or VIP, for distributing a network packet. In some examples, one or more hash bits or mask are applied to the hash result. The hash bit or mask may be any number of bits or bytes. A NIC may support any number of bits, such as seven bits. The network stack may set the actual number of bits to be used during initialization. The number will be between 1 and 7, inclusive.

The hash result may be used to identify the core or entity via any type and form of table, such as a bucket table or indirection table. In some examples, the number of hash-result bits are used to index into the table. The range of the hash mask may effectively define the size of the indirection table. Any portion of the hash result or the hast result itself may be used to index the indirection table. The values in the table may identify any of the cores or processor, such as by a core or processor identifier. In some examples, all of the cores of the multi-core system are identified in the table. In other examples, a port of the cores of the multi-core system are identified in the table. The indirection table may comprise any number of buckets for example 2 to 128 buckets that may be indexed by a hash mask. Each bucket may comprise a range of index values that identify a core or processor. In some examples, the flow controller and/or RSS module may rebalance the network rebalance the network load by changing the indirection table.

In some examples, the multi-core system 575 does not include a RSS driver or RSS module 560. In some of these examples, a software steering module (Not Shown) or a software example of the RSS module within the system can operate in conjunction with or as part of the flow distributor 550 to steer packets to cores 505 within the multi-core system 575.

The flow distributor 550, in some examples, executes within any module or program on the appliance 200, on any one of the cores 505 and on any one of the devices or components included within the multi-core system 575. In some examples, the flow distributor 550' can execute on the first core 505A, while in other examples the flow distributor 550" can execute on the NIC 552. In still other examples, an instance of the flow distributor 550' can execute on each core 505 included in the multi-core system 575. In this example, each instance of the flow distributor 550' can communicate with other instances of the flow distributor 550' to forward packets back and forth across the cores 505. There exist situations where a response to a request packet may not be processed by the same core, i.e. the first core processes the request while the second core processes the response. In these situations, the instances of the flow distributor 550' can intercept the packet and forward it to the desired or correct core 505, i.e. a flow distributor instance 550' can forward the response to the first core. Multiple instances of the flow distributor 550' can execute on any number of cores 505 and any combination of cores 505.

The flow distributor may operate responsive to any one or more rules or policies. The rules may identify a core or packet processing engine to receive a network packet, data or data flow. The rules may identify any type and form of tuple information related to a network packet, such as a 4-tuple of source and destination IP address and source and destination ports. Based on a received packet matching the tuple specified by the rule, the flow distributor may forward the packet to a core or packet engine. In some examples, the packet is forwarded to a core via shared memory and/or core to core messaging.

Although FIG. 5B illustrates the flow distributor 550 as executing within the multi-core system 575, in some examples the flow distributor 550 can execute on a computing device or appliance remotely located from the multi-core system 575. In such an example, the flow distributor 550 can communicate with the multi-core system 575 to take in data packets and distribute the packets across the one or more cores 505. The flow distributor 550 can, in one example, receive data packets destined for the appliance 200, apply a distribution scheme to the received data packets and distribute the data packets to the one or more cores 505 of the multi-core system 575. In one example, the flow distributor 550 can be included in a router or other appliance such that the router can target particular cores 505 by altering meta data associated with each packet so that each packet is targeted towards a sub-node of the multi-core system 575. In such an example, CISCO's vn-tag mechanism can be used to alter or tag each packet with the appropriate meta data.

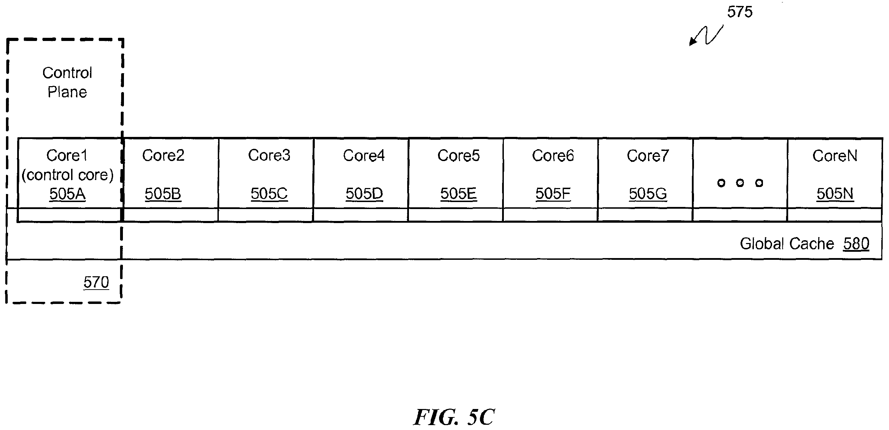

Illustrated in FIG. 5C is an example of a multi-core system 575 comprising one or more processing cores 505A-N. In brief overview, one of the cores 505 can be designated as a control core 505A and can be used as a control plane 570 for the other cores 505. The other cores may be secondary cores which operate in a data plane while the control core provides the control plane. The cores 505A-N may share a global cache 580. While the control core provides a control plane, the other cores in the multi-core system form or provide a data plane. These cores perform data processing functionality on network traffic while the control provides initialization, configuration and control of the multi-core system.

Further referring to FIG. 5C, and in more detail, the cores 505A-N as well as the control core 505A can be any processor described herein. Furthermore, the cores 505A-N and the control core 505A can be any processor able to function within the system 575 described in FIG. 5C. Still further, the cores 505A-N and the control core 505A can be any core or group of cores described herein. The control core may be a different type of core or processor than the other cores. In some examples, the control may operate a different packet engine or have a packet engine configured differently than the packet engines of the other cores.

Any portion of the memory of each of the cores may be allocated to or used for a global cache that is shared by the cores. In brief overview, a predetermined percentage or predetermined amount of each of the memory of each core may be used for the global cache. For example, 50% of each memory of each code may be dedicated or allocated to the shared global cache. That is, in the illustrated example, 2GB of each core excluding the control plane core or core 1 may be used to form a 28GB shared global cache. The configuration of the control plane such as via the configuration services may determine the amount of memory used for the shared global cache. In some examples, each core may provide a different amount of memory for use by the global cache. In other examples, any one core may not provide any memory or use the global cache. In some examples, any of the cores may also have a local cache in memory not allocated to the global shared memory. Each of the cores may store any portion of network traffic to the global shared cache. Each of the cores may check the cache for any content to use in a request or response. Any of the cores may obtain content from the global shared cache to use in a data flow, request or response.

The global cache 580 can be any type and form of memory or storage element, such as any memory or storage element described herein. In some examples, the cores 505 may have access to a predetermined amount of memory (i.e. 32 GB or any other memory amount commensurate with the system 575.) The global cache 580 can be allocated from that predetermined amount of memory while the rest of the available memory can be allocated among the cores 505. In other examples, each core 505 can have a predetermined amount of memory. The global cache 580 can comprise an amount of the memory allocated to each core 505. This memory amount can be measured in bytes, or can be measured as a percentage of the memory allocated to each core 505. Thus, the global cache 580 can comprise 1 GB of memory from the memory associated with each core 505, or can comprise 20 percent or one-half of the memory associated with each core 505. In some examples, only a portion of the cores 505 provide memory to the global cache 580, while in other examples the global cache 580 can comprise memory not allocated to the cores 505.

Each core 505 can use the global cache 580 to store network traffic or cache data. In some examples, the packet engines of the core use the global cache to cache and use data stored by the plurality of packet engines. For example, the cache manager of FIG. 2A and cache functionality of FIG. 2B may use the global cache to share data for acceleration. For example, each of the packet engines may store responses, such as HTML data, to the global cache. Any of the cache managers operating on a core may access the global cache to server caches responses to client requests.

In some examples, the cores 505 can use the global cache 580 to store a port allocation table which can be used to determine data flow based in part on ports. In other examples, the cores 505 can use the global cache 580 to store an address lookup table or any other table or list that can be used by the flow distributor to determine where to direct incoming and outgoing data packets. The cores 505 can, in some examples read from and write to cache 580, while in other examples the cores 505 can only read from or write to cache 580. The cores may use the global cache to perform core to core communications.

The global cache 580 may be sectioned into individual memory sections where each section can be dedicated to a particular core 505. In one example, the control core 505A can receive a greater amount of available cache, while the other cores 505 can receiving varying amounts or access to the global cache 580.

In some examples, the system 575 can comprise a control core 505A. While FIG. 5C illustrates core 1 505A as the control core, the control core can be any core within the appliance 200 or multi-core system. Further, while only a single control core is depicted, the system 575 can comprise one or more control cores each having a level of control over the system. In some examples, one or more control cores can each control a particular aspect of the system 575. For example, one core can control deciding which distribution scheme to use, while another core can determine the size of the global cache 580.

The control plane of the multi-core system may be the designation and configuration of a core as the dedicated management core or as a master core. This control plane core may provide control, management and coordination of operation and functionality the plurality of cores in the multi-core system. This control plane core may provide control, management and coordination of allocation and use of memory of the system among the plurality of cores in the multi-core system, including initialization and configuration of the same. In some examples, the control plane includes the flow distributor for controlling the assignment of data flows to cores and the distribution of network packets to cores based on data flows. In some examples, the control plane core runs a packet engine and in other examples, the control plane core is dedicated to management and control of the other cores of the system.

The control core 505A can exercise a level of control over the other cores 505 such as determining how much memory should be allocated to each core 505 or determining which core 505 should be assigned to handle a particular function or hardware/software entity. The control core 505A, in some examples, can exercise control over those cores 505 within the control plan 570. Thus, there can exist processors outside of the control plane 570 which are not controlled by the control core 505A. Determining the boundaries of the control plane 570 can include maintaining, by the control core 505A or agent executing within the system 575, a list of those cores 505 controlled by the control core 505A. The control core 505A can control any of the following: initialization of a core; determining when a core is unavailable; re-distributing load to other cores 505 when one core fails; determining which distribution scheme to implement; determining which core should receive network traffic; determining how much cache should be allocated to each core; determining whether to assign a particular function or element to a particular core; determining whether to permit cores to communicate with one another; determining the size of the global cache 580; and any other determination of a function, configuration or operation of the cores within the system 575.

### F. Systems and methods for managing large cache services in a multi-core environment

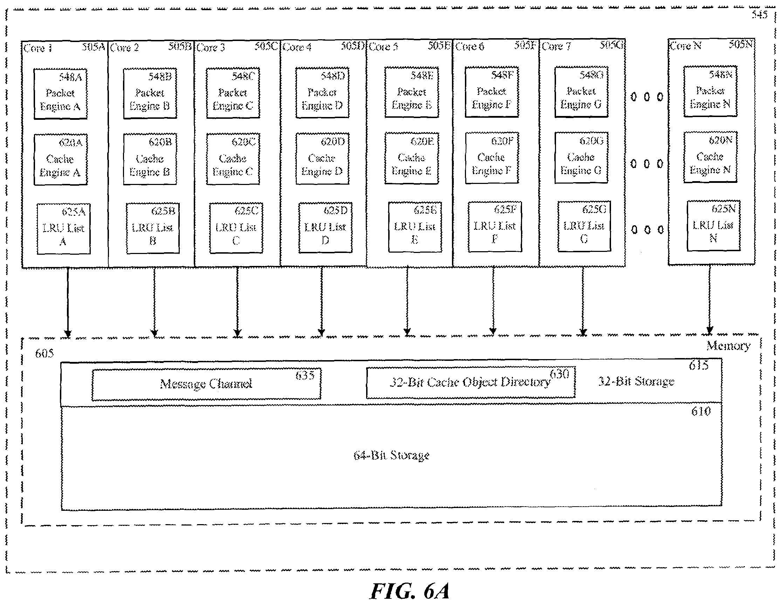

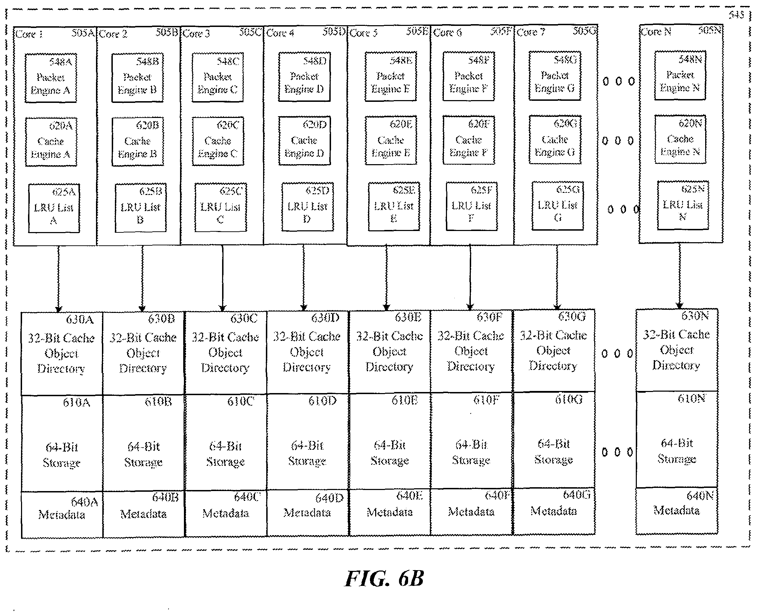

FIG. 6A and FIG. 6B illustrate examples and embodiments of a multi-core system 545 that uses a 64-bit memory store 610 and a 32-bit memory 615 with a 32-bit object directory 630. In some examples, the 64-bit memory storage 610 can be any 64-bit memory store, and can be accessed by any core 505 in the multi-core system 545. While FIG. 6A illustrates a general example of a system 545 that uses a 64-bit memory storage 610, FIG. 6B illustrates an embodiment of a system 545 where each core 505 can access a particular instance of the 32-bit cache object directory 630 and 64-bit cache storage 610.

Illustrated in FIG. 6A is one example of a multi-core system 545. The multi-core system 545 can include one or more cores 505A-505N (generally 505) that can execute one or more packet engines 548A-548N (generally 548.) In some examples, each core 505 can execute a cache engine 620A-620N (generally 620) and access a least-recently-used (LRU) list 625A-625N (generally 625) of that core 505. The cores 505 of the multi-core system 545, in some examples can access memory 605 which can include a 32-bit memory storage 615 with a 32-bit cache object directory 630 and a 64-bit cache storage 610.

Further referring to FIG. 6A, and in more detail, in some examples the multi-core system 545 can be implemented on an appliance 200 such as any appliance or device. In other examples, the multi-core system 545 can be implemented on any appliance 200 described herein. In still other examples, the multi-core system 545 can be implemented on any computing device such as any computing device 100 described herein.

The multi-core system 545 can communicate with one or more clients or client machines (Not Shown). These clients can be a client machine, a server or any computing device that can communicate with the multi-core system 545.

In some examples, the multi-core system 545 can include one or more processing cores 505. The processing core 505 can be any processor. In other examples, the processing core 505 can be any processor or processing core described herein. While FIG 6A illustrates a multi-core system 545 including seven or more processing cores 505, in other examples the multi-core system 545 can include any number of processing cores 505, e.g. one processing core, two processing cores, more than two processing cores.

Each processing core 505, in some examples, can execute a packet engine 548. The packet engine 548 can be referred to as a vServer, VIP server, or just VIP. In some examples, the packet engine 548 can be any packet engine 548 described herein. In some examples, the packet engine 548 may execute one or more vServers 275, examples of which are described herein.

Cores 505, in some examples, can communicate with one another using core-to-core messaging. In one example, core-to-core messaging can be carried out via a messaging protocol employed by a messaging application (Not Shown). In some examples, the messaging application can execute on one core 505, while in other examples each core can execute an instance of the messaging application.

In one example, each core 505 can execute a cache engine 620. In some examples, the cache engine 620 can execute outside of the packet engine 548, while in other examples the cache engine 620 can execute within the context of the packet engine 548. In one example, a cache engine 620 can include a network interface that can be used to receive requests to store to cache memory and read from cache memory. In some examples, the cache engine 620 can use the network interface to download objects into memory 605. In one example, the cache engines 620 do not communicate with each other, but rather can communicate through the packet engines 548. In other examples, the cache engines 620 can communicate with each other. Cache engines 620 can communicate through a shared memory buffer (Not Shown) included in memory 605. In other examples, cache engines 620 can communicate using core-to-core messaging. Each core 505 can execute a cache engine 620, while in other examples each core having cache memory can execute a cache engine 620. In some examples, the cache engine may comprise any examples of cache manager 232 previously described herein.

Cache engines 620 can communicate with each other using a shared memory buffer (Not Shown) in some examples, the shared memory buffer may be used to achieve a performance goal, e.g. freeing up un-used memory or deleting cache directory objects that do not correspond to a cached object. In other examples, the cache engines 620 can use core-to-core messaging to synchronize memory, data and/or processes amongst the one or more cache engines 620. The synchronization activity amongst the cores 505 can occur asynchronously in the background. Thus, the core-to-core messaging amongst the cache engines 620 can facilitate the synchronization activity and/or process.

When synchronizing memory amongst the cache engines 620, in some examples, the memory synchronization can occur in a single-write, multiple-reader mode. Thus, a single writer can write to a single memory cell, while multiple readers can read from a single memory cell. In this example, the single write and multiple readers can be cache engines 620, packet engines 548 and/or cores 505 of the multi-core system 545. The cache engines 620, in some examples, can carry out a single-write mode by revealing a write only after the write occurs. For example, if a cache engine 620 or packet engine 548 of a core 505 updates a memory location A and then updates a memory location B, the updates made to memory location B are not available to other cache engines 620, packet engines 548 and/or cores 505 until the updates made to memory location A. In this example, the single-write mode can include an ordered write property that permits reads of updated memory cells according to the order in which the cells are updated.

When more than one cache engine 620, core 505 or packet engine 548 tries to write to the same memory location or cell the multiple cache engines 620 may be prevented from entering a spin-wait loop. In some examples, a spin-wait loop can be a state whereby each cache engine 620 waits for the other cache engine(s) 620 to write to the location. While waiting, the cache engine(s) 620 may continue to access resources and in some examples may continue to try to write to the memory location. To reduce the strain on resources, the system 545 may prevent the waiting cache engines 620 from entering a spin-wait loop by blocking their access to resources. When the initial cache engine 620 stops writing to the memory location, the cache engines 620 can be permitted to access resources and write to the memory location. In some examples, the system 545 may message the waiting cache engine 620 to indicate that the memory location is not available. These examples can occur when there are multiple, highly contentious writers to the same memory location. In still other examples, multiple cache engines 620 attempting to write to the same memory location may be permitted to enter a spin-wait loop lock where the multiple cache engines 620 remain in the wait loop until the memory location is free. In many examples, the methods and systems used to address multiple, simultaneous writes to a single memory location can include one or more safeguards against the false sharing of cache between cache engines 620.

Each cache engine 620, in some examples, can manage its own list (Not Shown) of free buffers in the 64-bit memory 610. In some examples, a cache engine 620 can only write to its own free buffer list. In other examples, a cache engine 620 can write to any cache engine's free buffer list. This list of free memory buffers can be populated each time the appliance 200 and/or system 545 boots. Thus, when the appliance 200 boots each cache engine 620 can populate a cache engine list with a list of the memory buffers that do not contain stored data. In some examples, the cache engine 620 can maintain this list in the 32-bit memory 615, while in other examples the cache engine 620 can maintain this list in the 64-bit memory 610. The cache engines 620 can update the list of free buffers in response to certain events, or periodically. In some examples, the cache engines 620 can update the free buffer list when the cache engine 620 performs a system check to determine whether the amount of available memory 605 is out of balance. An out of balance memory 605 can include a memory 605 where one core 505 has a predetermined amount more of memory than another core 505, or when the amount of memory available for one core 505 falls below a predetermined threshold. Upon determining that at least one core 505 has an amount of memory 605 below a predetermined threshold, a cache engine 620 can donate memory to that core 505 by removing one or more buffers from the cache engines 620 free buffer list and sending that buffer to a cache engine 620 on the identified core 505. For example, if a cache engine 620A executing on a first core 505A determines that the amount of memory available to another core 505F is less than a predetermined threshold, the cache engine 620A can free one or more buffers from the cache engine's free buffer list. Upon freeing the one or more buffers, the cache engine 620A can send a message to the cache engine 620F on the other core 505F indicating that the buffers are now available. The other cache engine 620F can then include the freed buffers in the cache engine's list of free buffers.

While in some examples the freed buffer list managed by each cache engine 620 can be a separate list, in other examples the freed buffer list can be included in the LRU list 625 of each core 505. In other examples, the freed buffer list can be stored in 32-bit memory 615, while in still other examples the freed buffer list can be stored in 64-bit memory 610.

In some examples, each cache engine 620 can manage a list of queued cells that have data to send to hit-clients. This list can be written and managed by those cache engines 620 that handle a miss, and can be read by those cache engines 620 that serve hits. Thus, when a cache engine 620 fails to identify an object in a cache object directory 630, the cache engine can serve a miss indicating the object was not found and can further create the object and insert the object in a local instance of the cache object directory 630. In some examples, this cache engine 620 can be referred to as an owner cache engine 620 an can manage a list of queued cell data. There can, in some examples, be (n^2) lists - one for each (cache engine m, cache engine n) pair. Thus, when an owner cache engine (cache engine m) receives new data for a cache cell that is a miss, the cache engine can put the cell on each of the other cache engine's list.

In some examples, each memory cell can also have a list per cache engine where the memory cell can queue cache engine - protocol control block connections. Thus, each protocol control block that downs the object stored in the memory cell can be placed on this list. A connection can be removed from this list when a connection waits for a client to acknowledge data and open a window.

In some examples, a communication channel 635 can be included in the 32-bit memory storage 615. The communication channel 635, in some examples, can be a shared memory buffer that each cache engine 620 and/or packet engine 548 can access. In one example, the communication channel 635 can have a fixed capacity that can be allocated at boot time. In other examples, the communication channel 635 can have a variable capacity. Each of the cache engines 620 can transmit data and messages to the other cache engines 620 using this communication channel 635. In some examples, when there is no memory or space available in the communication channel 635, a cache engine 620 can begin a spin cycle during which the cache engine 620 continuously tries to write to the communication channel 635. To avoid a drain on resources that can be caused by the spin cycle, a message can be generated and stored in the communication channel 635 indicating that there is no available write memory. This message can cause the cache engine 620 to wait for available memory. In some examples, this message can cause the cache engine 620 to try and free available resources. The messages can, in some examples, be sent to the cache engines 620 via interrupts or another form of messaging. In some examples, the communication channel 635 can be a ring buffer that permits a single reader and a single writer. In other examples, the communication channel 635 can be any type of buffer and can permit a single writer and multiple readers.

In some examples, the cores 505, the packet engines 548, the cache engines 620 and other components of the multi-core system 545 can access memory 605. The memory can be any memory, or in some examples any type of memory described herein. In one example, the memory 605 includes 32-bit memory 615 and 64-bit memory 610. In some examples, the components executing on each core 505 has access to the memory 605. In other examples, each core 505 can access a portion of the memory 605 allocated to that core 505. In still other examples, at least a portion of the memory 605 can be shared amongst the cores 505. The shared memory portion, in some examples, can be used to carry out core-to-core messaging.

The cores 505 can access a 32-bit memory 615. In some examples, the 32-bit memory 615 can be shared amongst the cores 505, while in other examples sections of the 32-bit memory 615 can be allocated to each core 505. In still other examples, a portion of the 32-bit memory 615 can be shared amongst the cores 505, while substantially the rest of the 32-bit memory 615 can be allocated to each core 505. In some examples, the 32-bit memory 615 can be a memory that has 32-bit memory registers or data elements, or a memory that uses 32-bit memory addresses. In other examples the 32-bit memory 615 can include a cache object directory 630 along with other data elements such as a LRU list 625 and/or a cache engine free buffer list.

The 32-bit memory 615 can include a 32-bit cache object directory 630 for storing cache directory objects. The cache object directory 630, in one example, can be a hash table that stores one or more hash values generated by applying a hash algorithm to a group of object attributes. In one example, the cache object directory 630 can further include metadata associated with each cache directory object. The 32-bit cache object directory 630 can be a hash table that includes 1 million to 10 million slots. In some examples, the 32-bit cache object directory 630 can include any number of slots. An instance of a 32-bit cache object directory 630 may be updated by a cache engine 620 that owns the instance of the 32-bit cache object directory 630. Thus, in some examples only the owner cache engine 620 can insert or delete objects from that cache engine's cache object directory 630. In other examples, an administrative cache engine 620 can insert and/or delete objects from any cache engine's cache object directory 630. In still other examples, any cache engine 620 can modify any other cache engine's cache object directory 630. Each instance of the cache object directory 630, in some examples, can be searched and read by any cache engine 620. Thus, in some examples the cache object directory 630 can be a single-write, multiple-read hash table. In one example, each object in the cache object directory 630 may be presumed to have valid fields and may not be destroyed.

The 32-bit cache object directory 630 can be a hash table that can store one or more hash values. Therefore in some examples, the cache directory objects can be hash values that represent an object stored in the 64-bit cache storage 610. In some examples, the cache directory object can be a hash value generated by applying a hash algorithm to one or more attributes of the stored object. These attributes, in one example, can include a memory address or memory register value. When searching for a cache directory object, a cache engine 620 can use a hash key and query the hash table for a hash value that corresponds to the hash key.

In some examples, the cores 505 can access a 64-bit memory 610. In some examples, the 64-bit memory 610 can be shared amongst the cores 505, while in other examples sections of the 64-bit memory 610 can be allocated to each core 505. In still other examples, a portion of the 64-bit memory 610 can be shared amongst the cores 505, while substantially the rest of the 64-bit memory 610 can be allocated to each core 505. In some examples, the 64-bit memory 610 can be a memory that has 64-bit memory registers or data elements, or a memory that uses 64-bit memory addresses. The 64-bit memory 610, in some examples, can include one or more memory buffers. These memory buffers can be any size, and in some examples the memory buffers can be 2K, 4K, 8K, etc. sized memory buffers. In some examples, a kernel of the system 545 can execute within the 64-bit memory space.

When objects are stored in the 64-bit storage 610, the objects can be stored in a content group. In some examples, content groups are entities that store cached objects. Content groups, in some examples, can store one or more object properties of the objects included in the content group. These properties can be read at runtime to identify the properties and attributes of the objects in cache. Content groups can also include statistics such as the number of objects included in the content group, and the amount of memory used by the content group. A content group can have policies that may be evaluated when cache is searched to determine whether or not a cache search has identified a requested cached object. In some examples, content groups can be configured, added, deleted or otherwise modified by one or more configuration commands. In some examples, a single packet engine 548 can operate to configure a content group. Therefore in this example, other packet engines 548 either do not have access to the configuration commands to configure a content group, or are not permitted to issue configuration commands to modify a content group. In many examples, each cache memory cell, buffer or element points to a content group.

Updates to content group statistics may occur once per storable miss. Further, at runtime, content group statistics can be verified and maintained using addition and subtraction commands. The content group and the content group data can, in some examples, be stored in a shared memory element 605 accessible by each core 505, packet engine 548 and/or cache engine 620. In some examples, each element or time entity referred to by a content group may be shared so that each cache engine 620 has access to this information. Each core 505, packet engine 548 and/or cache engine 620 may maintain a separate copy of the caching policies for each content group.

32-bit memory addresses and applications may be incompatible with 64-bit memory addresses and applications. Thus, in some examples the system 545 can include one or more applications that execute to link the 32-bit memory addresses and applications with the 64-bit memory addresses and applications. In one example, one or more packet engines 548 can execute a set of dynamic linking commands that can update the packet engine 548 processes with the addresses of the 64-bit functions in the kernel.

A least-recently-used (LRU) list 625 can be any list that tracks the least-recently-used objects in the cache object directory 630. In some examples, each cache engine 620 can maintain a LRU list 625 that tracks which cache objects have available memory and which objects have a memory amount below a predetermined threshold. In some examples, the LRU list 625 can be the free buffer list maintained by each cache engine 620. In other examples, the LRU list 625 can be an ordering of each of the least used memory cells and/or buffers in the 64-bit memory 610. Objects listed in the LRU list 625, in some examples, can be freed synchronously, while in other examples objects can be freed asynchronously. When a cache engine 620 determines that additional memory is needed, that cache engine 620 can defer an object listed in the LRU list 625. In some examples, the selected object can be the object not used or otherwise accessed for a longer period of time than any other object in the LRU list 625. In other examples, the selected object can be any object in the LRU list 625.

Illustrated in FIG. 6B is an embodiment of a multi-core system 545 configured to use a 64-bit cache storage 610 and a 32-bit storage 615. In this embodiment, each core 505 can be allocated an instance of the 32-bit cache object directory 630A-630N (generally 630) and view of the 64-bit storage 610A-610N (generally 610.) Further each core 505 can have a section of memory allocated to store metadata 640A-640N (generally 640) associated with the cache directory objects stored in the 32-bit cache object directory 630. In some embodiments, the 64-bit cache storage is shared and accessible to the plurality of cores and/or packet engines on each core. In some embodiments, the 32-bit storage is shared and accessible to the plurality of cores and/or packet engines on each core.

Further referring to FIG. 6B, and in more detail, in one embodiment each core 505 and each cache engine 620 can access a specific instance of the 32-bit cache object directory 630. For example, a cache engine 620A on one core 505A can access an instance of the 32-bit cache object directory 630A of that particular core 505A. Cores 505 and therefore cache engines 620 may not modify the cache object directory 630 of another core 505. For example, a cache engine 620D on one core 505D can modify its own instance of the cache object directory 630D, but cannot modify other instances of the cache object directory 630E.

In some embodiments, each core 505 may have access to the full 64-bit memory 610. Thus, in some embodiments, each core 505 and cache engine 620 can view the entire 64-bit memory space. In other embodiments, portions of the 64-bit memory 610 can be allocated to each core 505.

In some embodiments, the cache directory objects stored in the cache object directory 630 can have metadata 640. This metadata 640 can be stored in the 32-bit memory 615, or the 64-bit memory. In other embodiments, the metadata 640 can be stored in the cache object directory 630.

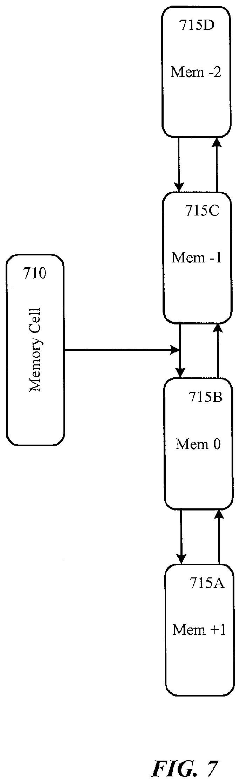

Illustrated in FIG. 7 is one example of a memory architecture that uses staging cells. In some examples, a memory cell 710 can use one or more staging cells 715A-715D (generally 715) which can be additional memory cells that hang off of the base memory cell 710. These staging cells 715 can hang off of a base memory cell 710 in a vertical chain or other chain configuration. Staging cells 715, in some examples, can be used when a response is being downloaded to a memory cell 710 while that memory cell 710 is being used by another process or cache engine 620.

Further referring to FIG. 7, and in more detail, staging cells 715 can be created subsequent to one or more scenarios. In one example, one or more staging cells 715 can be created when an object has to be pre-fetched. In this example, a cache engine 620 can initiate a storable miss rather than serve a hit. This storable miss can be stored in one or more staging cells 715. In another example, one or more staging cells 715 can be created when an object has already triggered a hit or a miss, and the cache engine 720 can generate a storable miss and store that miss in one or more staging cells 715.

In some examples, staging cells 715 can be configured so that each staging cell 715 points to the previous staging cell and the subsequent staging cell. This configuration can be accomplished by including in each staging cell 715 a pointer indicating a previous memory cell and a subsequent memory cell. Including pointers in the staging cells to point to the previous and next staging cell, can enable each of the staging cells to share information with one another. For example, were a staging cell 715 to be marked by for deletion, a determination would first be made as to whether response data or any other data is shared between the staging cell 715 marked for deletion and the previous and next staging cell 715.

A staging cell 715, in some examples, can be created or allocated by a cache engine 620. In other examples a staging cell 715 can be created or allocated by a packet engine 548. In one example, a staging cell 715 can be created after a determination is made that a miss lock was acquired. This determination may be required because in a multi-threaded system, e.g. the described multi-core system 545, a particular cache engine 620 may not be able to handle a miss operation on a hash chain because that cache engine 620 may not own the cache object directory 630 where the actual cache directory object resides.

In some examples, a cache engine 620 may obtain a miss lock on a cache directory object in its own cache object directory 630 when that cache directory object cannot be located or when that cache directory object is not free. In some examples, the cache engine 620, upon acquiring the miss lock on the cache directory object, can create a +1 memory element off of the memory element on which the cache engine 620 obtained the miss lock. This +1 memory element can be inserted in the cache engine's cache object directory 630 and can, in some examples, be a staging cell 715 off of the memory cell holding the cache directory object that was not found or that was not free. In some examples, the cache engine 620 can then delete the initial memory cell holding the cache directory object and install the +1 object into the cache engine's local cache object directory 630.

In some examples, the staging cell 715 chain illustrated in FIG. 7 can be referred to as a doubly linked list. This list can be operated on by multiple threads or cache engines 620 without using locks. In some examples, each staging chain of staging cells 715 can be owned by a particular cache engine 620. The cache engine 620 owner, in some examples, can be the result of a common hash value included in each staging cell 715. This hash value can be used not only to determine the staging cell chain owner, but also can be used during cache hit evaluation. This owner cache engine 620, in some examples, can be responsible for removing cells from the staging chain 715, e.g. deleting or destroying objects stored in the staging cells 715. In other examples, the owner cache engine 620 can also add staging cells 715 to the staging cell chain. Adding a staging cell 715 to the staging cell chain can include adding cells when a miss occurs and/or adding staging cells 715 to the end of the staging cell chain. When an owner cache engine 620 adds staging cells to the staging cell chain, the owner cache engine 620 can first acquire a miss lock on at least one end of the staging cell chain, as well as at least one staging cell 715. In some examples, the owner cache engine 620 may verify that the cells are not being destroyed or processed, prior to adding a staging cell 715 to the staging cell chain.

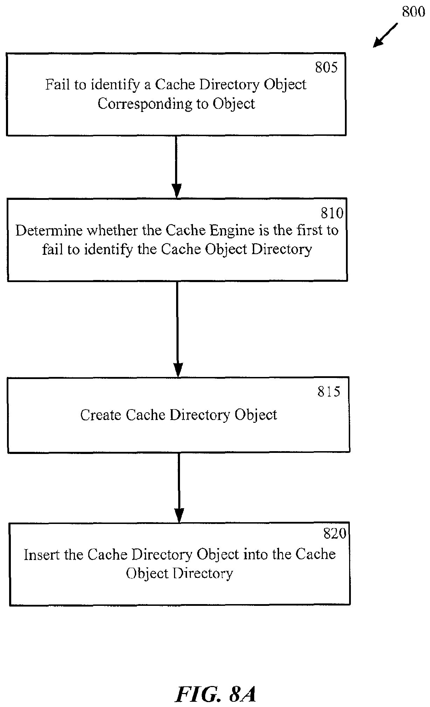

Illustrated in FIG. 8A is one example of a method 800 for creating and inserting a cache directory object into an instance of the 32-bit cache object directory 630. A cache engine 620 can receive a request to access an object stored in the 64-bit cache storage 610. The cache engine 620 fails to identify a cache directory object in the cache engine's cache object directory 630 that corresponds to the requested object (Step 805). The cache engine 620 then determines whether the cache engine 620 is the first cache engine 620 to fail to identify a cache directory object corresponding to the object (Step 810). The cache engine 620 creates a cache directory object that corresponds to the object (Step 815) and inserts the cache directory object into an instance of the cache object directory 630 (Step 820).

Further referring to FIG. 8A, and in more detail, in some examples the method 800 can be carried out by any cache engine 620. In one example, the method 800 can be carried out by any cache engine 620 executing within the context of a packet engine 548.

In one example a cache engine 620 can fail to identify a cache directory object in that cache engine's instance of the cache object directory 630 (Step 805). In some examples, a cache engine 620 can search for a cache directory object that corresponds to a requested or recently stored object. This request can be a HTTP request for an object stored in the 64-bit cache storage 610. The object can be any object stored in the 64-bit cache storage 610. In some examples, searching for the stored object can include applying a hash function to one or more attributes of the stored object to generate a hash key. The attributes, in some examples, can include a memory address or register. In one example, searching for the cache directory object can include using a calculated hash key to search a hash table for a hash value that corresponds to the hash key. Failing to identify the cache directory object can include triggering a storable miss, which can be a message or response transmitted to the cache engine 620 indicating that the requested cache directory object was not identified. A miss, in some examples, can be issued or triggered when an object is not found. In one example, the cache engine 620 can search each cache object directory 630 and determine a failure to identify a cache directory object corresponding to the stored object after searching through each core's cache object directory 630.

In some examples, the cache engine 620 can determine whether the cache engine 620 is the first cache engine 620 to fail to identify a cache directory object that corresponds to the stored object (Step 810). The cache engine 620, in some examples, can make this determination upon failing to identify the cache directory object in an instance of the cache engine's cache object directory 630. In other examples, the cache engine 620 can make this determination upon failing to identify the cache directory object in each instance of the cache object directory 630. Determining whether the cache engine 620 is the first cache engine 620 to fail to identify the cache directory object can include messaging each cache engine 620 to determine whether a miss was issued. In some examples, this determination can include determining whether the cache engine 620 is the first cache engine 620 to fail to identify the cache directory object responsive to a HTTP request for a particular object. Determining whether the cache engine 620 is the first cache engine 620 can include determining whether the cache engine 620 is the first cache engine 620 to trigger a fresh storable miss in response to trying to identify the cache directory object responsive to a particular HTTP request.

Determining that the cache engine 620 is the first cache engine 620 to fail to identify the cache directory object can include reviewing a hash chain pointer shared by each cache engine 620. In some examples, the head pointer of each cache object directory 630 can be a pointer shared and/or accessible to each cache engine 620. Thus, by reviewing the head pointer, the cache engine 620 can determine whether another cache engine 620 has already created a cache directory object that corresponds to the requested object. When, in some examples, the cache engine 620 identifies a pointer that indicates the cache directory object was already created by another cache engine 620, the cache engine 620 may not create or insert the cache directory object.

The cache engine 620 can create a cache directory object that corresponds to the requested object (Step 815). In some examples, the cache engine 620 can create the cache directory object upon determining that the cache engine 620 is the first cache engine 620 to fail to identify the cache directory object. Creating the cache directory object can include identifying one or more attributes of the requested object and applying a hash algorithm to the attributes to generate a hash value. In some examples, the object attributes can include any of the following attributes: a memory address; a memory register; an object name; an object identifier; object metadata; or any other object attribute.

In one example, the cache engine 620 can insert a created cache directory object into an instance of the cache object directory 630 (Step 820). The cache engine 620, in some examples, can insert the created cache directory object into the cache engine's instance of the cache object directory 630. In other examples, the cache engine 620 can insert the created cache directory object into each cache object directory 630 instance. Inserting the cache directory object can include inserting the cache directory object into the beginning of a chain in a hash bucket. Thus, the cache directory object can be inserted at the head of the chain in the hash bucket. In some examples, the head or the head pointer of the chain is the last write to the hash bucket. The head of the chain, in some examples, can include a pointer that is shared by each of the cache engines 620. By inserting the created cache directory object such that it is the last write and/or head pointer, the cache engine 620 can ensure that subsequent cache engines 620 will not create a duplicate cache directory object.

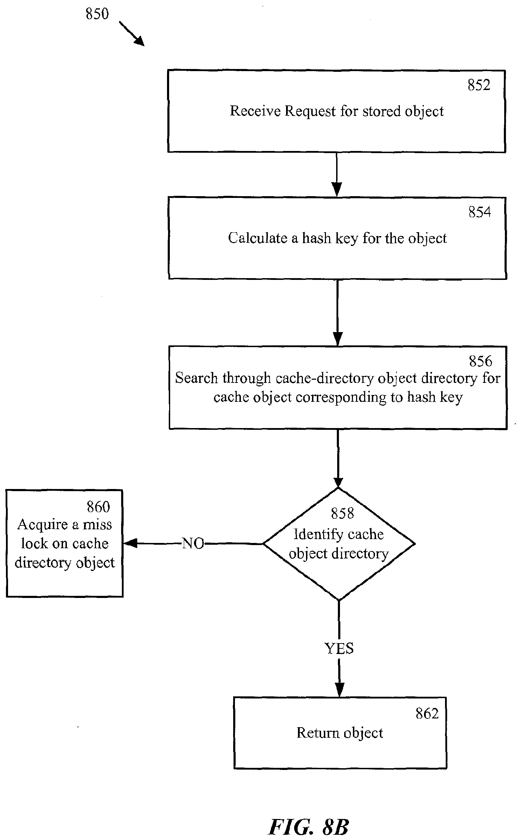

Illustrated in FIG. 8B is one example of a method 850 for searching for a cache directory object. A cache engine 620 can receive a request for an object stored in 64-bit memory 610 (Step 852) and can calculate a hash key for the object (Step 854). The cache engine 620 can then search through the cache object directory 630 for a cache directory object that corresponds to the calculated hash key (Step 856). When the cache engine 620 identifies a corresponding cache directory object (Step 858), the cache engine 620 can return the object or the object's address the requesting entity (Step 862). When the cache engine 620 fails to identify a corresponding cache directory object (Step 858), the cache engine 620 can acquire a miss lock on the cache directory object (Step 860).

Further referring to FIG. 8B, and in more detail, in some examples the method 850 can be carried out by any cache engine 620. In one example, the method 850 can be carried out by any cache engine 620 executing within the context of a packet engine 548.

In some examples, the cache engine 620 can receive a request for an object stored in the 64-bit cache storage 610 (Step 852). This request can be a HTTP request generated by a client communicating with the multi-core system 545. In some examples, a packet engine 548 of the core 505 can forward the cache engine 620 the request. In other examples, a network interface of the cache engine 620 can receive the request. In still other examples, the request can include object identifying information such as: a memory address of the cached object; a name of the cached object; a data type for the cached object; an object identifier for the cached object; or any other object identifier.

The cache engine 620, in some examples, can calculate a hash key for the requested object (Step 854). Calculating a hash key can include applying a hash algorithm to the object identifying information or object attributes. In some examples, the cache engine 620 can extract this information and/or these attributes from the received request.

The cache engine 620 can then search through the cache object directory 630 for a cache directory object that corresponds to the calculated hash key (Step 856). In some examples, the cache engine 620 can search through the cache engine's instance of the cache object directory 630. In other examples, the cache engine 620 can search through each instance of the cache object directory 630. Each cache directory object can be a hash value. Thus, searching for a cache directory object that corresponds to the calculated hash key can include searching for a hash value in the hash table that corresponds to the hash key. In some examples, the cache engine 620 can search each cache object directory 630 in a predetermined order. This order can be dictated by the system 545, or in other examples can be chronological according to an order of the cores 505 of the multi-core system 545. Searching each cache object directory 630 in a predetermined order can ensure that if a duplicate object is in another cache object directory 630, the cache engine 620 will only read one copy of the cache directory object.

In some examples, the cache engine 620 can determine whether a cache directory object was identified (Step 858). This determination can be made when each cache object directory 630 is searched. In other examples, the determination can be made on a continual basis. In still other examples, this determination can be made once the cache directory object is identified. In one example, this determination can be made each time the cache engine 620 queries a cache object directory 630.

When a determination is made that the cache directory object was found, the cache engine 620 can return the requested object (Step 862). In some examples, the cache engine 620 returns a memory location of the cached object. In other examples, the cache engine 620 returns the actual object.

When a determination is made that the cache directory object was not found, the cache engine 620 can acquire a miss lock on the cache directory object (Step 860). A miss lock, in some examples, can be a lock that prevents other cache engines 620 from issuing a miss after failing to identify the cache directory object. When a cache engine 620 fails to identify a cache directory object, the failure can be called a miss. Upon registering a cache miss, the cache engine 620 can return the HTTP request to the client, computing machine, device and/or server that issued the HTTP request. Acquiring a miss lock can prevent other cache engines 620 from receiving the HTTP request, failing to identify the cache directory object and sending the HTTP request back to the computing device that initially issued the HTTP request. Thus, in some examples the miss lock prevents the computing device that issued the HTTP request from receiving multiple requests back. In some examples, the HTTP request that is returned to the originating computing device can include an error message indicating that the cached object was not found.

In some examples, two cache engines 620 can be prevented from initiating simultaneous misses on a single expired or not found object. Two or more cache engines 620 can each fail to identify a cache directory object at substantially the same time. When this occurs, each of the cache engines 620 can generate a storable miss for the object that was not identified in the cache object directory 630. In some examples, the system 545 can prevent multiple storable misses for the same cache directory object and the cached object related to that cache directory object by using a miss lock. The miss lock permits substantially only one cache engine 620 at a time to generate a storable miss in response to failing to identify a cache directory object. A storable miss, in some examples, can be an indication that the cache directory object could not be found, where the indication can be stored in cache. Thus, other cache engines 620 can read and interpret the indication to learn that another cache engine 620 failed to identify the cache directory object. When the other cache engines 620 receive the miss lock on the cache directory object that they too could not identify, those cache engines 620 can restart the matching process and continue to try and identify the cache directory object. In some examples, when the other cache engines 620 begin trying again to identify the cache directory object, they will receive the miss lock and either generate a non-storable miss or serve a hit. A non-storable miss, in some examples, can an indication that the cache directory object could not be found, where the indication cannot be stored in cache. A hit, in some examples, can be a decision by a cache engine 620 to wait for data from the miss lock, e.g. the initial cache engine's storable miss, to be stored in cache. In some examples, the other cache engines 620 that did not obtain the miss lock can continue to loop through the matching process until the initial cache engine 620 stores or posts the initial storable miss to cache. These examples can occur when the cache engine 620 that obtained the miss lock fails to update the cache with the storable miss before the other cache engines 620 restart the matching process.

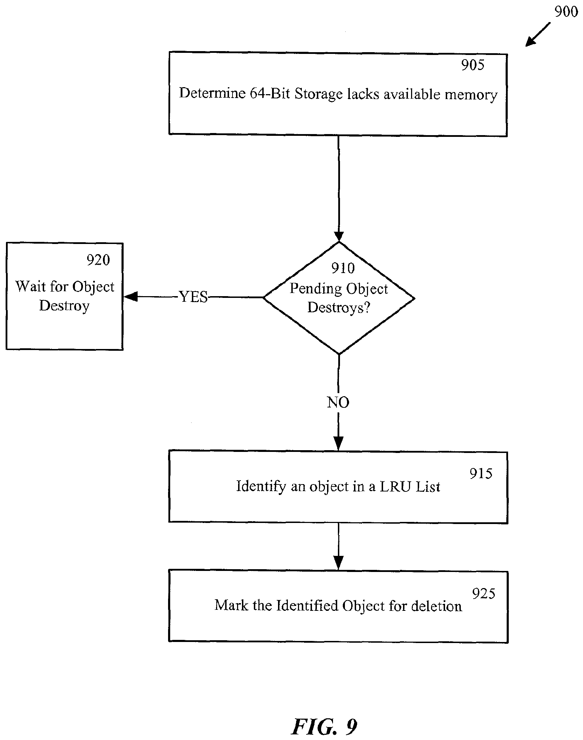

Illustrated in FIG. 9 is one example of a method 900 for deleting least-recently-used memory cells. A cache engine 620 can determine whether the 64-bit memory of each core 505 lacks available memory (Step 905). Upon making this determination, the cache engine 620 can determine whether there are any pending object destroys (Step 910). When there are pending object destroys, the cache engine 620 can wait for these object destroys to be carried out (Step 920). When there are no pending object destroys, the cache engine 620 can identify an object in a LRU list 625 (Step 915) and mark that identified object for deletion (Step 925).

Further referring to FIG. 9, and in more detail, in one example the method can include a cache engine 620 that executes one or more background threads that monitors the amount of available memory in the 64-bit memory storage 610. The background thread of the cache engine 620 can determine when the amount of available memory falls below a predetermined threshold or when the local memory usage or amount of used memory rises above a predetermined threshold. These determinations, in some examples, can signify whether the 64-bit storage 610 of that core 505 lacks available memory (Step 905). In other examples, the method 900 can be triggered by configuration events like flushing of a content group.

In some examples, the cache engine 620 may determine whether there are pending object destroys (Step 910). This determination can be made, in some examples, subsequent to identifying that the local 64-bit memory storage 610 lacks available memory. A pending local object destroy, in some examples, can be any deletion process that has begun within the 64-bit memory 610.

When the cache engine 620 determines that the local 64-bit storage 610 lacks available memory, the cache engine 620 may desire to delete data from one or more memory cells. In some examples, the cache engine 620 may only do this when the cache engine 620 determines that data is not already being deleted from one or more memory cells. When there is a pending local object destroy, e.g. data is already being deleted from one or more memory cells of the 64-bit storage 610, the cache engine 620 may wait until the object destroy is complete (Step 920). In some examples, the method 900 can further include a cache engine 620 that re-checks the amount of available 64-bit memory 610 after the local object destroy finishes. When the cache engine 620 determines that the local 64-bit memory 610 continues to lack available memory, the cache engine 620 can begin the process again.

In some examples, when the cache engine 620 determines that there are no local object destroys in progress, the cache engine 620 can identify one or more objects in a LRU list 625 of the core 505 (Step 915). This identification can be made by walking through each of the cached objects in the LRU list 625 and identifying a least used objet. In other examples, the cache engine 620 can identify cache objects in any of the LRU lists 625 of any of the cores 505.

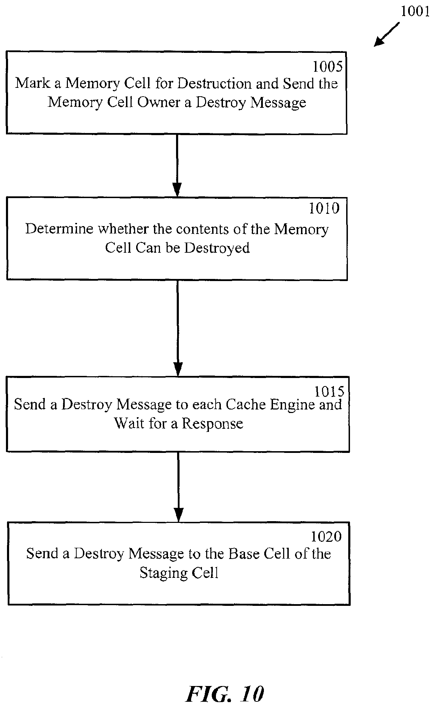

Illustrated in FIG. 10 is one example of a method 1001 for deleting memory cells. In one example, a cache engine 620 can mark a memory cell for destruction and can send a message to the owner of the memory cell commanding the owner of the memory cell to destroy the contents of a memory cell (Step 1005). In one example, the cache engine 620 and/or the owner of the memory cell can determine whether the contents of the memory cell can be destroyed or deleted (Step 1010). When a determination is made that the contents of the memory cell can be destroyed, the cache engine 620 can send a destroy message to each cache engine 620 and wait for answers or responses from each cache engine 620 (Step 1015). The cache engine 620 can then send a destroy message to a base cell of the staging cell corresponding to the marked cell to-be-deleted (Step 1020).

Further referring to FIG. 10, and in more detail, when an object or data is deleted from a memory cell and the memory reused, a number of events may occur. In one example, the object can be removed from all lists, e.g. the cache object directory 630, and the LRU list 625. In other examples, each cache engine 620 may have to agree whether to delete the object. In some examples, the memory occupied by the object can be reclaimed once the object is deleted from all lists, and once each cache engine 620 agrees to delete the object. Deleting an object, in some examples, can include removing the object from the hash chain such that the object can no longer be found as a target of a hit. In some examples, the owner of an object or memory cell can be the cache engine 620 that inserted the object or memory cell into the cache engine's cache object directory 630, e.g. local hash table. Cache engines 620, in some examples, can insert an object into a local hash table when that cache engine 620 is the first cache engine to assert a storable miss for the object. In some examples, staging cells 715 in a staging cell chain can have different cache engine 620 owners.

In one example, a cache engine 620 can mark a memory cell for destruction and send the owner of the memory cell a destroy message (Step 1005). Marking a memory cell for destruction can include marking a memory cell such that the contents of the memory cell are destroyed. In other examples, marking a memory cell for destruction can include setting a NS_CE_DESTROY "flag" or another flag or indicator that signifies that the contents of the memory cell are to be destroyed. When a cache engine 620 sets the NS_CE_DESTROY "flag," the cache engine 620 may first determine whether the flag has already been set. In some examples, determining that this flag has already been set can include determining that another cache engine 620 has already started the process of destroying the contents of the memory cell. When a cache engine 620 is the first cache engine 620 to mark the destruction flag, that cache engine 620 can send the owner of the memory cell a command to destroy or otherwise delete the objects, data and contents of the memory cell. In some examples, sending this message can include sending a DEREF message.

The owner of the marked cell can be the cache engine 620 that created the cell. Thus, in some examples the cell owner can be the cache engine 620 that inserted the object in the cache engine's cache object directory 630. In some examples, a cell can be marked for destruction after the cell has been inserted into a cache object directory 630. Cache engines 620 can not discover a cell and mark it for destruction until it is available in at least one instance of the cache object directory 630. In some examples, an owner of a cell can destroy a cell before inserting it into the owner's cache object directory 630. The owner can destroy the cell, in this example, by deleting the object or contents of the cell and by not inserting the cell in to the owner's cache object directory 630.

In one example, the cache engine 620 can determine whether the contents of the memory cell marked for deletion can be destroyed (Step 1010). In some examples, the contents may not be able to be destroyed when one or more programs are accessing the contents. In other examples, the cell may not be able to be destroyed if each cache engine 620 has not agreed to destroy the cell.

Upon determining that the cell can be destroyed, the owner cache engine 620 can send a destroy message to each cache engine 620 and wait for responses from the cache engines 620 (Step 1015). In some examples, the owner cache engine 620 can remove the cell from the owner's local hash table, e.g. the cache object directory 630, before broadcasting the destroy message. In other examples, the destroy message can be an ACCEPT_DESTROY. This destroy message, in some examples, can command each cache engine 620 to remove the object from all lists and destroy the contents of one or more memory cells storing the object and/or information about the object.

When a cache engine 620 receives the destroy message issued by the owner cache engine 620, the cache engine 620 can send the owner cache engine 620 a DESTROY_ACCEPTED message. In some examples, the cache engine 620 may first determine whether the object can be deleted. When the cache engine 620 determines that the cache object cannot be deleted, the cache engine may not send the destroy accepted message. In one example, the cache engine 620 can also maintain in metadata 640 some local counters on how many local misses, how many local hits have been initiated on the cell marked for destruction. In some examples, whether the cell can be destroyed may depend on these counters.

When the cell marked for destruction is in use, the cache engine 620 can set a flag indicating that the cell should be destroyed once the cell is no longer in use. This flag, in some examples, can be a NS_CE_LOCAL_DESTROY flag. In some examples, when the local miss and hit counters are decremented, the cache engine 620 can check whether it is okay to destroy the cell. When the cache engine 620 determines that the cell can be destroyed, the cache engine 620 can send the owner cache engine the DESTROY ACCEPTED message.

The owner cache engine 620 can send a destroy message to a base cell of the staging cell corresponding to the cell marked for deletion (Step 1020) commanding the destruction of the cell. In some examples, the owner cache engine 620 can send this message after receiving the destroy accepted message from each cache engine 620. In other examples, the base cell of the staging chain can delete the object and any data and/or content in the memory cell upon receiving the destroy command from the cache engine owner. Upon destroying the contents of the cell, the owner cache engine 620 can reclaim the memory, e.g. metadata memory and/or response data memory. In some examples, the cache engine 620 can keep this memory in its free buffer list.

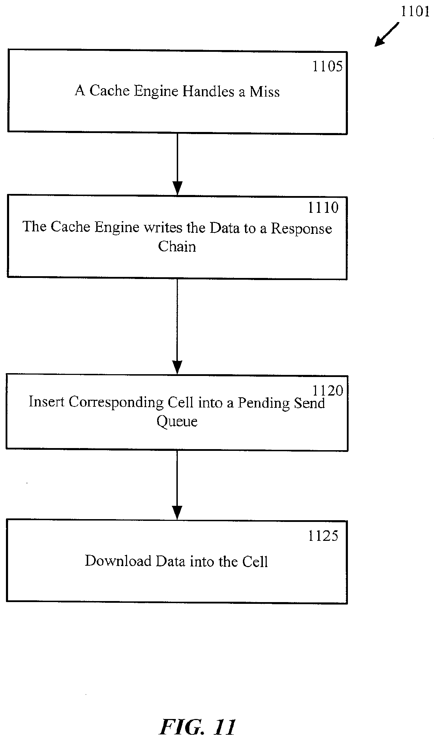

Illustrated in FIG. 11 is one example of a method 1100 for downloading data. In some examples a cache engine handles a miss (Step 1105).

Further referring to FIG. 11, and in more detail, in one example the method 1100 can include a process for supporting simultaneous hits on an object stored in the cache object directory 630, on multiple protocol control blocks (PCB.) A PCB, in some examples, can be a data structure that handles, manages and stores connection information. In some examples, each core 505 can manage its own PCB. In one example, each cache engine 620 can maintain a local reader count or list of cells that have data to send to hit clients. In some examples, the method 1100 can include a CACBUF state which is a state where a cache engine 620 knows it is to cache a downloaded object. In other examples, the include a PUREBUF state which is a state where a cache engine 620 is not going to cache a downloaded object. In a PUREBUF state or mode, no new hits on an object are initiated. In PUREBUF mode, a server window can be opened so that more data can be downloaded when data is deleted from cache or otherwise. Cache engines 620, in some examples, start in a CACUF mode or state until something goes wrong with the object download. When, in some examples, something goes wrote, the cache engine 620 can move to a PUREBUF mode. For example, a determination can be made that the amount of data downloaded exceeds a maximum amount upon which a cache engine 620 can change from CACBUF mode to PUREBUF mode.

In some examples, the method 1100 can be a method 1100 that executes in a single-writer, multiple-reader mode. The cache engine 620 that serves a miss on an object can be a writer, while the other cache engines 620 can be readers.

In one example, a cache engine 620 handles a miss (Step 1105) and writes the data received to one end of a response chain (Step 1110). Inserting the data into the response chain can include inserting the cell into the cache engine's pending send queue for processing (Step 1120). In one example, the cache engine 620 can retrieve cells coming in on its pending send queue. A protocol control block of the system 545 can output into the cell as much data as possible (Step 1125). In some examples, this amount of data can be as much data as the client's window permits.

In some examples, the method 1100 can further include maintaining a pointer to indicate how many cache engines 620 are reading from the created cell. In some examples, a cache engine 620 maintains a number of reader counts for a byte range of memory. Based on the number of reader counts, the cache engine 620 can determine how many other cache engines 620 have read from the memory cell. This reader count, in some examples, can be stored in a cell's metadata in a buffer. The buffer, in some examples, can be a 32 slot ring buffer. Thus, each cache engine 620 can maintain a cout in each slot of the buffer that represents the number of (local) readers that have their first pointer pointing to the slot's byte range. In some examples, the buffer can include an overflow slot where a reader may be parked while the reader waits for the first slot of the buffer to be freed.

When a cache engine 620 enters PUREBUF mode, the cache engine 620 may insert into a local purebuf list a cell. The cell, in some examples, is a cell that moved into PUREBUF mode and therefore will not be cached. A background thread executing on a cache engine 620 can scan cells on a purebuf list to determine whether the minimum number of bytes were read by each cache engine 620, whether bytes have been removed, and to remove the bytes from the cell.

## Claims

1. A method for storing an object in a 64-bit cache storage (610A-610N) of a multi-core device (545) configured to use a 64-bit cache storage (610A-610N) and a 32-bit storage (615), the 64-bit cache storage (610A-610N) corresponding to a 32-bit cache object directory (630) of the multi-core device (545), and retrieving the stored object from the 64-bit cache storage (610A-610N),
the multi-core device (545) comprising a plurality of cores (505A-505N), each core (505A-505N) executing a cache engine (620A-620N) and being allocated an instance (630A-630C) of the 32-bit cache object directory (630) stored in the 32-bit storage (615) and a view of the 64-bit cache storage (610A-610N), wherein:
the 64-bit cache storage (610A-610N) is shared by and accessible to the plurality of cores (505A-505N) and the 32-bit storage (615) is shared by and accessible to the plurality of cores (505A-505N);
each core (505A-505N) with its cache engine (620A-620N) can access its own specific instance (630A-630N) of the 32-bit cache object directory (630) and can modify its own instance (630A-630N) of the cache object directory (630), but cannot modify other instances (630A-630N) of the cache object directory (630), and each core (505A-505N) has access to the full 64-bit memory (610A-610N) so that each core (505A-505N) with its cache engine (620A-620N) can view the entire 64-bit memory space or portion (610A-610N) of the 64-bit memory being allocated to each core (505A-505N); and
the 32-bit cache object directory (630) stores cache directory objects, each cache directory object being a hash value that represents a stored object in the 64-bit cache storage (610A-610N), each hash value being generated by applying a hash algorithm to a 64-bit memory address of the corresponding stored object;
the method comprising:
storing, by a first core (505A) of the multi-core device (545), a first object having a first 64-bit memory address in a first portion (610A) of the 64-bit cache storage allocated to the first core (505A);
creating, by a first cache engine (620A) executing on the first core (505A), in response to storing the first object, a first cache directory object corresponding to the first object, the first cache directory object being a first hash value generated by applying the hash algorithm to the first 64-bit memory address of the first object;
storing, by the first cache engine (620A), the first cache directory object in the instance (630A) of the 32-bit cache object directory (630) allocated to the first core (505A);
receiving, by a second cache engine (620B) executing on a second core (505B) of the multi-core device (545), a request for the first object;
calculating, by the second cache engine (620B), a hash key from the first 64-bit memory address of the first object by applying the hash algorithm to the first 64-bit memory address of the first object;
searching, by the second cache engine (620B), in each instance (630A-630N) of the cache object directory (630), for a cache directory object that corresponds to the hash key calculated from the 64-bit memory address of the first object; and
identifying, by the second cache engine (620B) using the calculated hash key, the first cache directory object corresponding to the object, within the instance (630A) of the 32-bit cache object directory (630) allocated to the first core (505A).

2. The method of claim 1, wherein receiving a request further comprises receiving a request from a client (102) communicating with the multi-core device (545).

3. The method of claim 1, wherein storing the first cache directory object in the instance (630A) of the 32-bit cache object directory (630) allocated to the first core (505A) further comprises storing metadata corresponding to the first cache directory object.

4. The method of claim 1, wherein storing the object in the 64-bit cache storage (610) further comprises storing the object in a content group in the 64-bit cache storage (610).

5. The method of claim 1, further comprising:
failing, by the second cache engine (620B), to identify the cache directory object in the 32-bit cache object directory (630); and
acquiring, by the second cache engine (620B), a miss lock on the cache directory object that prevents other cache engines (620) from issuing a miss after failing to identify the cache directory object.

6. A multi-core device (545) for storing an object in a 64-bit cache storage (610A-610N) of the multi-core device (545) configured to use a 64-bit cache storage (610A-610N) and a 32-bit storage (615), the 64-bit cache storage (610A-610N) corresponding to a 32-bit cache object directory (630) of the multi-core device (545), and retrieving the stored object from the 64-bit cache storage (610A-N), the the multi-core device (545) comprising:
a plurality of cores (505A-505N), each core (505A-505N) executing a cache engine (620A-620N) and being allocated an instance (630A-630C) of the 32-bit cache object directory (630) stored in the 32-bit storage (615) and a view of the 64-bit cache storage (610A-610N), wherein:
the 64-bit cache storage (610A-610N) is shared by and accessible to the plurality of cores (505A-505N) and the 32-bit storage (615) is shared by and accessible to the plurality of cores (505A-505N);
each core (505A-505N) with its cache engine (620A-620N) can access its own specific instance (630A-630N) of the 32-bit cache object directory (630) and can modify its own instance (630A-630N) of the cache object directory (630), but cannot modify other instances (630A-630N) of the cache object directory (630), and each core (505A-505N) has access to the full 64-bit memory (610A-610N) so that each core (505A-505N) with its cache engine (620A-620N) can view the entire 64-bit memory space or a portion (610A-610N) of the 64-bit memory being allocated to each core (505A-505N); and
the 32-bit cache object directory (630) stores cache directory objects, each cache directory object being a hash value that represents a stored object in the 64-bit cache storage (610A-610N), each hash value being generated by applying a hash algorithm to a 64-bit memory address of the corresponding stored object;
the multi-core device (545) configured for:
storing, by a first core (505A) of the multi-core device (545), a first object having a first 64-bit memory address in a first portion (610A) of the 64-bit cache storage allocated to the first core (505A);
creating, by a first cache engine (620A) executing on the first core (505A), in response to storing the first object, a first cache directory object corresponding to the first object, the first cache directory object being a first hash value generated by applying the hash algorithm to the first 64-bit memory address of the first object, and
storing, by the first cache engine (620A), the first cache directory object in the instance (630A) of the 32-bit cache object directory (630) allocated to the first core (505A);
receiving, by a second cache engine (620B) executing on a second core (505B) of the multi-core device (545), a request for the first object,
calculating, by the second cache engine (620B), a hash key from the first 64-bit memory address of the first object by applying the hash algorithm to the first 64-bit memory address of the first object,
searching, by the second cache engine (620B), in each instance (630A-630N) of the cache object directory (630), for a cache directory object that corresponds to the hash key calculated from the 64-bit memory address of the first object; and
identifying, by the second cache engine (620B) using the calculated hash key, the first cache directory object corresponding to the object, within the instance (630A) of the 32-bit cache object directory (630) allocated to the first core (505A).

7. The system of claim 6, wherein the request comprises a request from a client (102) communicating with the multi-core device (545).

8. The system of claim 6, wherein the first cache engine (620A) further stores metadata corresponding to the first cache directory object in the instance (630A) of the 32-bit cache object directory allocated to the first core (505A).

9. The system of claim 6, wherein the 64-bit cache storage (610) stores the object in a content group.

10. The system of claim 6, wherein the second cache engine (620B) fails to identify the cache directory object in the 32-bit cache object directory (630), and acquires a miss lock on the cache directory object that prevents other cache engines (620) from issuing a miss after failing to identify the cache directory object.

## Patentansprüche

1. Ein Verfahren zum Speichern eines Objekts in einer 64-Bit-Cache-Speicherungsvorrichtung (610A-610N) einer Multikernvorrichtung (545), die konfiguriert ist, eine 64-Bit-Cache-Speicherungsvorrichtung (610A-610N) und eine 32-Bit-Speicherungsvorrichtung (615) zu verwenden, wobei die 64-Bit-Cache-Speicherungsvorrichtung (610A-610N) einem 32-Bit-Cache-Objektverzeichnis (630) der Multikernvorrichtung (545) entspricht, und zum Abrufen des gespeicherten Objekts aus der 64-Bit-Cache-Speicherungsvorrichtung (610A-610N),
wobei die Multikernvorrichtung (545) eine Vielzahl von Kernen (505A-505N) beinhaltet, wobei jeder Kern (505A-505N) eine Cache-Maschine (620A-620N) ausführt und ihm eine in der 32-Bit-Speicherungsvorrichtung (615) gespeicherte Instanz (630A-630C) des 32-Bit-Cache-Objektverzeichnisses (630) und eine Sicht der 64-Bit-Cache-Speicherungsvorrichtung (610A-610N) zugeteilt sind, wobei:
sich die Vielzahl von Kernen (505A-505N) die 64-Bit-Cache-Speicherungsvorrichtung (610A-610N) teilen und darauf zugreifen können und sich die Vielzahl von Kernen (505A-505N) die 32-Bit-Speicherungsvorrichtung (615) teilen und darauf zugreifen können;
jeder Kern (505A-505N) mit seiner Cache-Maschine (620A-620N) auf seine eigene spezifische Instanz (630A-630N) des 32-Bit-Cache-Objektverzeichnisses (630) zugreifen kann und seine eigene Instanz (630A-630N) des Cache-Objektverzeichnisses (630) modifizieren kann, aber andere Instanzen (630A-630N) des Cache-Objektverzeichnisses (630) nicht modifizieren kann, und jeder Kern (505A-505N) Zugriff auf den vollen 64-Bit-Speicher (610A-610N) hat, sodass jeder Kern (505A-505N) mit seiner Cache-Maschine (620A-620N) den gesamten 64-Bit-Speicherplatz oder einen Teil (610A-610N) des 64-Bit-Speichers, der jedem Kern (505A-505N) zugeteilt ist, einsehen kann; und
das 32-Bit-Cache-Objektverzeichnis (630) Cache-Verzeichnisobjekte speichert, wobei jedes Cache-Verzeichnisobjekt ein Hash-Wert ist, der ein gespeichertes Objekt in der 64-Bit-Cache-Speicherungsvorrichtung (610A-610N) darstellt, wobei jeder Hash-Wert durch das Anwenden eines Hash-Algorithmus auf eine 64-Bit-Speicheradresse des entsprechenden gespeicherten Objekts generiert wird;
wobei das Verfahren Folgendes beinhaltet:
Speichern, durch einen ersten Kern (505A) der Multikernvorrichtung (545), eines ersten Objekts, das eine erste 64-Bit-Speicheradresse aufweist, in einem ersten Teil (610A) der 64-Bit-Cache-Speicherungsvorrichtung, der dem ersten Kern (505A) zugeteilt ist; Erzeugen, durch eine auf dem ersten Kern (505A) ausgeführte erste Cache-Maschine (620A) als Reaktion auf das Speichern des ersten Objekts, eines dem ersten Objekt entsprechenden ersten Cache-Verzeichnisobjekts, wobei das erste Cache-Verzeichnisobjekt ein erster Hash-Wert ist, der durch das Anwenden des Hash-Algorithmus auf die erste 64-Bit-Speicheradresse des ersten Objekts generiert wird; Speichern, durch die erste Cache-Maschine (620A), des ersten Cache-Verzeichnisobjekts in der Instanz (630A) des 32-Bit-Cache-Objektverzeichnisses (630), die dem ersten Kern (505A) zugeteilt ist;
Empfangen, durch eine auf einem zweiten Kern (505B) der Multikernvorrichtung (545) ausgeführte zweite Cache-Maschine (620B), einer Anforderung des ersten Objekts; Berechnen, durch die zweite Cache-Maschine (620B), eines Hash-Schlüssels aus der ersten 64-Bit-Speicheradresse des ersten Objekts durch das Anwenden des Hash-Algorithmus auf die erste 64-Bit-Speicheradresse des ersten Objekts;
Suchen, durch die zweite Cache-Maschine (620B), in jeder Instanz (630A-630N) des Cache-Objektverzeichnisses (630), nach einem Cache-Verzeichnisobjekt, das dem aus der 64-Bit-Speicheradresse des ersten Objekts berechneten Hash-Schlüssel entspricht; und
Identifizieren, durch die zweite Cache-Maschine (620B) unter Verwendung des berechneten Hash-Schlüssels, des dem Objekt entsprechenden ersten Cache-Verzeichnisobjekts in der Instanz (630A) des 32-Bit-Cache-Objektverzeichnisses (630), die dem ersten Kern (505A) zugeteilt ist.

2. Verfahren gemäß Anspruch 1, wobei das Empfangen einer Anforderung ferner das Empfangen einer Anforderung von einem mit der Multikernvorrichtung (545) kommunizierenden Client (102) beinhaltet.

3. Verfahren gemäß Anspruch 1, wobei das Speichern des ersten Cache-Verzeichnisobjekts in der dem ersten Kern (505A) zugeteilten Instanz (630A) des 32-Bit-Cache-Objektverzeichnisses (630) ferner das Speichern von Metadaten, die dem ersten Cache-Verzeichnisobjekt entsprechen, beinhaltet.

4. Verfahren gemäß Anspruch 1, wobei das Speichern des Objekts in der 64-Bit-Cache-Speicherungsvorrichtung (610) ferner das Speichern des Objekts in einer Inhaltsgruppe in der 64-Bit-Cache-Speicherungsvorrichtung (610) beinhaltet.

5. Verfahren gemäß Anspruch 1, das ferner Folgendes beinhaltet:
Nicht-Identifizieren-Können, durch die zweite Cache-Maschine (620B), des Cache-Verzeichnisobjekts in dem 32-Bit-Cache-Objektverzeichnis (630); und
Akquirieren, durch die zweite Cache-Maschine (620B), einer Fehltreffer-Sperre auf dem Cache-Verzeichnisobjekt, die verhindert, dass andere Cache-Maschinen (620) nach einem Nicht-Identifizieren-Können des Cache-Verzeichnisobjekts einen Fehltreffer ausgeben.

6. Eine Multikernvorrichtung (545) zum Speichern eines Objekts in einer 64-Bit-Cache-Speicherungsvorrichtung (610A-610N) der Multikernvorrichtung (545), die konfiguriert ist, eine 64-Bit-Cache-Speicherungsvorrichtung (610A-610N) und eine 32-Bit-Speicherungsvorrichtung (615) zu verwenden, wobei die 64-Bit-Cache-Speicherungsvorrichtung (610A-610N) einem 32-Bit-Cache-Objektverzeichnis (630) der Multikernvorrichtung (545) entspricht, und zum Abrufen des gespeicherten Objekts aus der 64-Bit-Cache-Speicherungsvorrichtung (610A-N), wobei die Multikernvorrichtung (545) Folgendes beinhaltet:
eine Vielzahl von Kernen (505A-505N), wobei jeder Kern (505A-505N) eine Cache-Maschine (620A-620N) ausführt und ihm eine in der 32-Bit-Speicherungsvorrichtung (615) gespeicherte Instanz (630A-630C) des 32-Bit-Cache-Objektverzeichnisses (630) und eine Sicht der 64-Bit-Cache-Speicherungsvorrichtung (610A-610N) zugeteilt sind, wobei:
sich die Vielzahl von Kernen (505A-505N) die 64-Bit-Cache-Speicherungsvorrichtung (610A-610N) teilen und darauf zugreifen können und sich die Vielzahl von Kernen (505A-505N) die 32-Bit-Speicherungsvorrichtung (615) teilen und darauf zugreifen können;
jeder Kern (505A-505N) mit seiner Cache-Maschine (620A-620N) auf seine eigene spezifische Instanz (630A-630N) des 32-Bit-Cache-Objektverzeichnisses (630) zugreifen kann und seine eigene Instanz (630A-630N) des Cache-Objektverzeichnisses (630) modifizieren kann, aber andere Instanzen (630A-630N) des Cache-Objektverzeichnisses (630) nicht modifizieren kann, und jeder Kern (505A-505N) Zugriff auf den vollen 64-Bit-Speicher (610A-610N) hat, sodass jeder Kern (505A-505N) mit seiner Cache-Maschine (620A-620N) den gesamten 64-Bit-Speicherplatz oder einen Teil (610A-610N) des 64-Bit-Speichers, der jedem Kern (505A-505N) zugeteilt ist, einsehen kann; und
das 32-Bit-Cache-Objektverzeichnis (630) Cache-Verzeichnisobjekte speichert, wobei jedes Cache-Verzeichnisobjekt ein Hash-Wert ist, der ein gespeichertes Objekt in der 64-Bit-Cache-Speicherungsvorrichtung (610A-610N) darstellt, wobei jeder Hash-Wert durch das Anwenden eines Hash-Algorithmus auf eine 64-Bit-Speicheradresse des entsprechenden gespeicherten Objekts generiert wird;
wobei die Multikernvorrichtung (545) für Folgendes konfiguriert ist:
Speichern, durch einen ersten Kern (505A) der Multikernvorrichtung (545), eines ersten Objekts, das eine erste 64-Bit-Speicheradresse aufweist, in einem ersten Teil (610A) der 64-Bit-Cache-Speicherungsvorrichtung, der dem ersten Kern (505A) zugeteilt ist;
Erzeugen, durch eine auf dem ersten Kern (505A) ausgeführte erste Cache-Maschine (620A) als Reaktion auf das Speichern des ersten Objekts, eines dem ersten Objekt entsprechenden ersten Cache-Verzeichnisobjekts, wobei das erste Cache-Verzeichnisobjekt ein erster Hash-Wert ist, der durch das Anwenden des Hash-Algorithmus auf die erste 64-Bit-Speicheradresse des ersten Objekts generiert wird, und
Speichern, durch die erste Cache-Maschine (620A), des ersten Cache-Verzeichnisobjekts in der dem ersten Kern (505A) zugeteilten Instanz (630A) des 32-Bit-Cache-Objektverzeichnisses (630);
Empfangen, durch eine auf einem zweiten Kern (505B) der Multikernvorrichtung (545) ausgeführte zweite Cache-Maschine (620B), einer Anforderung des ersten Objekts,
Berechnen, durch die zweite Cache-Maschine (620B), eines Hash-Schlüssels aus der ersten 64-Bit-Speicheradresse des ersten Objekts durch das Anwenden des Hash-Algorithmus auf die erste 64-Bit-Speicheradresse des ersten Objekts, Suchen, durch die zweite Cache-Maschine (620B), in jeder Instanz (630A-630N) des Cache-Objektverzeichnisses (630), nach einem Cache-Verzeichnisobjekt, das dem aus der 64-Bit-Speicheradresse des ersten Objekts berechneten Hash-Schlüssel entspricht; und
Identifizieren, durch die zweite Cache-Maschine (620B) unter Verwendung des berechneten Hash-Schlüssels, des dem Objekt entsprechenden ersten Cache-Verzeichnisobjekts in der Instanz (630A) des 32-Bit-Cache-Objektverzeichnisses (630), die dem ersten Kern (505A) zugeteilt ist.

7. System gemäß Anspruch 6, wobei die Anforderung eine Anforderung von einem Client (102) beinhaltet, der mit der Multikernvorrichtung (545) kommuniziert.

8. System gemäß Anspruch 6, wobei die erste Cache-Maschine (620A) ferner Metadaten, die dem ersten Cache-Verzeichnisobjekt entsprechen, in der dem ersten Kern (505A) zugeteilten Instanz (630A) des 32-Bit-Cache-Objektverzeichnisses (630) speichert.

9. System gemäß Anspruch 6, wobei die 64-Bit-Cache-Speicherungsvorrichtung (610) das Objekt in einer Inhaltsgruppe speichert.

10. System gemäß Anspruch 6, wobei die zweite Cache-Maschine (620B) das Cache-Verzeichnisobjekt nicht in dem 32-Bit-Cache-Objektverzeichnis (630) identifizieren kann und eine Fehltreffer-Sperre auf dem Cache-Verzeichnisobjekt akquiriert, die verhindert, dass andere Cache-Maschinen (620) nach einem Nicht-Identifizieren-Können des Cache-Verzeichnisobjekts einen Fehltreffer ausgeben.

## Revendications

1. Un procédé pour le stockage d'un objet dans une zone de stockage cache 64 bits (610A-610N) d'un dispositif multicœur (545) configuré pour utiliser une zone de stockage cache 64 bits (610A-610N) et une zone de stockage 32 bits (615), la zone de stockage cache 64 bits (610A-610N) correspondant à un répertoire d'objets de cache 32 bits (630) du dispositif multicœur (545), et la récupération de l'objet stocké dans la zone de stockage cache 64 bits (610A-610N),
le dispositif multicœur (545) comprenant une pluralité de cœurs (505A-505N), chaque cœur (505A-505N) exécutant un moteur de cache (620A-620N) et se voyant attribuer une instance (630A-630C) du répertoire d'objets de cache 32 bits (630) stocké dans la zone de stockage 32 bits (615) et une vue de la zone de stockage cache 64 bits (610A-610N), dans lequel :
la zone de stockage cache 64 bits (610A-610N) est partagée par la pluralité de cœurs (505A-505N) et accessible à ceux-ci et la zone de stockage 32 bits (615) est partagée par la pluralité de cœurs (505A-505N) et accessible à ceux-ci ;
chaque cœur (505A-505N) avec son moteur de cache (620A-620N) peut accéder à sa propre instance spécifique (630A-630N) du répertoire d'objets de cache 32 bits (630) et peut modifier sa propre instance (630A-630N) du répertoire d'objets de cache (630), mais ne peut pas modifier d'autres instances (630A-630N) du répertoire d'objets de cache (630), et chaque cœur (505A-505N) a accès à toute la mémoire 64 bits (610A-610N) de sorte que chaque cœur (505A-505N) avec son moteur de cache (620A-620N) peut visualiser l'espace mémoire 64 bits entier ou une partie (610A-610N) de la mémoire 64 bits qui est attribuée à chaque cœur (505A-505N) ; et
le répertoire d'objets de cache 32 bits (630) stocke des objets de répertoire de cache, chaque objet de répertoire de cache étant une valeur de hachage qui représente un objet stocké dans la zone de stockage cache 64 bits (610A-610N), chaque valeur de hachage étant générée par application d'un algorithme de hachage à une adresse mémoire 64 bits de l'objet stocké correspondant ;
le procédé comprenant :
le stockage, par un premier cœur (505A) du dispositif multicœur (545), d'un premier objet ayant une première adresse mémoire 64 bits dans une première partie (610A) de la zone de stockage cache 64 bits attribuée au premier cœur (505A) ;
la création, par un premier moteur de cache (620A) s'exécutant sur le premier cœur (505A), en réponse au stockage du premier objet, d'un premier objet de répertoire de cache correspondant au premier objet, le premier objet de répertoire de cache étant une première valeur de hachage générée par application de l'algorithme de hachage à la première adresse mémoire 64 bits du premier objet ;
le stockage, par le premier moteur de cache (620A), du premier objet de répertoire de cache dans l'instance (630A) du répertoire d'objets de cache 32 bits (630) attribuée au premier cœur (505A) ;
la réception, par un deuxième moteur de cache (620B) s'exécutant sur un deuxième cœur (505B) du dispositif multicœur (545), d'une requête pour le premier objet ;
le calcul, par le deuxième moteur de cache (620B), d'une clé de hachage à partir de la première adresse mémoire 64 bits du premier objet par application de l'algorithme de hachage à la première adresse mémoire 64 bits du premier objet ;
la recherche, par le deuxième moteur de cache (620B), dans chaque instance (630A-630N) du répertoire d'objets de cache (630), d'un objet de répertoire de cache qui correspond à la clé de hachage calculée à partir de l'adresse mémoire 64 bits du premier objet ; et
l'identification, par le deuxième moteur de cache (620B) à l'aide de la clé de hachage calculée, du premier objet de répertoire de cache correspondant à l'objet, à l'intérieur de l'instance (630A) du répertoire d'objets de cache 32 bits (630) attribuée au premier cœur (505A).

2. Le procédé de la revendication 1, dans lequel la réception d'une requête comprend en outre la réception d'une requête en provenance d'un client (102) communiquant avec le dispositif multicœur (545).

3. Le procédé de la revendication 1, dans lequel le stockage du premier objet de répertoire de cache dans l'instance (630A) du répertoire d'objets de cache 32 bits (630) attribuée au premier cœur (505A) comprend en outre le stockage de métadonnées correspondant au premier objet de répertoire de cache.

4. Le procédé de la revendication 1, dans lequel le stockage de l'objet dans la zone de stockage cache 64 bits (610) comprend en outre le stockage de l'objet dans un groupe de contenus dans la zone de stockage cache 64 bits (610).

5. Le procédé de la revendication 1, comprenant en outre :
l'échec, par le deuxième moteur de cache (620B), d'identification de l'objet de répertoire de cache dans le répertoire d'objets de cache 32 bits (630) ; et
l'acquisition, par le deuxième moteur de cache (620B), d'un verrou de défaut sur l'objet de répertoire de cache qui empêche d'autres moteurs de cache (620) d'émettre un défaut après l'échec d'identification de l'objet de répertoire de cache.

6. Un dispositif multicœur (545) pour le stockage d'un objet dans une zone de stockage cache 64 bits (610A-610N) du dispositif multicœur (545) configuré pour utiliser une zone de stockage cache 64 bits (610A-610N) et une zone de stockage 32 bits (615), la zone de stockage cache 64 bits (610A-610N) correspondant à un répertoire d'objets de cache 32 bits (630) du dispositif multicœur (545), et la récupération de l'objet stocké dans la zone de stockage cache 64 bits (610A-N), le dispositif multicœur (545) comprenant :
une pluralité de cœurs (505A-505N), chaque cœur (505A-505N) exécutant un moteur de cache (620A-620N) et se voyant attribuer une instance (630A-630C) du répertoire d'objet de cache 32 bits (630) stocké dans la zone de stockage 32 bits (615) et une vue de la zone de stockage cache 64 bits (610A-610N), dans lequel :
la zone de stockage cache 64 bits (610A-610N) est partagée par la pluralité de cœurs (505A-505N) et accessible à ceux-ci et la zone de stockage 32 bits (615) est partagée par la pluralité de cœurs (505A-505N) et accessible à ceux-ci ;
chaque cœur (505A-505N) avec son moteur de cache (620A-620N) peut accéder à sa propre instance spécifique (630A-630N) du répertoire d'objets de cache 32 bits (630) et peut modifier sa propre instance (630A-630N) du répertoire d'objets de cache (630), mais ne peut pas modifier d'autres instances (630A-630N) du répertoire d'objets de cache (630), et chaque cœur (505A-505N) a accès à toute la mémoire 64 bits (610A-610N) de sorte que chaque cœur (505A-505N) avec son moteur de cache (620A-620N) peut visualiser l'espace mémoire 64 bits entier ou une partie (610A-610N) de la mémoire 64 bits qui est attribuée à chaque cœur (505A-505N) ; et
le répertoire d'objets de cache 32 bits (630) stocke des objets de répertoire de cache, chaque objet de répertoire de cache étant une valeur de hachage qui représente un objet stocké dans la zone de stockage cache 64 bits (610A-610N), chaque valeur de hachage étant générée par application d'un algorithme de hachage à une adresse mémoire 64 bits de l'objet stocké correspondant ;
le dispositif multicœur (545) étant configuré pour :
le stockage, par un premier cœur (505A) du dispositif multicœur (545), d'un premier objet ayant une première adresse mémoire 64 bits dans une première partie (610A) de la zone de stockage cache 64 bits attribuée au premier cœur (505A) ;
la création, par un premier moteur de cache (620A) s'exécutant sur le premier cœur (505A), en réponse au stockage du premier objet, d'un premier objet de répertoire de cache correspondant au premier objet, le premier objet de répertoire de cache étant une première valeur de hachage générée par application de l'algorithme de hachage à la première adresse mémoire 64 bits du premier objet, et
le stockage, par le premier moteur de cache (620A), du premier objet de répertoire de cache dans l'instance (630A) du répertoire d'objets de cache 32 bits (630) attribuée au premier cœur (505A) ;
la réception, par un deuxième moteur de cache (620B) s'exécutant sur un deuxième cœur (505B) du dispositif multicœur (545), d'une requête pour le premier objet,
le calcul, par le deuxième moteur de cache (620B), d'une clé de hachage à partir de la première adresse mémoire 64 bits du premier objet par application de l'algorithme de hachage à la première adresse mémoire 64 bits du premier objet, la recherche, par le deuxième moteur de cache (620B), dans chaque instance (630A-630N) du répertoire d'objets de cache (630), d'un objet de répertoire de cache qui correspond à la clé de hachage calculée à partir de l'adresse mémoire 64 bits du premier objet ; et
l'identification, par le deuxième moteur de cache (620B) à l'aide de la clé de hachage calculée, du premier objet de répertoire de cache correspondant à l'objet, à l'intérieur de l'instance (630A) du répertoire d'objets de cache 32 bits (630) attribuée au premier cœur (505A).

7. Le système de la revendication 6, dans lequel la requête comprend une requête provenant d'un client (102) communiquant avec le dispositif multicœur (545).

8. Le système de la revendication 6, dans lequel le premier moteur de cache (620A) stocke en outre des métadonnées correspondant au premier objet de répertoire de cache dans l'instance (630A) du répertoire d'objets de cache 32 bits attribuée au premier cœur (505A).

9. Le système de la revendication 6, dans lequel la zone de stockage cache 64 bits (610) stocke l'objet dans un groupe de contenus.

10. Le système de la revendication 6, dans lequel le deuxième moteur de cache (620B) échoue à identifier l'objet de répertoire de cache dans le répertoire d'objets de cache 32 bits (630), et acquiert un verrou de défaut sur l'objet de répertoire de cache qui empêche d'autres moteurs de cache (620) d'émettre un défaut après l'échec d'identification de l'objet de répertoire de cache.
